Europäisches Patentamt

European Patent Office

Office européen des brevets

(19)

(11) Numéro de publication: **0 353 162 B1**

(12) **FASCICULE DE BREVET EUROPEEN**

(45) Date de publication de fascicule du brevet: **25.01.95** (51) Int. Cl.6: **B64D 1/14**

(21) Numéro de dépôt: **89402157.5**

(22) Date de dépôt: **28.07.89**

(54) **Système de largage de charges lourdes à partir d'aéronefs.**

(30) Priorité: **29.07.88 FR 8810302**
**29.07.88 FR 8810303**

(43) Date de publication de la demande:
**31.01.90 Bulletin 90/05**

(45) Mention de la délivrance du brevet:
**25.01.95 Bulletin 95/04**

(84) Etats contractants désignés:
**AT BE CH DE ES GB GR IT LI LU NL SE**

(56) Documents cités:
**FR-A- 1 115 776      FR-A- 1 146 834**
**GB-A- 581 726        US-A- 2 592 577**
**US-A- 2 872 138      US-A- 3 154 265**
**US-A- 4 253 628      US-A- 4 382 231**

**MACHINE DESIGN, vol. 56, no. 23, 11 octobre 1984, pages 44-45, Cleveland, Ohio, US: "Retrorockets soften cargo landings"**

**JOURNAL OF SPACECRAFT & ROCKETS, vol. 18, no. 3, mai-juin 1981, pages 222-227, New York, US; R.A. TONI et al.: "Feasibility ofrecorvering a one-million-pound booster (Deceleration system)"**

**MACHINE DESIGN, vol. 53, no. 10, mai 1981,**

**page 8, Cleveland, Ohio, US; "Blastthrough tube actuates, detonates, or ignites"**

(73) Titulaire: **ETIENNE LACROIX - TOUS ARTIFI-CES SA**
**6, Boulevard de Joffrery**
**F-31600 Muret (FR)**

(72) Inventeur: **Baricos, Jean**
**6 Rond Point François Villon**
**F-31520 Ramonville Saint Agne (FR)**
Inventeur: **Castarede, Michel**
**Puycasquier**
**F-32120 Mauvezin (FR)**
Inventeur: **Dilhan, Denis**
**19 Route Nationale 20**
**F-31190 Auterive (FR)**

(74) Mandataire: **Schrimpf, Robert et al**
**Cabinet Regimbeau**
**26, Avenue Kléber**
**F-75116 Paris (FR)**

**Description**

La présente invention concerne le domaine du largage de charges lourdes à partir d'aéronefs.

La présente invention concerne plus précisément un système du type connu en soi comprenant un ensemble propulseur pyrotechnique placé entre une charge larguée à partir d'un aéronef et des parachutes associés, et mis en oeuvre sur la trajectoire de descente de la charge, afin de freiner la charge, pour assurer une mise à terre de celle-ci dans des conditions optimales.

De tels dispositifs sont par exemple décrits dans les documents FR-A-1115776, Machine Design Vol 56 n° 23 Oct.84, GB-A-581726, FR-A-1146834 et US-A-2872138.

Les documents FR-A-1115776 et GB-A-2872138 divulguent un dispositif de largage de matériel ou de personnel, à partir d'un aéronef, dans lequel la masse de la charge est prise en compte pour définir la force de réaction requise générée par l'ensemble propulseur, ce dernier étant mis à feu à une altitude prédéterminée, par exemple grâce à un câble suspendu à la plateforme pour détecter le sol.

Le document MACHINE DESIGN divulgue un système de largage de charges à partir d'un aéronef selon le préambule de la revendication 1, qui comprend une plateforme support de charge, un ensemble propulseur, des suspentes reliant la plateforme à l'ensemble propulseur, des parachutes reliés à l'ensemble propulseur et une sonde télescopique portée par la plateforme pour détecter le sol. Un microprocesseur, placé sur la plateforme, reçoit des signaux provenant de la sonde télescopique. Lorsque la sonde se rétracte, une bande d'acier passe devant un capteur et envoie au microprocesseur des informations adéquates pour permettre de calculer la vitesse de descente de la charge. L'ensemble propulseur est mis à feu à une altitude de 10 à 30 pieds. Lorsque la charge est à quelques pieds du sol, l'ensemble propulseur est commuté d'un mode de régime élevé en un mode de soutien afin de ralentir la descente de la charge. De trois à sept moteurs, répartis autour de l'axe du système, fournissent une poussé symétrique. Des buses en sortie des moteurs dévient les gaz en éloignement de la charge.

Les documents GB-A-581726 et FR-A-1146834 divulguent un dispositif de largage de charge dans lequel l'ensemble propulseur est initié lorsqu'une sonde filaire suspendue à la plateforme touche le sol.

A titre d'exemple la présente invention peut trouver application dans la mise à terre de charges allant de 1 500 Kg à 15 tonnes.

Dans le cadre de la présente invention, la vitesse de chute lors du contact avec le sol doit être de préférence inférieure à 8 m/s, très préférentiellement inférieure à 3 m/s.

La présente invention a pour but d'améliorer la sécurité, la fiabilité et la précision des dispositifs connus du type précité, notamment pour assurer que la mise à feu de l'ensemble propulseur ne présente aucun risque pour l'aéronef et pour optimiser l'effet de freinage de l'ensemble propulseur.

La solution au problème ainsi posé est donnée dans la revendication 1.

Les moyens de commande de l'ensemble propulseur peuvent comprendre des moyens sensibles à la mise en tension d'élingues sous parachute et/ou un accéléromètre sensible à l'ouverture du ou des parachute(s) et/ou une temporisation et/ou un altimètre.

D'autres caractéristiques, buts et avantages de la présente invention apparaîtront à la lecture de la description détaillée qui va suivre, et en regard des dessins annexés, donnés à titre d'exemples non limitatifs et sur lesquels :

- la figure 1 représente une vue schématique générale du système de freinage pour mise à terre de charges lourdes, conforme à la présente invention,
- la figure 2 représente schématiquement 5 étapes successives de la mise en oeuvre du système conforme à la présente invention,
- la figure 3 représente une vue latérale d'un sous-ensemble du système conforme à la présente invention, dénommé "déclencheur à câble",
- la figure 4 représente une vue en coupe longitudinale du déclencheur à câble, selon un plan de coupe référencé IV-IV sur la figure 3,

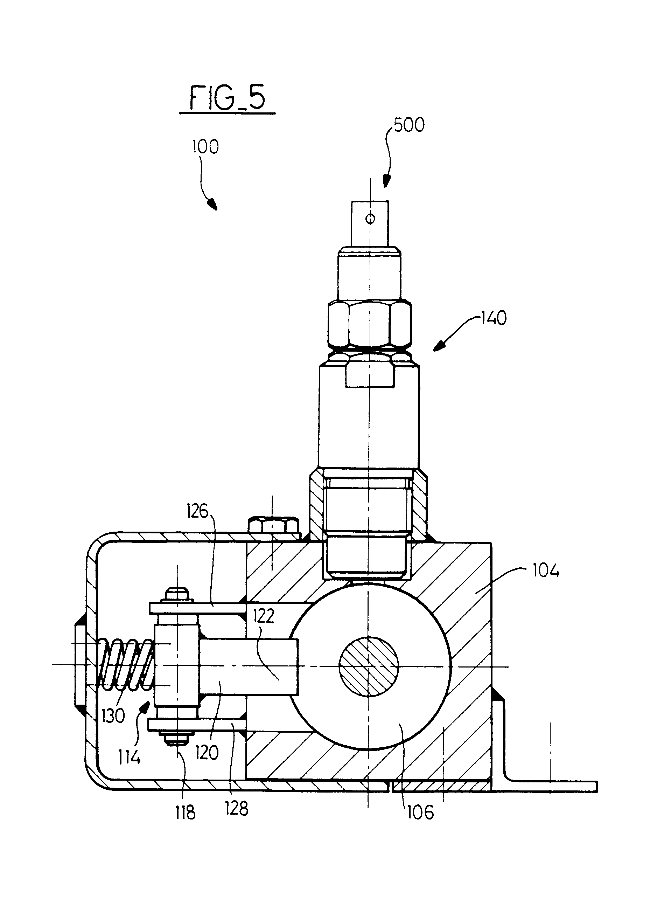

- la figure 5 représente une vue en coupe transversale du déclencheur à câble, selon un plan de coupe référencé V-V sur la figure 4,

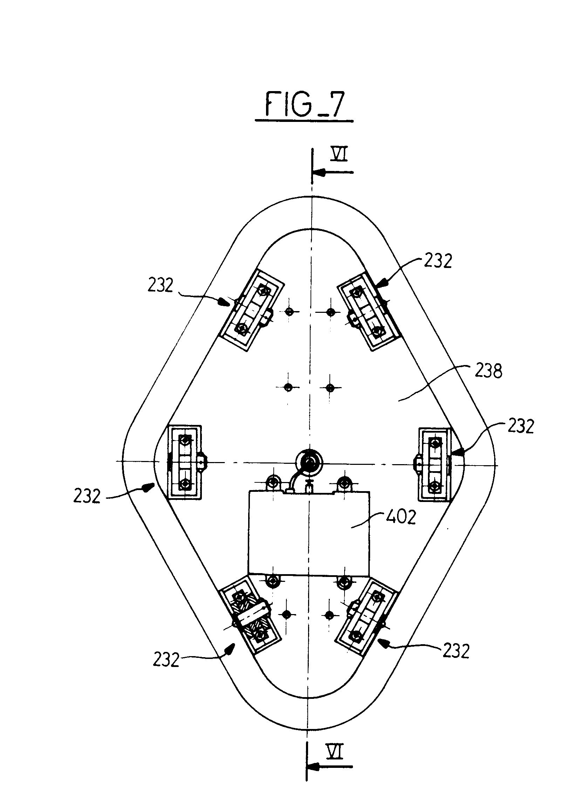

- la figure 6 représente une vue latérale, partiellement en coupe longitudinale, selon un plan de coupe référencé VI-VI sur la figure 7, d'un autre sous-ensemble du système, formant ensemble propulseur,
- la figure 7 représente une vue de dessus de l'ensemble propulseur,
- la figure 8 représente une vue de dessus d'un autre sous-ensemble du système, dénommé : "dispositif de sécurité et d'amorçage",
- la figure 9 représente une vue en coupe longitudinale du dispositif de sécurité et d'amorçage selon le plan de coupe référencé IX-IX sur la figure 8,
- la figure 10 représente une autre vue en coupe longitudinale du dispositif de sécurité et d'amorçage selon des plans de coupe non coplanaires référencés X-X sur la figure 9,

- les figures 11 et 12 représentent deux variantes de réalisation de flasques intégrés au bâti de l'ensemble propulseur,
- la figure 13 représente une vue en coupe longitudinale d'un exemple de réalisation d'une unité de propulsion susceptible d'être intégrée à l'ensemble propulseur, selon un plan de coupe référencé XIII-XIII sur la figure 14,
- la figure 14 représente une vue arrière de cette unité de propulsion,
- la figure 15 représente une vue en coupe transversale de la même unité de propulsion, selon un plan de coupe référencé XV-XV sur la figure 13,
- la figure 16 représente une vue en coupe longitudinale d'un autre mode de réalisation d'une unité de propulsion susceptible d'être intégrée à l'ensemble propulseur, selon un plan de coupe référencé XVI-XVI sur la figure 17,
- la figure 17 représente une vue arrière de cette unité de propulsion,
- la figure 18 représente une vue en coupe transversale de la même unité de propulsion selon un plan de coupe référencé XVIII-XVIII sur la figure 16,
- la figure 19 représente un mode de réalisation d'un circuit électronique accompagnant la charge larguée et destiné à commander l'initiation de l'ensemble propulseur,
- la figure 20 représente une variante de réalisation perfectionnée de ce circuit électronique,
- la figure 21 représente un tableau de valeurs utilisées pour déterminer l'altitude de consigne de mise à feu dans le cadre de la variante perfectionnée précitée,
- la figure 22 représente une courbe obtenue à l'aide des valeurs précitées,
- les figures 23A et 23B représentent un chronogramme schématique du fonctionnement du système conforme à la présente invention, et
- la figure 24 représente une variante de réalisation d'un détecteur d'altitude.
- la figure 25 représente une vue en coupe d'un déclencheur à câble selon le plan de coupe référencé XXV-XXV sur la figure 28,
- la figure 26 représente une autre vue en coupe du même déclencheur à câble selon le plan de coupe référencé XXVI-XXVI sur la figure 25,
- la figure 27 représente une vue de dessous du déclencheur à câble.
- la figure 28 représente une vue de dessus du déclencheur à câble,

- la figure 29 représente schématiquement l'implantation du déclencheur à câble et du boîtier logeant le circuit électronique de commande,
- les figures 30A, 30B, 30C, 30D représentent schématiquement 4 étapes du fonctionnement du déclencheur à câble en régime de largage normal,
- la figure 31 représente le fonctionnement du déclencheur à câble en régime de largage d'urgence,
- la figure 32 représente selon une vue en coupe, la structure d'un dispositif de sécurité et d'amorçage,
- la figure 33 représente le même dispositif de sécurité et d'amorçage selon le plan de coupe référencé XXXIII-XXXIII sur la figure 32,
- la figure 34 représente une vue partielle en coupe du même dispositif selon le plan de coupe XXIV-XXIV de la figure 32,
- la figure 35 représente une vue en coupe transversal du même dispositif, selon le plan de coupe XXXV-XXXV de la figure 32,
- la figure 36 représente une vue partielle en coupe du même dispositif selon le plan coupe XXXVI-XXXVI de la figure 35,
- la figure 37 représente une vue en coupe transversale du même dispositif selon le plan de coupe XXXVII-XXXVII de la figure 33,
- la figure 38 représente une vue de dessus du dispositif de sécurité et d'amorçage,
- la figure 39 représente une vue partielle en coupe du même dispositif selon le plan de coupe XXXIX-XXXIX de la figure 38,
- les figures 40A à 40E illustrent le fonctionnement du dispositif de sécurité et d'amorçage 300,
- les figures 41 et 42 représentent deux modes de réalisation de circuit de commande 400.

Le système conforme à la présente invention a pour fonction essentielle de mettre en oeuvre un ensemble propulseur pyrotechnique 200 placé sur la chaine de suspentes 13, 22 entre une charge 10 larguée à partir d'un aéronef placée sur une plateforme ou palette 12, et des parachutes 20 associés, afin de freiner la charge 10 pour assurer une mise à terre de celle-ci dans des conditions optimales.

Pour l'essentiel, le système conforme à la présente invention comprend : un déclencheur à câble 100, un ensemble de propulseur 200, un dispositif de sécurité et d'amorçage 300, un circuit de commande 400 porté par la charge larguée, et un boîtier de commande 500 placé sur l'aéronef.

On va maintenant décrire la structure et le fonctionnement de chacun des sous-ensembles précités 100, 200, 300, 400 et 500.

## DECLENCHEUR A CABLE 100.

Le déclencheur à câble 100 a pour fonction principale de détecter le largage de la charge 10 hors de l'aéronef pour valider les moyens susceptibles d'initier l'ensemble propulseur 200.

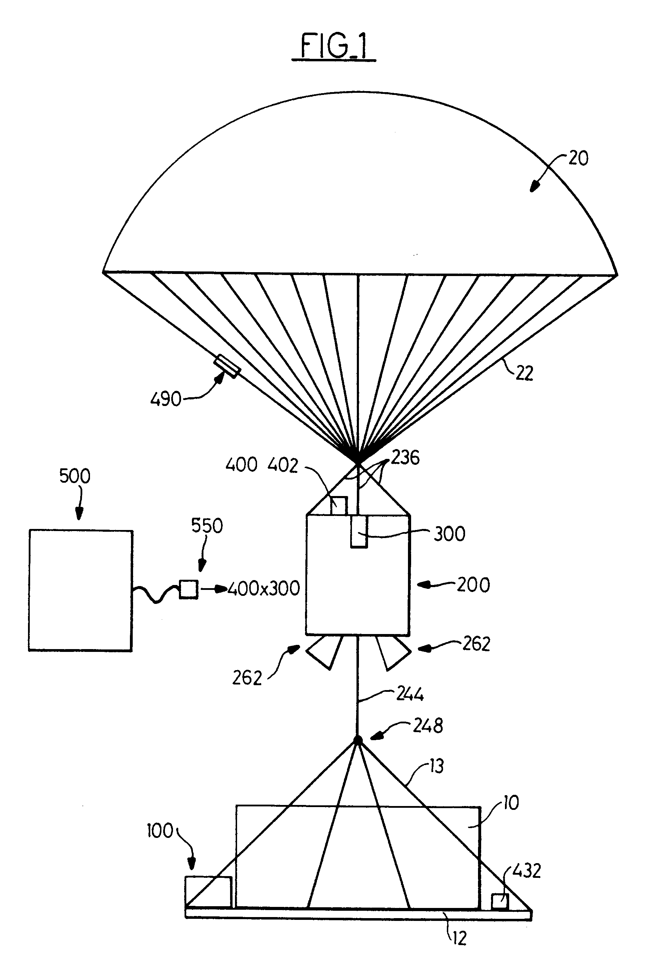

Comme illustré schématiquement sur la figure 1, le déclencheur à câble 100 est de préférence placé sur la palette ou plateforme 12 qui supporte la charge 10.

Pour valider les moyens susceptibles d'initier l'ensemble propulseur 200, lors de la détection du largage hors de l'aéronef, le déclencheur à câble 100 opère par traction sur un câble de commande 102.

Le déclencheur 100 comprend un boîtier 104 qui loge un piston 106. Le piston 106 est guidé à coulissement dans une chambre 105 du boîtier 104, selon son axe 108. L'une des extrémités du câble de commande 102 est fixée sur le piston 106 par une goupille 110.

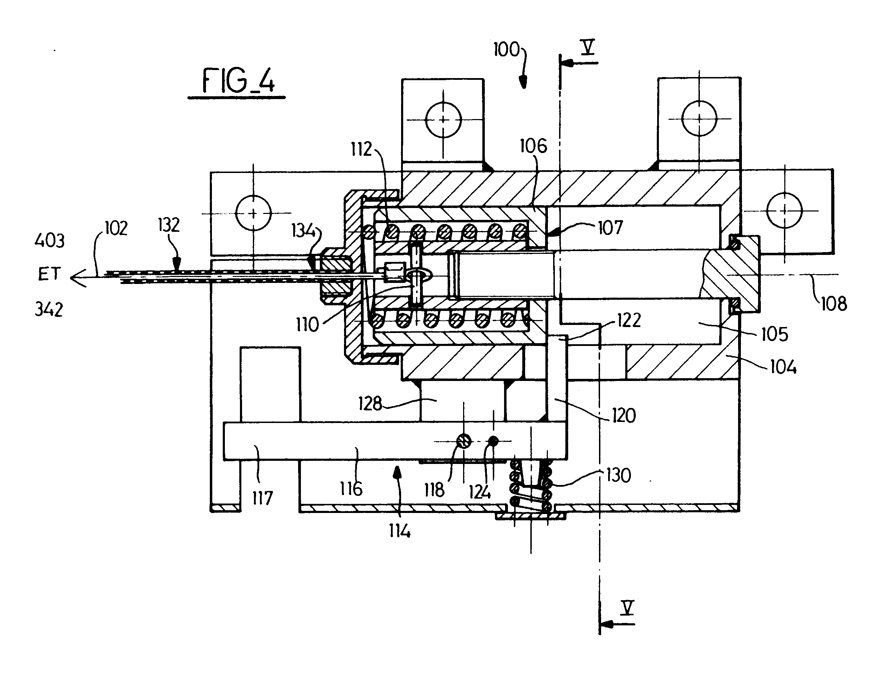

Le piston 106 est sollicité, par un ressort de compression 112, vers une position de travail, dans le sens d'une traction sur le câble 102. Toutefois, au stockage, le piston 106 est maintenu, par une gâchette 114, dans une position de repos, illustrée sur la figure 4. Dans cette position de repos, le ressort 112 est comprimé et le piston n'exerce pas de traction sur le câble 102.

La gâchette 114 comprend un levier 116. Ce levier 116 s'étend sensiblement parallèlement à l'axe 108. Il est guidé à rotation sur le boîtier 104 autour d'un axe 118 transversal à l'axe 108. La gâchette 114 comprend également un doigt 120. Le doigt 120 est solidaire du levier 116. Il s'étend transversalement à l'axe 108, en rapprochement de celui-ci par rapport au levier 116. Avant la détection du largage hors de l'aéronef la gâchette est placée dans une position de verrouillage du piston 106. En position de verrouillage comme illustré sur la figure 4, l'extrémité libre 122 du doigt 120, fait saillie dans la chambre 105 sur le trajet de déplacement à translation du piston 106. L'extrémité libre 122 du doigt 120 sert alors d'appui à la face avant 107 du piston 106.

En d'autres termes, avant la détection du largage, le doigt 120 empêche le déplacement à translation du piston 106 vers la position de travail, sollicitée par le ressort 112.

Au stockage la gâchette 114 est immobilisée dans le position précitée de verrouillage du piston 106 grâce à une goupille 124. La goupille 124 s'étend parallèlement à l'axe 118. Elle est engagée à la fois dans le levier 116 et dans les deux branches 126, 128 de la chape servant d'articulation à la gâchette 114 autour de l'axe 118.

Pour éviter un retrait intempestif de la gâchette 114, après suppression de la goupille de sécurité 124, un ressort de compression 130, qui prend appui sur le boîtier 104, sollicite la gâchette 114 dans la position de verrouillage précitée ; c'est-à-dire la position dans laquelle le doigt 120 sert d'appui à la face avant 107 du piston 106 pour empêcher le déplacement de celui-ci vers la position de travail sollicitée par le ressort 112.

Cependant, après suppression de la goupille de sécurité 124, la gâchette 114 peut être déplacée à pivotement autour de l'axe 118, (à l'encontre de la sollicitation exercée par le ressort 130, de sorte que le doigt 120 après suppression de la goupille de sécurité 124, s'efface devant le piston 106), par une pédale conçue pour détecter le largage de la plateforme 12 à l'extérieur de l'aréonef.

Cette pédale de détection peut être formée de tout type de pédale connu en soi, autorisant la détection de la sortie hors de l'aéronef, par exemple la pédale connue de l'homme de l'art sous la dénomination "disjoncteur BT 13". La pédale de détection étant connue en soi, celle-ci n'a pas été représentée sur les figures annexées pour simplifier l'illustration.

On rappelle cependant que la pédale connue sous la dénomination "disjoncteur BT 13" comprend pour l'essentiel un levier monté à pivotement sur la plateforme 12, comprenant un patin en PVC et associé à un ressort de torsion. Le ressort de torsion sollicite le levier vers une position de détection. Cependant tant que la plateforme 12 est placée dans l'aéronef, sur des rails de guidage associés, le patin porté par le levier repose sur le plancher de l'aéronef et interdit la rotation du levier vers la position de détection. De ce fait, tant que la plateforme 12 est à l'intérieur de l'aéronef, le levier de pédale est éloigné du levier 116.

Par contre, lorsque la plateforme 12 est extraite de l'aéronef, l'effacement du plancher d'aéronef sous le patin de PVC précité autorise le pivotement du levier de pédale sous la sollicitation du ressort de torsion associé. Le levier de pédale peut alors venir frapper le levier 116 sur son extrémité 117 opposée au doigt 120 par rapport à l'axe 118. Ainsi, le levier de pédale sollicite le déplacement du levier 116, à rotation autour de l'axe 118, à l'encontre du ressort 130, de sorte que le doigt 120 s'efface devant le piston 106. Ce dernier est alors déplacé par le ressort 112 et exerce une traction sur le câble 102.

On notera que le câble 102 est placé de façon connue en soi dans une gaine 132, dont une première extrémité 134 prend appui sur le boîtier 104.

La seconde extrémité de la gaine 132 prend appui sur un point fixe proche du boîtier du dispositif de sécurité et d'amorçage 300 ou du circuit de commande 400 ; le cas échéant sur ces boîtiers eux-mêmes.

Le déclencheur à câble 100 comprend en outre un dispositif de sécurité adapté pour interdire le déplacement du piston 106 en position de travail, dans le sens d'une traction sur le câble 102, lorsqu'une procédure de largage d'urgence est requise. Comme on le verra par la suite, le verrouillage du piston 106 par le dispositif de sécurité interdit l'initialisation du système de freinage.

Le dispositif de sécurité précité est formé d'un vérin pyrotechnique 140 porté par le boîtier 104. Le vérin pyrotechnique 140 comprend pour l'essentiel un piston susceptible d'être déplacé par des moyens pyrotechniques. Ceux-ci sont initiés électriquement par une liaison filaire 142. Au repos, le piston intégré au vérin pyrotechnique 140 est rétracté dans le boîtier de celui-ci et ne fait pas saillie dans la chambre 105. Il autorise par conséquent le déplacement du piston 106 après déverrouillage de la gâchette 114 (c'est-à-dire après déplacement de la gâchette 114 dans sa position libérant le piston 106).

Par contre, après mise à feu des moyens pyrotechniques intégrés au vérin pyrotechnique 140, grâce à la liaison filaire 142, le piston intégré au vérin pyrotechnique 140 vient en saillie dans la chambre 105 du boîtier 104, et sert d'appui à la face avant 107 du piston 106. Ainsi, en position activée d'extension, le vérin pyrotechnique 140 sert de butée au piston 106, interdit le déplacement de celui-ci dans sa position de travail et interdit par conséquent toute traction sur le câble 102.

En résumé, lors d'un largage normal, le piston 106 exerce une traction sur le câble 102, grâce à la sollicitation du ressort 112, lorsqu'après retrait de la goupille de la sécurité 124, un système détectant la sortie de l'aéronef entraîne la gâchette 114 à rotation.

Par contre, lorsqu'un largage d'urgence est requis, un signal électrique est appliqué sur le vérin pyrotechnique 140 pour former une butée interdisant le déplacement du piston 106, et par conséquent interdire toute traction sur le câble de commande 102.

Le câble de commande 102, lorsqu'il est déplacé par le piston 106 agit sur le dispositif de sécurité et d'amorçage 300 et sur le circuit de commande 400, comme cela sera exposé par la suite.

## ENSEMBLE PROPULSEUR 200

L'ensemble propulseur 200 est de préférence modulaire et adaptable à une large gamme de masse de charge, c'est-à-dire qu'il comprend de préférence un bâti standard susceptible de recevoir un nombre variable d'unités de propulsion 250, adapté au poids de la charge 10 présente sur la plateforme 12. L'ensemble propulseur 200 peut par exemple recevoir de 1 à 8 unités de propulsion en fonction de la charge 10. (On notera que par ailleurs, de façon classique en soi, le nombre de parachutes 20 utilisés, dépend de préférence de la masse de la charge 10. Le cas échéant, le nombre d'unités de propulsion 250 peut être égal au nombre de parachutes 20). L'effort de poussée doit être équilibré par rapport à l'axe 201.

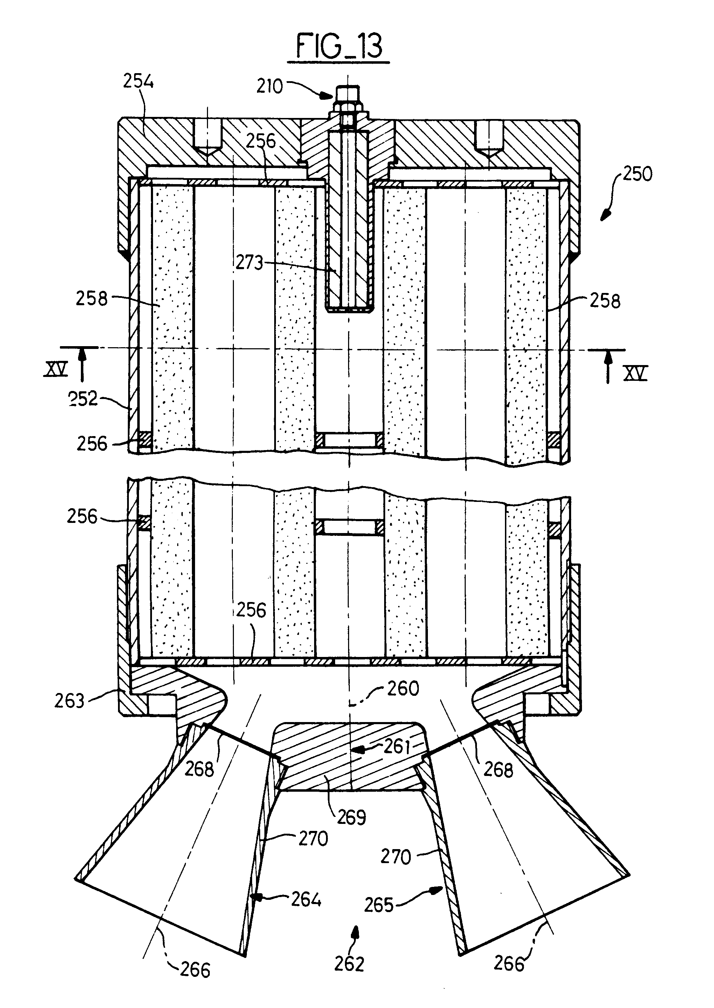

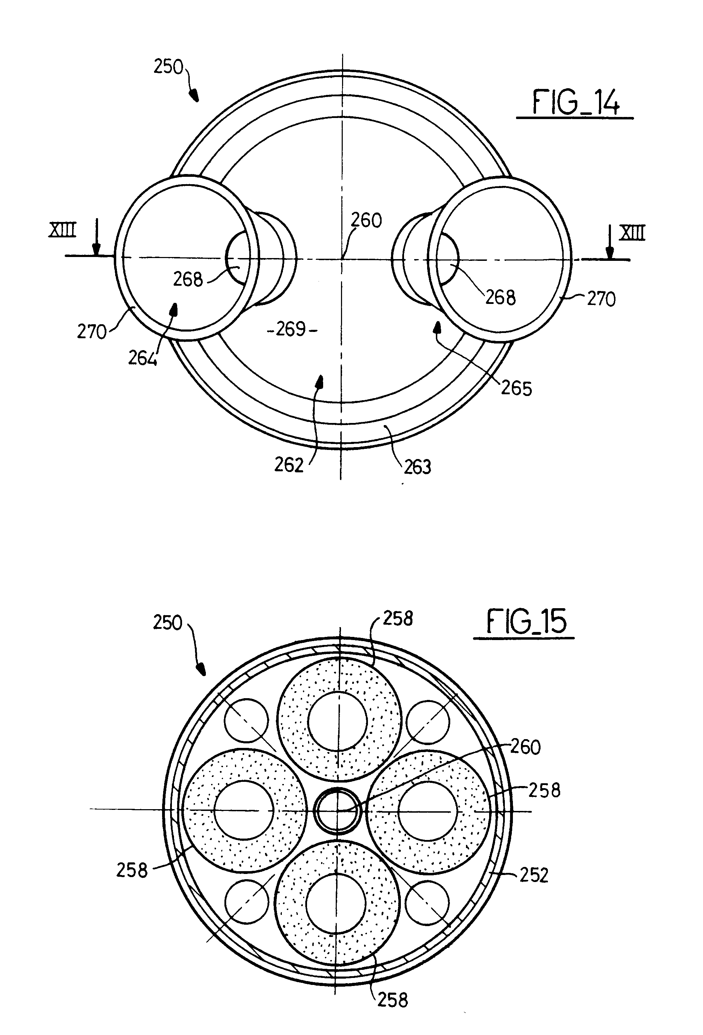

Dans le cas où on utilisera une seule unité de propulsion, celle-ci doit être centrée sur l'axe 201 et sera de préférence bituyère comme illustré sur les figures 13, 14, 15, pour éviter de brûler la charge par le jet de propulsion.

Selon un mode de réalisation particulier, l'ensemble propulseur 200 peut recevoir 3 unités de propulsion 250, dans une version de base, pour une masse de charge 10 allant jusqu'à 5625 KG et recevoir une unité de propulsion 250 supplémentaire par masse de charge de 1875 Kg en sus.

Le cas échéant, l'ensemble propulseur 200 peut ne pas être modulaire, c'est-à-dire ne pas être formé d'un bâti standard apte à recevoir un nombre variable d'unités de propulsion 200 ; mais le dispositif peut au contraire être équipé d'un ensemble propulseur 200 formé d'un bloc unitaire (en non adaptable à une large gamme de masse de charge) intégrant des moyens de liaison aux parachutes et à la charge et des moyens de propulsion, dont la force de poussée est adaptée à la fabrication à la masse d'une charge spécifique à largeur. Il est notamment avantageux d'utiliser un bloc unitaire dans la version bituyère précitée.

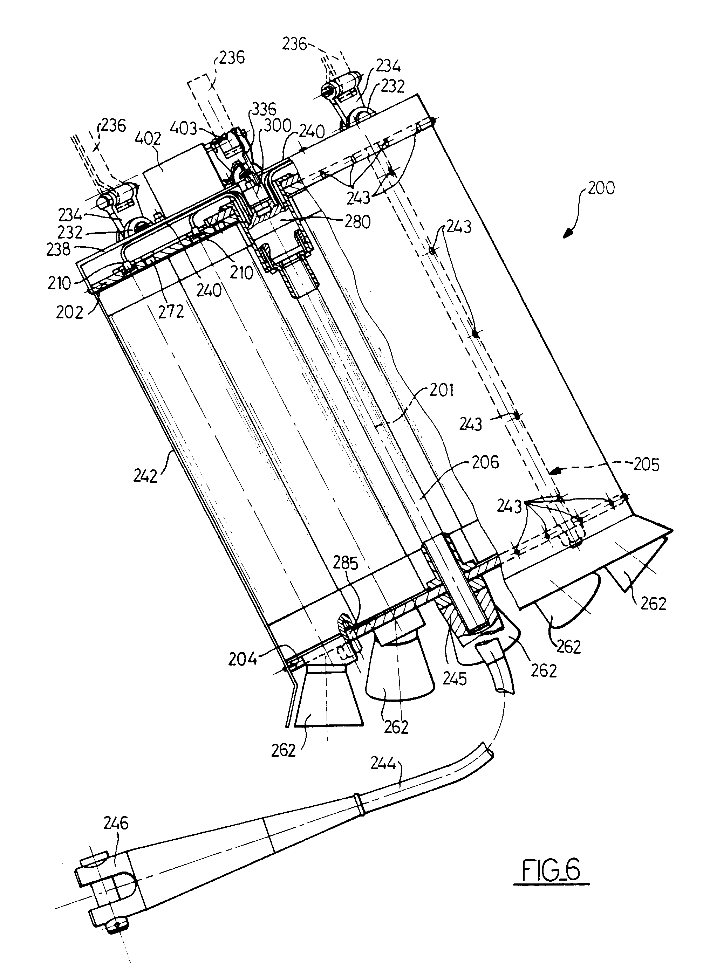

Selon le mode de réalisation modulaire, préférentiel selon l'invention, les unités de propulsion 250 en nombre choisi, sont placées dans un bâti dont l'axe, vertical à l'utilisation, est référencé 201 sur la figure 6 annexée. Le bâti est formé d'un flasque supérieur 202 et d'un flasque inférieur 204, perpendiculaires à l'axe 201, et reliés entre eux par 4 tirants hexagonaux 205 et une poutre centrale 206. Les tirants 205 et la poutre 206 sont parallèles à l'axe 201. Les flasques supérieur et inférieur 202 et 204 ont de préférence la forme générale d'un losange à coins arrondis.

Les flasques 202 et 204 sont conçus pour supporter les unités de propulsion 200 selon une répartition équilibrée autour de l'axe 201, quel que soit le nombre d'unités de propulsion 250 utilisées (2 à 8 par exemple) afin de ne pas déstabiliser l'ensemble propulseur lors de la poussée.

La paroi supérieure des unités de propulsion est fixée sur le flasque supérieur 202 à l'aide de tous moyens classiques appropriés. Le flasque supérieur 202 est muni d'une pluralité d'orifices pour permettre le passage d'initiateurs 210 dont la structure sera décrite plus en détail par la suite.

Les unités de propulsion sont engagées, à leurs extrémités inférieures, dans des alésages complémentaires ménagés dans le flasque inférieur 204.

A cette fin, il est prévu de préférence deux flasques inférieurs 204, l'un 204A pour accepter les configurations de l'ensemble propulseur comprenant 2, 3, 4, 6 ou 8 unités de propulsion et l'autre 204B conçu pour accepter les configurations de l'ensemble propulseur comprenant 5 ou 7 unités de propulsion.

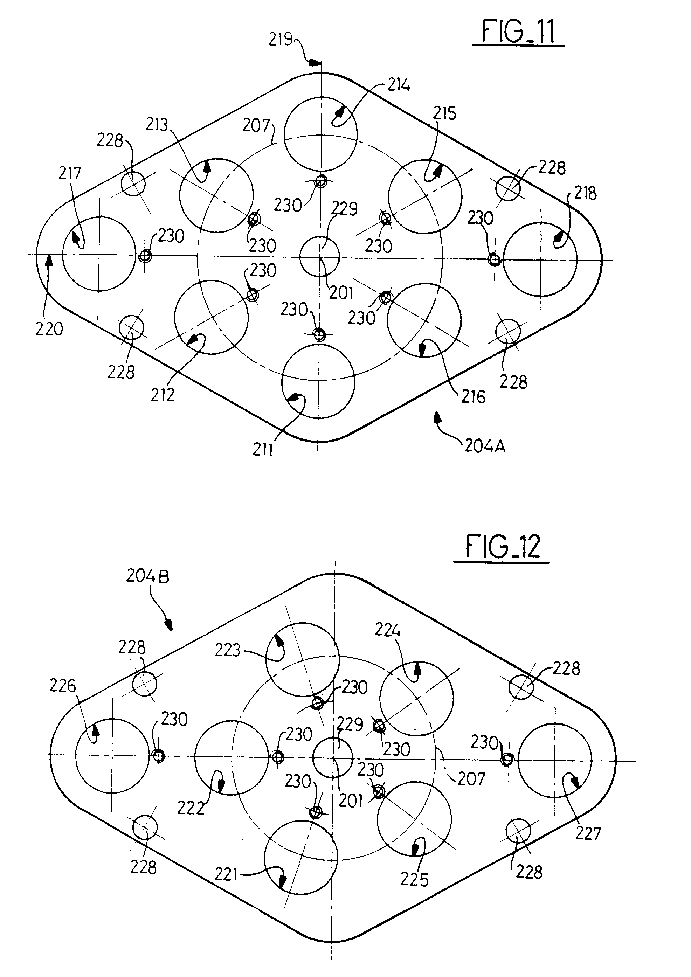

Le premier flasque inférieur 204A est représenté sur la figure 11. Il comprend 6 alésages 211, 212, 213, 214, 215 et 216 équi-répartis autour de l'axe 201 et dont les centres respectifs sont placés sur un cercle commun 207 centré sur l'axe 201, plus deux alésages 217 et 218, diamètralement opposés par rapport à l'axe 201 et placés à l'extérieur du groupe de 6 alésages 211 à 216 précités, selon la grande dimension du flasque 204A.

Lorqu'une configuration de 2 unités de propulsion 250 est retenue, celles-ci sont placées dans deux alésages diamètralement opposés par rapport à l'axe 201 (par exemple 211 et 214 ou 217 et 218).

Lorsqu'une configuration de 3 unités de propulsion 250 est retenue, celles-ci sont placées dans trois alésages centraux équi-répartis autour de l'axe 201, c'est-à-dire soit le groupe d'alésages 212, 214 et 216, soit le groupe d'alésage 211, 213 et 215.

Lorsqu'une configuration de 4 unités de propulsion 250 est retenue, celles-ci placées dans les quatre alésages centraux 212, 213, 215 et 216, symétriques 2 à 2 par rapport aux plans de symétrie 219, 220 du flasque 204A, passant par l'axe 201.

Lorsqu'une configuration de 6 unités de propulsion 250 est retenue, celles-ci sont placées dans les 6 alésages centraux 211 à 216.

Enfin, lorsqu'une configuration de 8 unités de propulsion 250 est retenue, celles-ci sont placées dans les 8 alésages 211 à 218.

Le second flasque inférieur 204B est réprésenté sur la figure 12. Il comprend 5 alésages 221, 222, 223, 224 et 225 équirépartis autour de l'axe 201 et dont les centres respectifs sont placés sur un cercle commun 207 centré sur l'axe 201, plus deux alésages latéraux 226 et 227, diamètralement opposés par rapport à l'axe 201, et placés à l'extérieur du groupe de 5 alésages 221, 225, précités, selon la grande dimension du flasque 204B.

Lorsqu'une configuration de 5 unités de propulsion 250 est retenue, celles-ci sont placées dans les 5 alésages centraux 221 à 225.

Par contre, lorsqu'une configuration de 7 unités de propulsion est retenue, celles-ci sont placées dans les 7 alésages 221 à 227.

L'homme de l'art comprendra aisément que grâce à l'utilisation de deux flasques inférieurs 204A , 204B, comprenant les modules d'alésage précités, on obtient aisément une répartition équilibrée de l'effort de poussée quel que soit le nombre d'unités de propulsions 250 utilisées.

On aperçoit par ailleurs sur les figures 11 et 12 annexées, dans les flasques inférieurs 204A et 204B, quatre passages 228 pour les tirants 205, un passage central 229 pour la poutre 206 et enfin des orifices 230 adjacents à chaque alésage 211 à 218 et 221 à 227 précités, et destinés à recevoir des moyens de fixation et d'indexation (tels que 285) des unités de propulsion.

Six chapes 232 sont fixées sur la face supérieure du flasque supérieur 202. Les chapes 232 reçoivent des ferrures de suspension 234, elles-mêmes reliées à des élingues 236 raccordées aux suspentes 22 du ou des parachute(s) 20.

On notera que de préférence le dispositif de sécurité et d'armement 300 est porté par le flasque supérieur 202 en position centrée sur l'axe 201. Un capot 238 recouvre le flasque supérieur 202 et portège un réseau de cordeaux détonants 240 qui relient fonctionnellement le dispositif de sécurité et d'armement 300 et les initiateurs 210 de chaque unité de propulsion 250.

Lors du montage, après engagement des unités de propulsion 250 sur le flasque supérieur 202, le flasque inférieur 204 est rendu solidaire de l'ensemble, par fixation d'écrous sur les 4 tirants hexagonaux 205 et sur la poutre centrale 206.

Une protection thermique 242 vient ensuite coiffer latéralement l'ensemble propulseur 200. La protection 242 est fixée au moyen de vis 243 qui se reprennent sur la tranche des flasques supérieur 202 et inférieur 204 et sur les quatre tirants 205.

Comme indiqué précédemment, l'ensemble propulseur 200 est relié à sa partie supérieure aux suspentes 22 du ou des parachute(s) par des élingues 236. Le même ensemble propulseur 200 est relié à sa partie inférieure aux suspentes 13 connectées à la plateforme 12 par l'intermédiaire d'un câble 244, par exemple en Kevlar. Ce câble 244 est vissé sur le flasque inférieur 204 par une pièce d'adaptation 245 centrée sur l'axe 201. Il porte à sa seconde extrémité une chape 246 à laquelle se raccordent les suspentes 13 précitées, de préférence par l'intermédiaire d'un dispositif 248 connu en soi dénommé "libérateur de voilures".

On rappelle qu'un tel libérateur de voilures 248 a pour but d'interrompre les moyens de suspension de la charge lorsque ces moyens ne sont plus l'objet d'un effort, c'est-à-dire dans la pratique de séparer les suspentes 13 du câble 244 lorsque la charge 10 est mise à terre.

Il est avantageux de réaliser le câble 244 en Kevlar, du fait que ce matériau présente une bonne résistance aux efforts mécaniques, une masse faible et peut être facilement lové. Le cas échéant, le câble 244 peut être protégé thermiquement par une gaine à base d'amiante ou de fibre de verre.

Les unités de propulsion 250 peuvent être formées de structures de propulsion connues en soi.

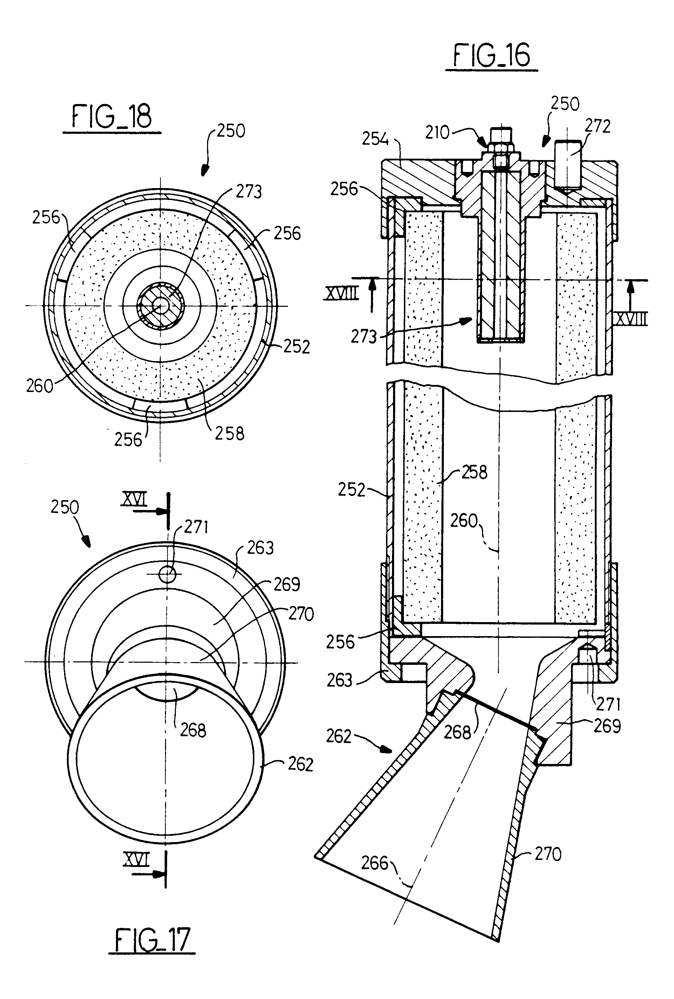

On a illustré, d'une part sur les figures 13, 14 et 15, d'autre part, sur les figures 16, 17 et 18, deux variantes de réalisation d'unités de propulsion 250 conformes à un mode de réalisation préférentiel dans le cadre de la présente invention, à base de poudre propergol, et générant des forces de poussée différentes.

L'homme de l'art comprendra aisément que le choix de l'un ou l'autre type d'unités de propulsion 250 représentés sur les figures 13 à 18, ainsi que le nombre d'unités de propulsion placées dans l'ensemble propulseur 200, dépendent du pas souhaité au niveau de la force de propulsion ; ce pas dépendant bien entendu de la masse de la charge 10 placée sur la plateforme 12.

Les unités de propulsion 250 illustrées sur les figures 13 à 18, comprennent une virole en acier 252. Les viroles 252 sont fermées à une extrémité, de façon étanche, par un fond 254. Les initiateurs 210 précités sont vissés dans le fond 254, comme illustré sur les figures 13 et 16.

Le ou les bloc(s) de propergol 258 sont supportés à l'intérieur de la virole 252 par des entretoises ou grilles de callage 256.

On notera que selon le mode de réalisation illustré sur les figures 13 à 15, chaque unité de propulsion 250 comprend 4 blocs cylindriques de propergol 258 équi-répartis autour de l'axe 260 de la virole 252. Par contre, selon le mode de réalisation illustré sur les figures 16 à 18, il est prévu un bloc de propergol 258 unique centré sur l'axe 260 de la virole 252.

L'unité formant tuyère 262 est fixée et indexée sur la virole 252 par une bague filetée 263. Selon le mode de réalisation illustré sur les figures 13 à 15, l'unité 262 comprend deux tuyères 264, 265 diamètralement opposées et symétriques par rapport à un plan 261 passant par l'axe 260. Le plan 261 est perpendiculaire au plan de la figure 13. Par contre, selon le mode de réalisation illustré sur les figures 16 à 18, il est prévu une seule tuyère.

De façon avantageuse, selon la présente invention, l'axe 266 des tuyères est incliné d'environ 25° par rapport à l'axe 260 de la virole 252. (Les tuyères divergent par rapport à l'axe 260 vers leur sortie). Cette inclinaison permet d'obtenir un rendement de propulsion acceptable tout en évitant tout risque de détérioration de la charge 10 et des suspentes 13 par les gaz de propulsion.

Par ailleurs, de préférence, chaque tuyère est obturée au stockage par un opercule 268. Cet opercule 268 est disposé dans le divergent de la tuyère. Il est taré à 60 % de la pression de fonctionnement du propulseur. Ainsi, les opercules 268 sont éliminés automatiquement lors de la montée en pression consécutive à l'initiation des blocs 258 de propergol. Par contre, les opercules 268 garantissent l'étanchéité globale de chaque unité de propulsion au stockage.

Pour faciliter l'assemblage de opercules 268, chaque tuyère est de préférence réalisée en deux éléments 269, 270, assemblés par filetage de sorte que les opercules 268 puissent être pincés entre les pièces 269 et 270 précitées lors de l'assemblage.

Le cas échéant, une protection thermique constituée d'un tube en carton bakélisé peut être introduite dans la virole en acier 252.

On a référencé 271 sur la figure 16 un alésage borgne excentré par rapport à l'axe 260, ménagé dans la pièce 269 de tuyère et destiné à recevoir les moyens de fixation 285 engagés dans les orifices 230 des flasques inférieurs 204A et 204B pour assurer l'indexation des unités de propulsion autour de l'axe central 201 de l'ensemble propulseur 200.

De même, de préférence, le fond 254 de chaque unité de propulsion, est muni, comme illustré sur les figures 6 et 16, d'un pion 272 excentré par rapport à l'axe 260 de la virole et destiné à pénétrer dans un alésage correspond ménagé dans le flasque supérieur 202 pour participer à l'indexation des unités de propulsion.

L'indexation précitée des unités de propulsion 250 et donc des tuyères 262, par rapport à l'axe longitudinal 201 de l'ensemble propulseur 200, a pour but d'assurer que les tuyères 262 divergent par rapport à l'axe 201, en direction de leur sortie.

On notera enfin que, des allumeurs 273 sont supportés par le fond 254 de chaque unité de propulsion, en regard des initiateurs 210 précités. Les allumeurs 273 ont pour fonction de générer les pression et chaleur nécessaires à la mise en régime d'un ou des blocs de poudre propulsive 258. Les allumeurs 273 peuvent être formés par exemple d'un chargement de poudre et de pastilles à base de composition bore/nitrate de potassium.

A titre d'exemple, on peut utiliser une unité de propulsion 250 illustrée sur les figures 13 à 15 annexées, au pas de l'ordre de 5 625 Kg de charge 10 placée sur la plateforme 12, en utilisant 4 blocs de propergol 258 présentant un diamètre intérieur de 56 mm, un diamètre extérieur de 166 mm, une longueur de 830 mm, soit une masse de l'ordre de 11 Kg, en association avec deux tuyères présentant un diamètre de col de 40,9 mm et un diamètre de sortie de l'ordre de 122 mm.

De façon similaire, on peut utiliser une unité de propulsion 250 du type illustré sur les figures 16 à 18, par pas de 1 875 Kg de charge 10 placée sur la plateforme 12 en utilisant dans chaque unité de propulsion 250 un bloc de propergol 258 répondant aux dimensions suivantes :

- diamètre intérieur 85 mm, diamètre extérieur 145 mm, longueur 826 mm, soit une masse de 14,6 Kg, en association avec une tuyère 262 présentant un diamètre de col de 47,2 mm et un diamètre de sortie de 141,6 mm.

## DISPOSITIF DE SECURITE ET D'AMORCAGE 300

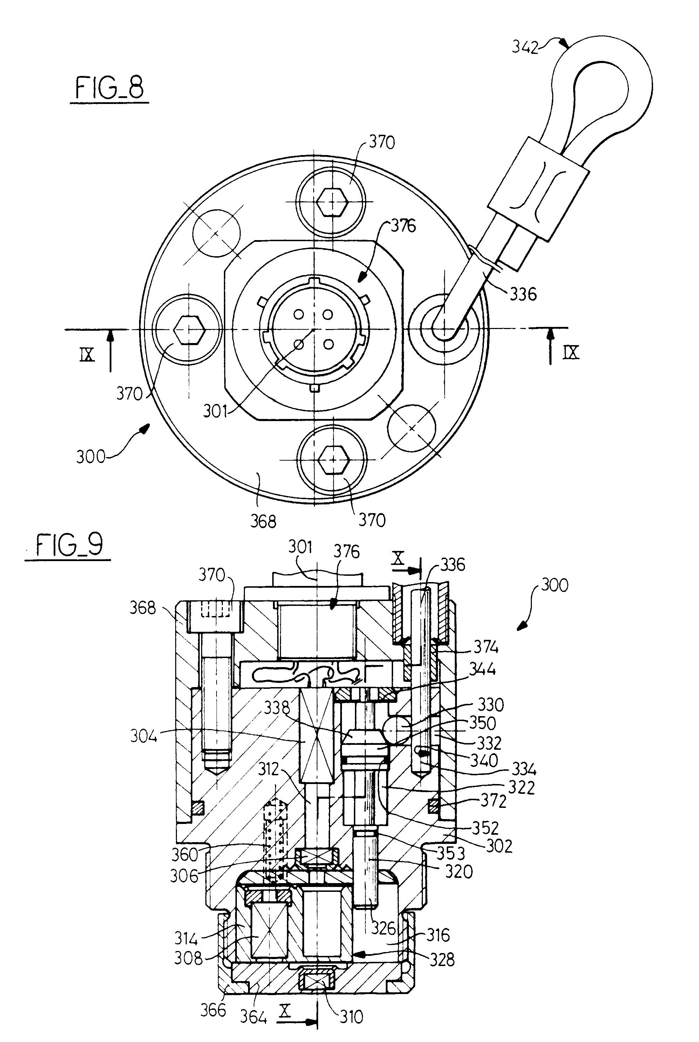

Ce dispositif est illustré sur les figures 8 à 10.

Il est logé dans un boîtier 302. L'axe longitudinal du boîtier est référencé 301.

Comme indiqué précédemment, le boîtier 302 est de préférence porté par le flasque supérieur 202 de l'ensemble propulseur 200.

La fonction principale du dispositif de sécurité et d'amorçage 300 est d'initier les cordeaux détonants 240 lorsque le circuit de commande 400 détermine que la mise à feu de l'ensemble propulseur 200 est requise. Les paramètres déterminant l'instant de mise à feu seront explicités par la suite.

Le système de sécurité et d'amorçage 300 comprend une chaîne pyrotechnique formée d'un allumeur 304, un relais pyrotechnique 306, un détonateur 308 et un relais de détonation 310.

L'allumeur 304, le relais 306 et le relais de détonation 310 sont supportés fixes par le boîtier 302 coaxialement à l'axe 301. L'allumeur 304 et le relais 306 communiquent par un canal 312. Le détonateur 308 est placé sur un tiroir 314, de sorte qu'en position de repos, le détonateur 308 soit non aligné sur le relais 306 et le relais de détonation 310. On définit ainsi, au repos, une rupture de chaîne pyrotechnique renforçant la sécurité de l'ensemble.

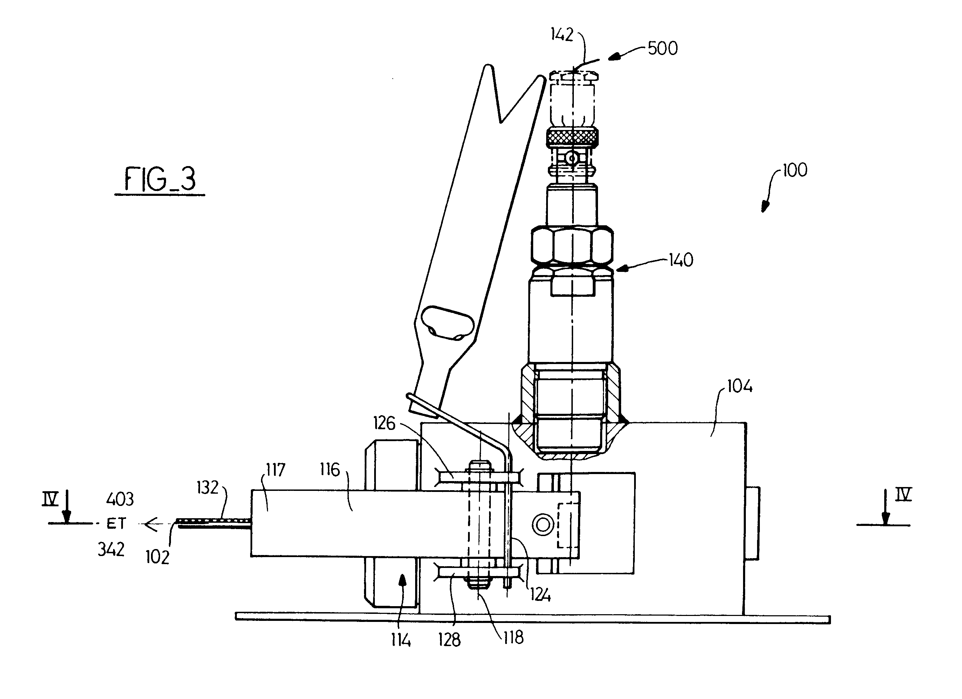

Le tiroir 314 est guidé à coulissement dans une chambre 316 du boîtier 302, dans une direction perpendiculaire à l'axe 301. Le tiroir 314 est sollicité vers une position d'alignement du détonateur 308 sur le relais 306 et le relais de détonation 310 par des ressorts orientés parallèlement à la direction de translation guidée du tiroir 314. Ces ressorts sont de préférence intercalés entre le fond d'alésages borgnes 319 ménagés dans le tiroir 314 et des tiges 318 qui prennent appui contre une paroi de la chambre 316, de façon connue en soi, pour des tiroirs de désalignement. De tels tiroirs de désalignement sont illustrés par exemple sur la figure 3 du document FR-A-2 294 420.

Le déplacement du tiroir 314 dans la position d'alignement est cependant interdit au repos par un piston 320. Ce dernier est guidé à coulissement dans une chambre 322 du boîtier 302, parallèlement à l'axe 301.

Le piston 320 peut être déplacé d'une position de repos illustrée sur la figure 9 annexée, dans une position de libération, par les gaz générés par un allumeur 324.

En position de repos précitée, l'une des extrémités 326 du piston 320 fait saillie dans la chambre 316, sert d'appui à la face avant 328 du tiroir 314 et interdit le déplacement de ce dernier en position d'alignement. Le piston 320 est maintenu dans cette position de repos par une bille 330. La bille 330 est engagée dans un canal 332 qui débouche radialement dans la chambre 322 recevant le piston 320. Le canal 332 est transversal à l'axe 301. En position de repos la bille 330 est maintenue en saillie dans la chambre 322 par l'extrémité 334 d'un câble de préarmement 336. Ainsi, la bille 330 sert de butée à une portion tronconique 338 du piston 320 prévue à la seconde extrémité de celui-ci, opposée à l'extrémité 326 précitée. La portion tronconique 338 est évasée en rapprochement de l'extrémité 326.

Le câble 336 est lui-même engagé dans un canal 340 qui coupe le canal 332 précité. Le canal 340 est parallèle à l'axe 301.

Le câble 336 est muni à sa seconde extrémité, qui émerge du boîtier 302, d'une boucle 342. Le câble de commande 102 provenant du déclencheur 100 est accroché, à l'aide de tout moyen approprié, par exemple à l'aide d'un mousqueton, sur la boucle 342 du câble 336.

Ainsi, lorsque le piston 106 du déclencheur à câble 100 exerce une traction sur le câble 102, le câble de préarmement 336 est extrait du boîtier 302. La bille 330 libérée peut reculer dans le canal 332 en éloignement de la chambre 322 et le piston 320 est susceptible de coulisser en éloignement de la chambre 316 pour libérer le tiroir 314. Toutefois, le piston 320 est maintenu dans la position de repos illustré sur la figure 9, par une rondelle à dent 344 qui lui sert de butée, jusqu'à l'initiation de l'allumeur 324.

Celui-ci est placé dans une chambre 346 du boîtier 302, qui communique avec un canal 348 (transversal à l'axe 301) qui lui-même débouche radialement dans la chambre 322 recevant le piston 320.

Plus précisément encore, le canal 348 débouche dans la chambre 322 entre une tête 350 du piston 320 et l'extrémité 326 de celui-ci servant de butée au tiroir 314.

Le tête 350 de piston possède un diamètre sensiblement complémentaire de celui de la chambre 322. Elle est de plus munie d'un joint annulaire d'étanchéité 352.

L'homme de l'art comprendra ainsi que les gaz générés par l'allumeur 324 parviennent par l'intermédiaire du canal 348 dans la chambre 322. Ils sollicitent alors le piston 320 en éloignement de la chambre 316 de sorte que la queue 326 du piston 320 sort de la chambre 316 et s'efface devant le tiroir 314, pour autoriser le déplacement de ce dernier en position d'alignement. Un second joint annulaire d'étanchéité 353 est prévu de préférence sur la queue 326 du piston pour éviter que les gaz développés par l'allumeur 324 ne parviennent au détonateur 308 porté par le tiroir 314.

Les moyens assurant l'initiation des allumeurs 304, et 324 sont intégrés au circuit de commande 400. Ils seront décrits par la suite.

De façon connue en soi un système anti-retour est de préférence associé au tiroir 314. Le système anti-retour a pour but d'éviter le retour du tiroir 314 en position de repos, illustrée sur la figure 9, après que celui-ci ait atteint la position d'alignement.

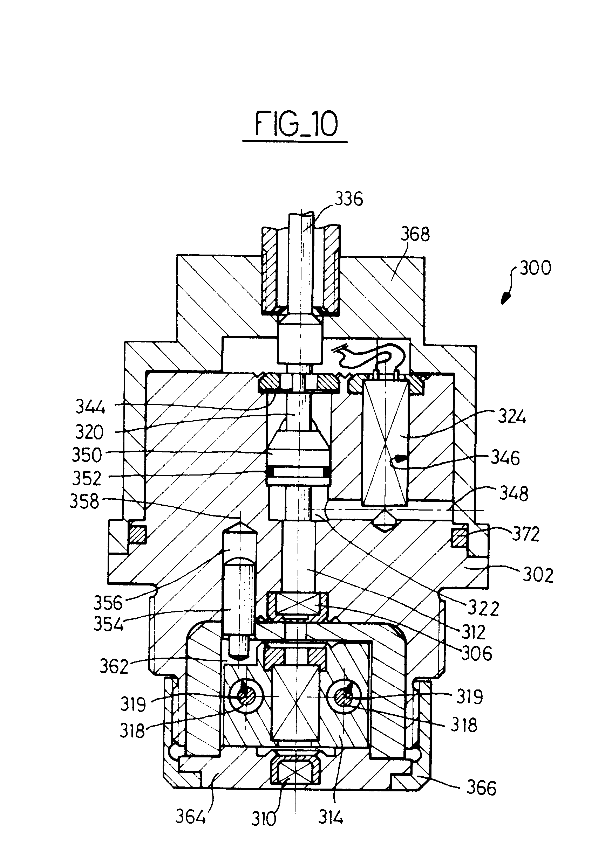

Le système anti-retour peut être formé, comme illustré sur les figures 9 et 10 annexées, par un plot 354. Le plot 354 est guidé à coulissement dans une chambre 356 du boîtier 302 selon une direction 358 transversale à la direction de translation du tiroir 314 (soit parallèlement à l'axe 301). Le plot 354 est sollicité en saillie dans la chambre 316 par un ressort associé 360. Tant que le tiroir 314 est en position de repos telle qu'illustrée sur la figure 9, le plot 354 bute contre le tiroir 314 et ne peut venir en saillie dans la chambre 316. Par contre, lorsque le tiroir 314 vient en position d'alignement, le plot 354 est placé en regard d'un logement 362 ménagé en position appropriée sur le tiroir 314. Ainsi, le plot 354 en pénétrant dans le logement 362 sous la sollicitation du ressort 360, immobilise le tiroir 314 en position d'alignement.

De préférence le relais de détonation 310 est porté sur une capsule 364 immobilisée sur le boîtier 302 par une bague filetée 366. Par ailleurs, le boîtier 302 est scellé de façon étanche sur sa face opposée (par laquelle émerge le câble 336) à l'aide d'un capuchon 368. Le capuchon 368 est fixé sur le boîtier 302 par des boulons 370. Un joint d'étanchéité annulaire 372 est placé entre le capuchon 370 et le boîtier 302. Pour parfaire l'étanchéité, le câble 336 traverse le capuchon 368 au niveau d'une garniture 374.

Les allumeurs 304 et 324 sont des allumeurs électriques. Les liaisons filaires assurant l'initiation des allumeurs 304 et 324 sont raccordées à un connecteur 376 porté par le capuchon 368.

Le dispositif de sécurité et d'amorçage 300 possède deux sécurités principales indépendantes. L'une correspond à une sécurité mécanique formée par le câble 336 qui doit être extrait pour autoriser le déplacement du piston 320 sous l'action des gaz de l'allumeur 324. L'autre correspond à une sécurité pyrotechnique obtenue par desalignement du relais 306, du détonateur 308 et du relais de détonation 310.

Le relais de détonation 310 communique avec un répartiteur pyrotechnique 280. Celui-ci est supporté par le flasque supérieur 202 de l'ensemble propulseur 200, en position centrée sur l'axe 201. Le répartiteur pyrotechnique 280 est formé d'un boîtier comprenant une entrée qui communique avec le relais de détonation 310, et des sorties en nombre égal au nombre maximal d'unités de propulsions 250 susceptibles d'équiper un ensemble propulseur 200. En fonction du nombre d'unités de propulsions utilisées, les sorties inutilisées du répartiteur pyrotechnique 280 sont obturées par des bouchons.

Les autres sorties du répartiteur pyrotechnique 280 reçoivent les embouts raccords des cordeaux détonants 240 précités, permettant l'initiation des unités de propulsion, comme illustré sur la figure 6.

Les cordeaux détonants 240 conduisent aux initiateurs 210. Afin de garantir une bonne étanchéité à l'ensemble propulseur 200, les initiateurs 210 sont de préférence formés par des systèmes de transmission d'allumage à travers une paroi étanche.

De tels initiateurs 210 ont été étudiés par la société SNPE et développés par la société PYROMECA sous la dénomination IFOC. Ils sont connus de l'homme de l'art car utilisé sur la fusée ARIANE.

Pour l'essentiel, ces initiateurs 210 comprennent des moyens pyrotechniques aptes à transformer au travers d'une paroi métallique étanche, le choc d'une détonation, en une flamme et en chaleur. Les initiateurs 210 comprennent pour cela un générateur d'ondes de choc placé sur un côté d'une paroi métallique étanche et un récepteur d'ondes de choc placé de l'autre côté de la paroi.

En d'autres termes, la chaine pyrotechnique du système conforme à la présente invention comprend l'allumeur 304, le relais 306, le détonateur 308, le relais de détonation 310, des cordeaux détonants 240, les initiateurs 210, les allumeurs 273 et les blocs de propergol 258.

L'utilisation d'initiateurs 210 transmettant l'allumage à travers une paroi étanche d'une part, et l'installation des moyens 314 de désalignement de chaîne à l'extérieur de l'ensemble propulseur 200 (dans le dispositif de sécurité et d'amorçage 300), d'autre part permettant de garantir une bonne étanchéité de l'ensemble propulseur.

Le dispositif de sécurité et d'amorçage précédemment décrit répond à la norme STANAG 4187 et 3525A.

## CIRCUIT DE COMMANDE 400

On va tout d'abord décrire un mode de réalisation général du circuit de commande 400 conforme à la présente invention, étant entendu que dans le cadre de l'invention il est prévu des moyens pour prendre en compte le paramètre masse de la charge et les moyens de commande sont adaptés pour corriger une altitude de consigne de base en fonction de la masse de la charge de sorte que l'extinction de l'ensemble propulseur intervienne juste avant l'atterissage de la plateforme, code celà sera décrit ultérieurement.

Le circuit de commande 400 a pour fonction d'alimenter au moment opportun les allumeurs 304 et 324 intégrés au dispositif de sécurité et d'amorçage 300. Il est logé dans un boîtier 402 Porté de préférence par le flasque supérieur 202 de l'ensemble propulseur 200. L'altitude de consigne pour l'initiation des unités de propulsion 250 est déterminée de telle sorte que, de préférence, la combustion des blocs 258 de propergol soit achevée juste avant que la plateforme 10 touche le sol.

Le circuit de commande 400 comprend pour l'essentiel un étage d'alimentation 410, un étage de traitement assurant une fonction de sécurité 430 et un étage de mise à feu 470.

L'étage d'alimentation 410 comprend une pile thermique. Des piles thermiques sont par exemple développées par l'Aérospatiale. De telles piles comprennent, entre une paire d'électrodes, un électrolyte solide associé à des éléments pyrotechniques qui assurent sa mise en fusion, et un dispositif d'initiation. Une telle pile thermique présente l'avantage fondamental de ne présenter aucune tension à ses bornes avant l'initiation. Elle permet par conséquent de renforcer la sécurité du système.

La pile thermique 411 peut être activée par un allumeur électrique 412.

Ce dernier est alimenté par la décharge d'un condensateur C413 lors de la fermeture d'un interrupteur 414. Ce dernier est porté par le boîtier 402. L'interrupteur 414 est sollicité à la fermeture. Il est cependant verrouillé en position d'ouverture par une goupille d'armement portée par le boîtier 402 et reliée à un câble de déclenchement 403. Celui-ci est fixé, tout comme le câble de préarmement 336 sur le câble de commande 102.

Ainsi, lors de l'extraction de la goupille d'armement par le déclencheur à câble 100, l'interrupteur 414 est fermé.

L'étage d'alimentation 410 comprend une diode Zener Z414 connectée en parallèle du condensateur C413. Une résistance R415 est connectée en série de l'ensemble parallèle Zéner Z414-condensateur C413. L'ensemble série comprenant le condensateur C413 et la résistance R415 peut être relié entre une borne de masse et une borne d'alimentation positive +Vcc du réseau de bord de l'aéronef par l'intermédiaire du boîtier de commande 500 pour charger le condensateur C 413. On notera qu'un connecteur larguable 550 relie les sorties du boîtier de commande 500 aux entrées du circuit de commande 400.

Le connecteur 550 comprend deux éléments de connecteur 551, 552 conçus pour être séparés lors du largage de la charge 10. L'élément de connecteur 551 reçoit les liaisons de sortie du boîtier de commande 500. L'élément de connecteur 552 reçoit les liaisons d'entrée du circuit 400, en particulier les fils 401 et 404 servant de masse et d'alimentation positive au condensateur C413.

L'allumeur 412 est relié aux bornes de l'ensemble série comprenant le condensateur C413 et la résistance R415 par l'intermédiaire de l'interrupteur 414.

L'étage de traitement 430 est piloté par des moyens détectant l'ouverture du ou des parachute(s) 20 et par un altimètre 432.

La détection d'ouverture du ou des parachute(s) 20 est réalisée par un accéléromètre 450. La sortie de l'accéléromètre 450 est appliquée à un détecteur de seuil 452 (3g par exemple) dont la sortie est reliée à la première entrée 455 d'une porte ET 454. La seconde entrée 456 de la porte ET 454 reçoit un signal d'horloge de fréquence constante. La sortie de la porte ET 454 est appliquée à un compteur 457.

Le compteur 457 est adapté pour générer à sa sortie 458, un signal de validation, après un retard déterminé, par exemple une seconde, consécutif à la validation de la détection d'ouverture de parachute par le détecteur de seuil 452 (on comprend en effet que l'ouverture de parachute induit une décélération décelable par l'accéléromètre 450).

Le signal de validation issu du compteur 457 est appliqué à l'allumeur 324 par l'intermédiaire d'un transistor de commutation 472. Pour cela, la sortie du compteur 458 est reliée à l'entrée de commande du transistor 472. Le trajet de conduction principal du transistor 472 est relié entre la borne de masse et une première borne de l'allumeur 324. La seconde borne de l'allumeur 324 est reliée à la borne de tension d'alimentation positive +U Alim issue de la pile thermique 411 par l'intermédiaire d'une résistance R460. De préférence, un condensateur de filtrage C462 relie la seconde borne de l'allumeur 324 à la masse du montage.

Ainsi le piston 320 n'est déplacé en position de libération pour autoriser l'alignement de chaîne pyrotechnique du dispositif 300 qu'après un retard prédéterminé après l'ouverture des parachutes. Cette disposition évite tout risque d'endommagement de l'aéronef par l'ensemble propulseur 200.

Le signal de validation issu du compteur 457 est également utilisé pour valider la prise en compte de l'information issue de l'altimètre 432.

On évite ainsi que l'altimètre 432 par détection erronée, par exemple par détection de l'aéronef, n'induise une initiation prématurée de l'ensemble propulseur 200 susceptible de présenter un risque pour l'aéronef.

A cette fin, la sortie 458 du compteur 457 est reliée à la première entrée 433 d'une porte ET à deux entrées 434.

L'altimètre 432 applique à un comparateur 436 une information représentative de l'altitude variable de la charge larguée 10. De préférence, l'altimètre 432 est placé, comme illustré schématiquement sur la figure 1, sur la plateforme 12. Le comparateur 436 reçoit sur une entrée 431 un signal représentant une altitude de consigne "Alt".

Lorsque le comparateur 436 détermine que l'altitude réelle de la plateforme 12, détectée par l'altimètre 432, correspond à l'altitude de consigne, le comparateur 436 applique un signal de niveau haut sur la seconde entrée 435 de la porte ET 434.

La porte ET 434 provoque alors par l'intermédiaire d'un second transistor de commutation 474, l'alimentation de l'allumeur 304.

Pour cela, la sortie de la porte ET 434 est reliée à l'entrée de commande du transistor 474 par l'intermédiaire d'un filtre. Ce dernier comprend, d'une part, une résistance R436, connectée entre la sortie de la porte ET 434 et l'entrée de commande du transistor 474, d'autre part, un condensateur C 437 connecté entre l'entrée de commande du transistor 474 et la masse du montage.

Le trajet de conduction principal du transistor 474 est connecté entre la masse du montage et une première borne de l'allumeur 304.

La seconde borne de l'allumeur 304 est reliée par l'intermédiaire d'une résistance R464 à la borne d'alimentation positive + UAlim de la pile thermique 411. De préférence, un condensateur de filtrage C466 relie la seconde borne de l'allumeur 304 à la masse.

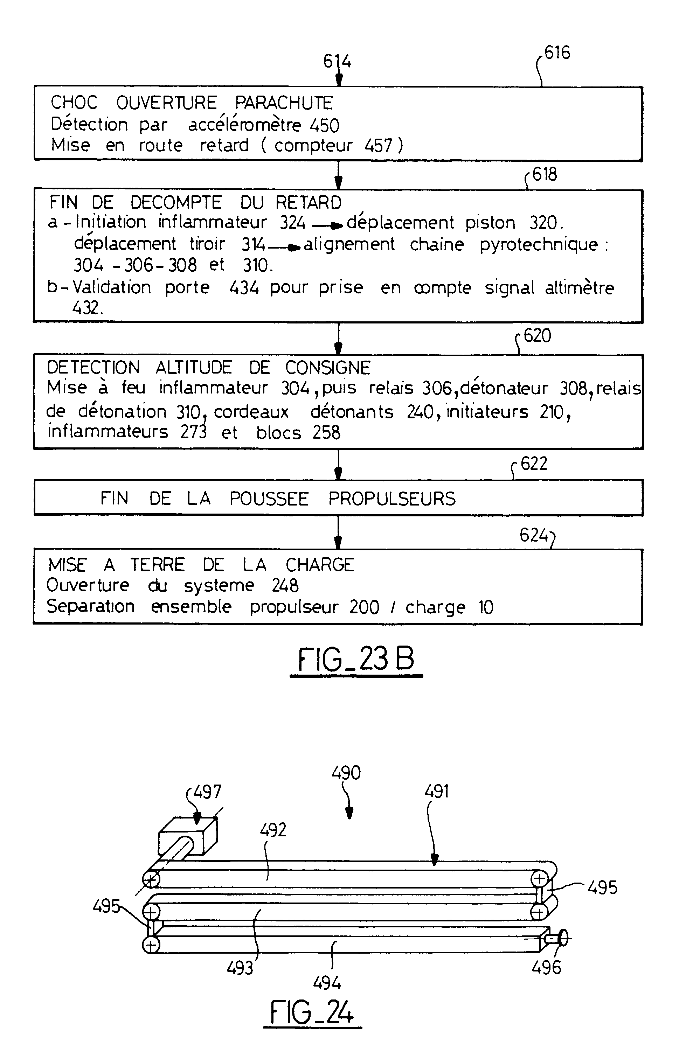

Dans l'exemple de réalisation précédemment décrit de l'étage de traitement 430, l'altimètre 432 est un altimètre radioélectrique, par exemple l'altimètre AHV8 de la société TRT. On peut envisager de remplacer l'altimètre radioélectrique 432 précité par une sonde mécanique d'altitude. Un exemple de sonde mécanique 490 est représenté sur la figure 24 annexée.

La sonde 490 comprend une fiche déployable 491. La fiche 491 peut comprendre par exemple trois tronçons 492, 493, 494, articulés autour d'articulations 495. Un organe de détection du sol 496, par exemple un interrupteur, est porté par l'extrémité libre du dernier tronçon 494.

L'extrémité supérieure du premier tronçon 492 est articulée sur la palette 12 autour d'une articulation 497.

Au repos, les tronçons 492, 493, 494, sont repliés l'un contre l'autre parallèlement à un bord de la palette 12.

Lorsque l'accéléromètre 450 a capté l'ouverture de parachute 20 par mesure de la décélération, il donne alors l'ordre de déploiement à la sonde 490. Un pyromécanisme intégré à chaque articulation 495, 497, est alors mis à feu pour déverrouiller les tronçons 492, 493, 494 et assurer leur déploiement en alignement vertical sous la palette 12. La sonde 490 est alors prête à la détection du sol grâce à l'organe 496.

La hauteur totale de la sonde 490 (tronçons 492, 493 et 494 alignés) doit correspondre à l'altitude de consigne de mise à feu de l'ensemble propulseur 200.

La sonde 490 peut par exemple présenter une hauteur total de l'ordre de 10m, composée de trois tronçons 492, 493, 494 de 3,30 m chacun.

De préférence deux sondes 490 sont prévues, articulées respectivement sur des angles diagonalement opposés de la palette 12.

Le signal initiant le pyromécanisme qui assure le déploiement de la sonde peut correspondre au signal issu de l'élément 452 ou au signal retardé issu du compteur 457.

Dans le cas de l'utilisation d'une sonde mécanique, comme illustré sur la figure 24, le comparateur 436 n'est plus nécessaire. Le signal issu de l'organe détecteur 496 peut être appliqué directement sur l'entrée de commande du transistor de commutation 474; ou bien sur la seconde entrée 435 de la porte ET 434, celle-ci recevant sur sa première entrée 433 le signal de validation issu du compteur 457.

L'homme de l'art sait que la loi de poussée de propulseurs au propergol évolue en fonction de la température.

A cette fin, il est prévu de préférence une sonde de température 480, placée sur l'ensemble propulseur 200 pour mesurer la température des structures des unités de propulsion 250 afin d'affiner la précision du système en corrigeant l'instant de mise à feu.

Plus précisément encore, de préférence, l'information issue du capteur de température 480 est appliquée au comparateur 436 (ou à un calculateur associé), afin de retarder le déclenchement de la porte ET 434, donc du transistor 474 et de l'allumeur 304, d'un temps t déterminé par la relation:
[1 + k(T - 298)/298] dans laquelle T représente la température mesurée par le capteur 480 en degrés Kelvin.

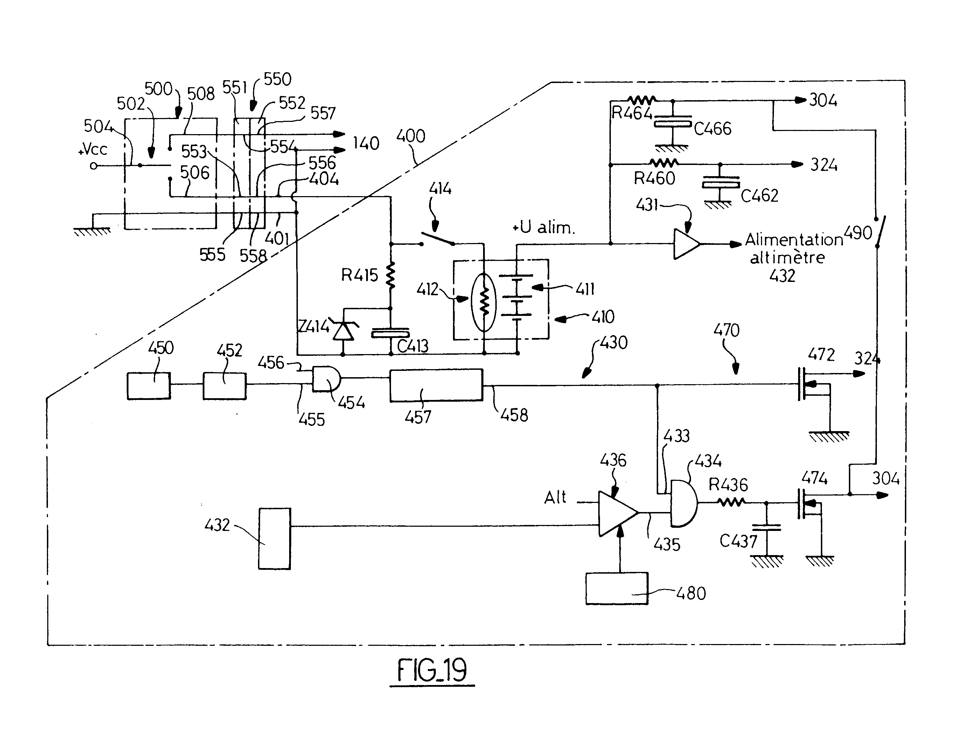

Selon le mode de réalisation illustré sur la figure 19, l'altitude de consigne "Alt" appliquée sur le comparateur 436 est prédéterminée et fixe, en fonction des caractéristiques de l'ensemble propulseur 200.

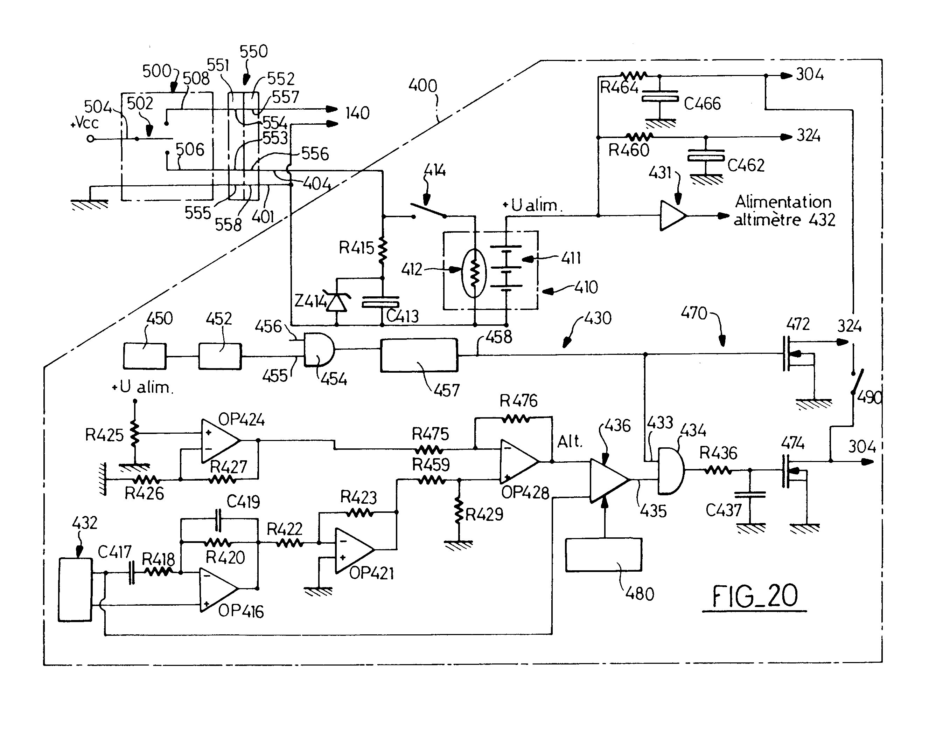

On a représenté sur la figure 20 annexée une variante perfectionnée du circuit de commande 400 selon laquelle l'altitude de consigne utilisée par le comparateur 436 pour déclencher l'allumeur 304 est déterminée sur la base de la vitesse stabilisée réelle de la charge larguée.

Cette disposition permet d'optimiser l'instant de mise àfeu des blocs de propergol 258, de sorte que la combustion de ceux-ci soit achevée juste avant que le contact au sol soit établi.

Plus précisément, l'altitude Z de mise à feu des propulseurs 250 est alors calculée pour garantir que l'extinction des blocs de propergol 258 intervienne juste avant l'atterrissage de la plateforme.

Pour celà, l'altitude Z de mise à feu des propulseurs correspond, avec un facteur correctif égal à l'erreur de mesure du radioaltimètre 432, à la hauteur de dénivelé parcourue par la charge 10 entre l'instant de mise à feu et l'instant d'extinction de la propulsion à la vitesse de descente stabilisée Vstab par les parachutes 20.

La Demanderesse a déterminé que cette hauteur de dénivelé était une fonction linéaire de la vitesse stabilisée Vstab soit de la forme k1Vstab + k2 ou k1 et k2 sont des constantes qui dépendent des propulseurs.

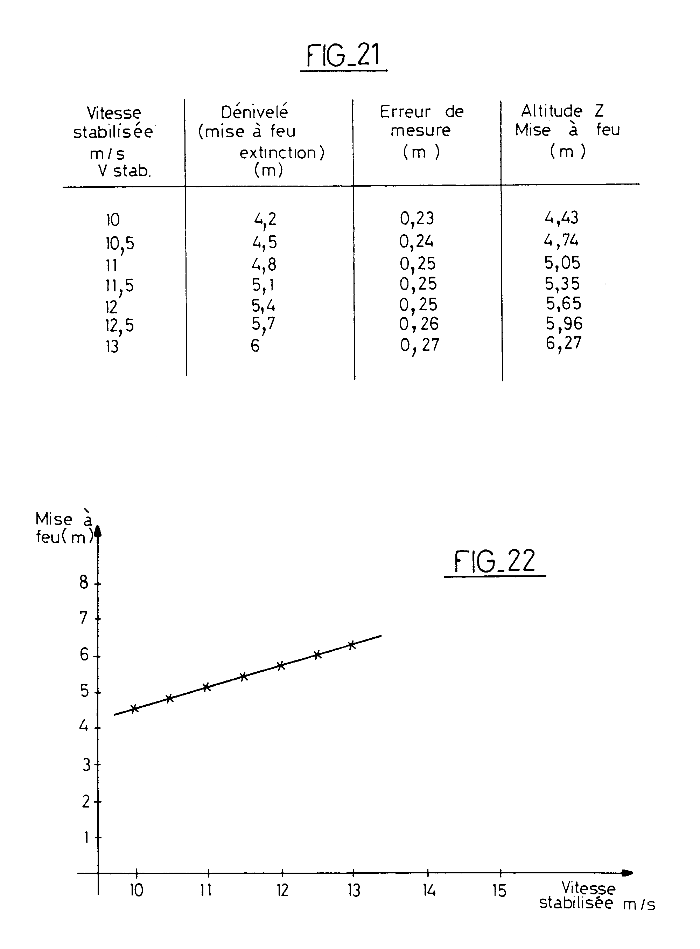

On a par exemple illustré sur la figure 21 annexée un tableau de valeurs calculées sur la base d'unités de propulsion 250 du type précité, et sur la figure 22 le tracé de la courbe hauteur de mise à feu/vitesse stabilisée, qui en résulte. Sur la figure 21, la première colonne représente la vitesse stabilisée Vstab de la charge 10 à l'instant de mise à feu de l'ensemble propulseur ; la deuxième colonne représente la hauteur de dénivelé parcourue entre l'instant de mise à feu des blocs 258 de propergol et l'instant d'extinction de ceux-ci (connaissant Vstab) ; la troisième colonne représente l'erreur de mesure au niveau de l'altimètre 432 ; et la quatrième colonne montre l'altitude Z de mise à feu, qui correspond à la somme du dénivelé (deuxième colonne) et de l'erreur de mesure (troisième colonne).

La figure 22 montre bien que l'altitude Z de mise à feu varie linéairement en fonction de la vitesse stabilisée Vstab détectée lors de la mise à feu.

Plus précisément, la courbe illustrée sur la figure 22 repond à l'équation :

$$Z = 0,65 \text{ Vstab} - 2,1.$$

Le cas échéant, l'étage de traitement 430 peut être encore perfectionné pour surveiller la valeur de la vitesse stabilisée Vstab, afin d'exploiter une altitude de consigne différente si la vitesse stabilisée dépasse un seuil déterminé, signifiant un incident, par exemple qu'un parachute 20 n'est pas ouvert.

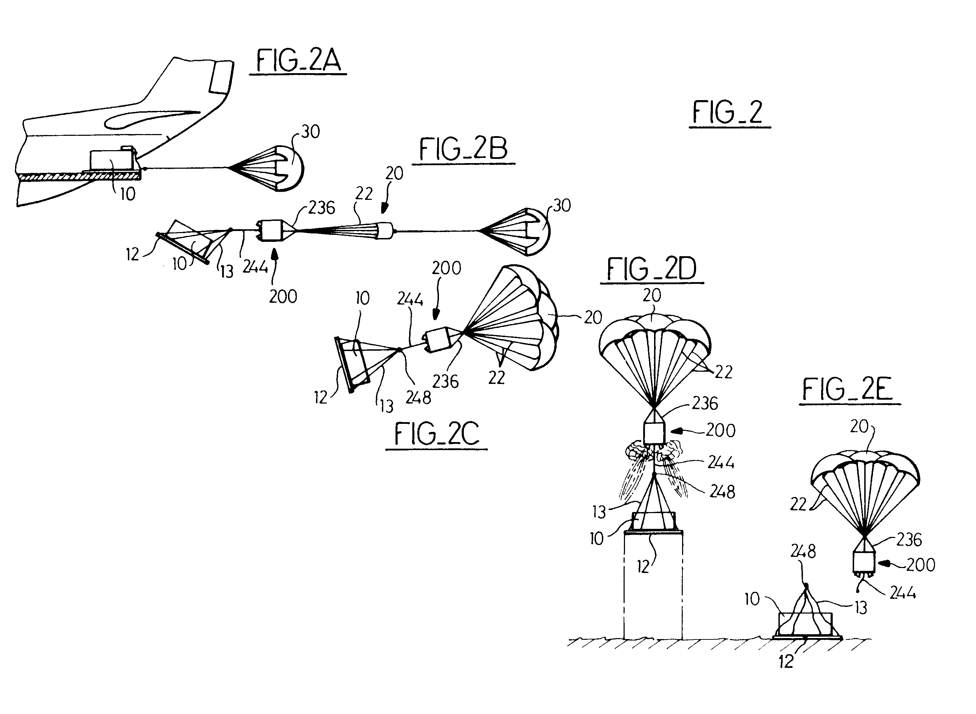

La courbe illustrée sur la figure 2 pour laquelle k1 = 0,65 et k2 = -2,1 correspond au cas particulier des propulseurs précédemment décrits. Cette courbe ne doit pas être limitative.

De préférence, dans le cadre de la présente invention, l'étage de traitement 430 comprend des moyens dérivateurs pour déduire la vitesse stabilisée Vstab du signal d'altitude issu de l'altimètre 432.

De nombreux circuits électroniques peuvent être appropriés pour générer le signal Z = k1 Vstab + k2 sur la base du signal Vstab issu des moyens dérivateurs précités.

On va décrire à titre d'exemple non limitatif les moyens prévus à cet effet selon la figure 20.

Les moyens de dérivation comprennent un amplificateur opérationnel OP 416 dont l'entrée non inverseuse est reliée à l'une des sorties de l'altimètre 432. L'entrée inverseuse de l'amplificateur opérationnel OP 416 est reliée à la seconde sortie de l'altimètre 432 par l'intermédiaire d'une branche comprenant en série un condensateur C417 et une résistance R418.

L'entrée inverseuse de l'amplificateur opérationnel OP 416 est rebouclée, de façon classique en soi, sur sa sortie, par l'intermédiaire d'une cellule comprenant en parallèle un condensateur C 419 et une résistance R 420.

La sortie de l'amplificateur opérationnel OP 416 montée en dérivateur est reliée à un étage inverseur. Ce dernier comprend un amplificateur opérationnel OP 421 dont l'entrée non inverseuse est reliée à la masse. L'entrée inverseuse de OP 421 est reliée à la sortie de OP 416 par l'intermédiaire d'une résistance R 422. L'entrée inverseuse de OP 421 est rebouclée sur sa sortie par une résistance R 423. Le signal représentant la vitesse stabilisée Vstab est ainsi disponible à la sortie de OP 421.

L'étage de traitement 430 comprend des moyens générant une valeur de consigne représentative de la constante k2. Les moyens générateurs de valeur de consigne comprennent un amplificateur opérationnel OP 424. L'entrée non inverseuse de OP 424 est reliée au curseur d'une résistance variable R 425 connectée entre la borne d'alimentation positive +Ualim de la pile thermique 411 et la masse du montage. L'entrée inverseuse de OP 424 est reliée à la masse par l'intermédiaire d'une résistance R 426 et à sa sortie par l'intermédiaire d'une résistance R 427.

Les signaux disponibles en sortie de OP 421 et OP 424 sont appliqués à un étage additionneur. Celui-ci comprend un amplificateur opérationnel OP 428.

L'entrée non inverseuse de OP 428 est reliée à la sortie de OP 421 par une résistance R 459, d'une part, et à la masse du montage par une résistance R 429, d'autre part.

L'entrée inverseuse de OP 428 est par ailleurs reliée à la sortie de OP 424 par l'intermédiaire d'une résistance R 475, et à sa sortie par l'intermédiaire d'une résistance R 476.

Le signal représentant l'atlitude de consigne Alt, qui est égale à k1Vstab + k2 est ainsi disponible à la sortie de OP 428. Ce signal est appliqué sur l'une des entrées du comparateur 436. Le comparateur 436, comme indiqué précédemment en regard de la figure 19, reçoit par ailleurs le signal issu de l'altimètre 432, pour valider la porte ET 434, rendre conducteur le transistor 474 et par conséquent initier l'allumeur 304, lorsque l'altitude de consigne est atteinte.

De préférence, l'alimentation de l'altimètre 432 n'est réalisée que lorsque la tension aux bornes de la pile thermique 411 atteint une valeur suffisante. Cette valeur peut être détectée par un détecteur de seuil 431 intercalé entre la borne d'alimentation positive +Ualim de la pile thermique 411 et la borne d'alimentation correspondante de l'altimètre 432.

Pour renforcer encore la sécurité, un shunt 490, commandé à l'ouverture par le déploiement de la chaine de largage, peut être prévu en parallèle de l'allumeur 304. On a illustré schématiquement un tel shunt 490 sur les figures 19 et 20. En position de stockage, le shunt 490 est fermé. Il court-circuite l'allumeur 304 et interdit par conséquent toute initiation intempestive de celui-ci.

Le shunt 490 peut être placé sur les suspentes 22 de parachutes 20 comme illustré sur la figure 1, de sorte que le shunt 490 soit ouvert lors du déploiement des parachutes.

L'homme de l'art comprendra aisément que le circuit de commande 400 présente de nombreuses sécurités.

Tout d'abord, avant utilisation, aucune énergie électrique n'est stockée dans les circuits de commande 400. En effet, le condensateur C 413 est déchargé et la pile thermique 411 n'est pas initiée.

Par ailleurs, l'initiation de l'allumeur 304 requiert le déploiement de la chaine de largage détectée par l'ouverture du shunt 490 et par l'accéléromètre 450, l'écoulement d'une temporisation définie par le compteur 457 à partir de la validation par l'accéléromètre, enfin l'atteinte de l'altitude de consigne Alt contrôlée par le comparateur 436.

## BOITIER DE COMMANDE 500

Le boîtier de commande 500 comprend un interrupteur inverseur 502 comprenant une entrée 504, deux sorties 508, 508 et trois positions.

L'entrée 504 est reliée à la borne d'alimentation positive +Vcc du réseau interne d'aéronef.

Dans une première position, telle qui'illustré sur les figures 19 et 20 annexées, l'interrupteur inverseur 502 ne relie l'entrée 504 à aucune sortie 506, 508.

Dans une position de largage normal, c'est-à-dire de largage freiné par l'ensemble propulseur 200, l'interrupteur inverseur 502 relie l'entrée 504 à la sortie 506, afin de charger le condensateur C 413 par l'intermédiaire de la résistance R 415.

Dans une position de largage d'urgence, dans laquelle le largage de la charge est réalisé, sans mise en oeuvre de l'ensemble propulseur 200, l'entrée 504 est reliée à la sortie 508. Celle-ci est reliée, par l'intermédiaire du connecteur 550, à une première borne du vérin pyrotechnique 140.

La seconde borne du vérin pyrotechnique 140 est reliée, toujours par l'intermédiaire du connecteur 550, à la borne de masse du circuit électrique de l'aéronef.

Les deux éléments 551, 552 du connecteur larguable 550 comprennent par conséquent chacun trois fiches. Une première fiche 553 de l'élément de connecteur 551 est reliée à la sortie 506 du boîtier 500 tandis qu'une première fiche 556 associée de l'élément de connecteur 552 est reliée à la ligne 404 d'alimentation du condensateur C 413. Une seconde fiche 554 de l'élément de connecteur 551 est reliée à la sortie 508 du boîtier 500 tandis que la seconde fiche homologue 557 de l'élément de connecteur 552 est reliée à la première borne de l'allumeur 140.

Enfin, la troisième fiche 555 de l'élément de connecteur 551 est reliée à la masse du circuit électrique de l'aéronef, tandis que la troisième fiche homologue 558 de l'élément de connecteur 552 est reliée, d'une part, à la masse de l'étage d'alimentation 410, d'autre part, à la seconde borne du vérin pyrotechnique 140.

## FONCTIONNEMENT DU SYSTEME

### 1. PHASE DE PREPARATION

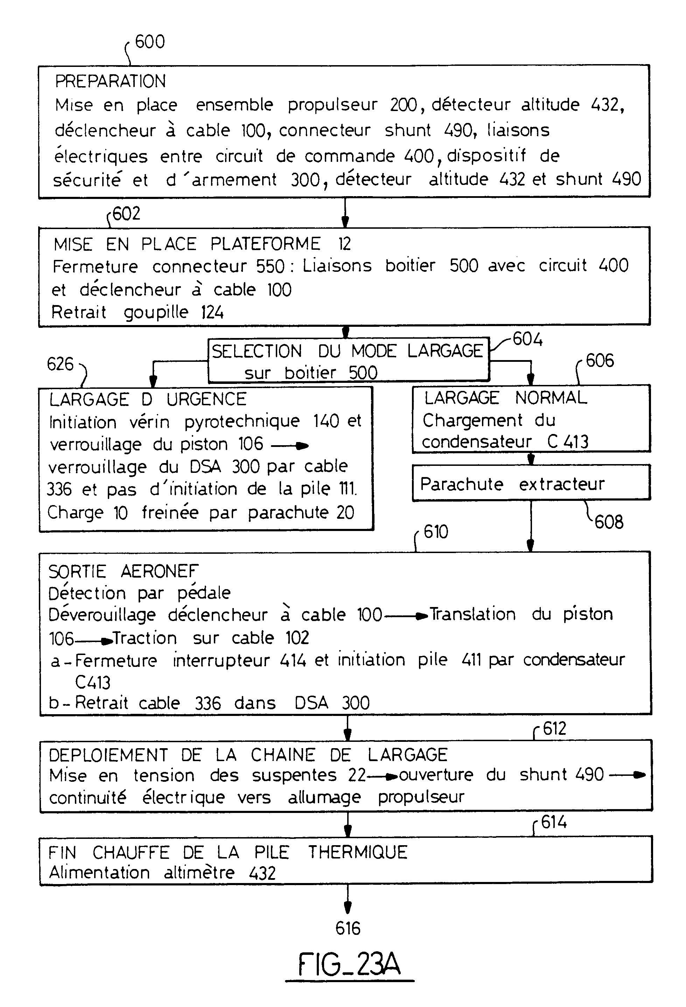

La préparation de la charge 10 à larguer requiert la préparation et le montage des éléments suivants (étape 602 sur la figure 23A) :

- ensemble propulsif 200 équipé du dispositif 300 et boîtier électronique 402 conditionnés sur la charge 10,
- mise en place d'un détecteur d'altitude 432 sur la plateforme 12,
- mise en place du déclencheur à câble 100 sur la plateforme 10,
- mise en place du connecteur shunt 490 dans les élingues de suspension 22,
- installation de la liaison câble au boîtier électronique 402 et au dispositif de sécurité et d'amorçage 300,
- établissement des liaisons électriques entre le détecteur d'altitude 432 et le circuit de commande 400, d'une part, et entre le circuit de commande 400 et le connecteur shunt 490, d'autre part,
- boîtier électronique 500 positionné dans l'aéronef. La charge 10 portée par la plateforme 12 est alors prête pour une mise en place sur la rampe de largage de l'aéronef. Dans cet état, la gâchette 114 du déclencheur à câble est verrouillée par la goupille 124. Le piston 106 est bloqué par la gâchette 114. Le condensateur C 413 est déchargé et la pile thermique 411 non initiée. Le tiroir 314 est désaligné et bloqué par le piston 320.

Lors des opérations de mise en place de la charge sur la rampe de largage, il convient, d'une part, de relier l'élément de connecteur 551 du boîtier 500 embarqué, à l'élément de connecteur 552 monté sur la plateforme 12, pour assurer la liaison avec le circuit de commande 400 et le vérin pyrotechnique 140 intégré au déclencheur à câble 100. De plus, lors de la mise en place de la plateforme sur les rails de largage la goupille de sécurité 124 doit être retirée. Les opérations de mise en place de la charge sont illustrées par l'étape 602 sur la figure 23A.

## 2. LARGAGE FREINE

La séquence du largage freiné est la suivante.

Le boîtier 500 est mis en position de largage freiné (étape 604, 606). L'interrupteur inverseur 502 relie l'entrée 504 à la sortie 506. Le condensateur C413 est alors chargé par le réseau de bord de l'aéronef.

Comme illustré sur la figure 2A pour initier le largage un parachute d'extraction est déployé (étape 608). Lorsque la plateforme 10 quitte les rails au moment du largage, la pédale détectant la sortie d'aéronef déplace la gâchette 114 et libère le piston 106 (étape 610). Le piston 106 exerce de ce fait une traction sur le câble de commande 102.

La traction du câble 102 a pour effet de basculer l'interrupteur 414 en position fermée, d'une part, et d'extraire le câble 336 du dispositif de sécurité et d'amorçage 300, pour autoriser l'alignement ultérieur de la chaîne pyrotechnique 304, 306, 308, 310, d'autre part. Lors du largage, les éléments de connecteur 551, 552 sont séparés (par coulissement relatif de leurs fiches).

La fermeture de l'interrupteur 414 conduit à l'alimentation de l'allumeur 412 par décharge du condensateur C413. La pile thermique 411 est ainsi sollicitée et commence son cycle de montée en tension.

En parallèle, l'extension de la chaîne de largage (figure 2B - étape 612), par le parachute extracteur 30, conduit à l'ouverture du connecteur shunt 490 placé sur les élingues 22. Le court-circuit sur l'allumeur 304 de mise à feu des propulseurs, formé au stockage par le connecteur shunt 490 est donc supprimé. Le circuit de commande 400 est alors relié fonctionnellement au dispositif de sécurité et d'amorçage 300.

Plus précisément le transistor 474 est alors relié fonctionnellement à l'allumeur 304.

Quand la pile thermique 411 atteint une tension seuil (détectée par l'élément 431), le circuit 400 alimente la sonde radioaltimétrique 432 qui se met en chauffe (étape 614).

A l'ouverture des parachutes 20 (figure 2C), la décélération résultante est détectée par l'accéléromètre 450 qui initie le retard électronique surveillé par le compteur 457 (étape 616).

Au bout du temps de retard électronique (étape 618), soit par exemple environ une seconde, le transistor de commutation 472 est rendu conducteur. L'inflammateur 324 est alimenté. Le piston 320 de ce fait est déplacé à l'extérieur de la chambre 316 ; le tiroir 314 est déplacé en position d'alignement ; et la chaîne pyrotechnique comprenant l'inflammateur 304, le relais 306, le détonateur 308 et le relais de détonation 310 est alignée.

En parallèle, au bout du temps de retard électronique, la porte ET 434 est validée pour autoriser la prise en compte du signal provenant du radioaltimètre 432.

On notera que grâce au retard électronique, la prise en compte du signal issu du radioaltimètre 432 est différée depuis la sortie de l'aéronef afin de garantir que ce dernier ne génère une information erronée en référence à l'aéronef.

Dès que l'altitude de consigne est atteinte (étape 620), le transistor de commutation 474 est rendu conducteur. L'inflammateur 304 du dispositif de sécurité et d'amorçage 300 est alimenté. Les unités de propulsion 250 sont initiées par l'intermédiaire du relais 306, du détonateur 308, du relais de détonation 310, du répartiteur 280, des cordeaux détonants 240, des initiateurs 210 et des inflammateurs 273 (figure 2D).

Comme indiqué précédemment, l'instant d'initiation des inflammateurs 304 peut être différé par le comparateur 436 sur la base de l'information délivrée par la sonde de température 480.

La charge 10 est freinée grâce à la mise en oeuvre de l'ensemble propulseur 200.

La fin de la combustion des blocs de propergol 258 intervient peu avant la mise à terre (étape 622).

Dès le contact du sol, l'élément 248 reliant les suspentes 13 au câble 244 sépare la charge 10 de l'ensemble propulsif et des parachutes 20 (étape 624 - figure 2E).

## 3. LARGAGE D'URGENCE

Le système proposé dans le cadre de la présente invention autorise un largage d'urgence pour lequel on ne souhaite pas utiliser le rétro-freinage de la charge par l'ensemble propulseur 200.

Dans ce cas, la séquence de fonctionnement est la suivante (étape 626).

Le boîtier 500 est mis en position urgence.

L'interrupteur-inverseur 502 relie alors la sortie 508 à l'entrée 504.

De ce fait, le condensateur C413 n'est pas alimenté. La pile thermique 411 ne peut donc être activée.

Par contre, le vérin pyrotechnique 140 est mis en oeuvre pour verrouiller le piston 106.

Il en résulte que le déclencheur à câble 100 est verrouillé, ce qui fait que le relèvement de la pédale de détection de sortie d'aéronef, lors de la sortie avion de la plateforme 12 est, sans effet sur le câble 102.

Par ailleurs, le condensateur C413 n'étant pas chargé et l'interrupteur 414 ne pouvant être fermé par le câble 102, il n'y a pas de mise en service du circuit de commande 400.

De même le câble de pré-armement 336 n'est pas extrait ; il n'y a donc pas déverrouillage du dispositif de sécurité et d'amorçage 300.

La chaîne pyrotechnique de ce dispositif ne peut donc s'aligner et la mise à feu de l'ensemble propulseur 200 ne peut être faite.

La charge 10 est donc mise à terre sous l'effet des parachutes 20 seuls.

On notera que, lorsque l'altitude de consigne "Alt" pour la mise à feu, est déterminée sur la base de la vitesse stabilisée Vstab (Alt = k1Vstab + k2), le système élimine automatiquement les dispersions pouvant résulter par exemple des paramètres aérologiques ou d'incidents mineurs de fonctionnement, tels qu'un retard à l'ouverture d'un parachute.

On va maintenant décrire diverses variantes de réalisation du système conforme à l'invention.

## DECLENCHEUR A CABLE 100

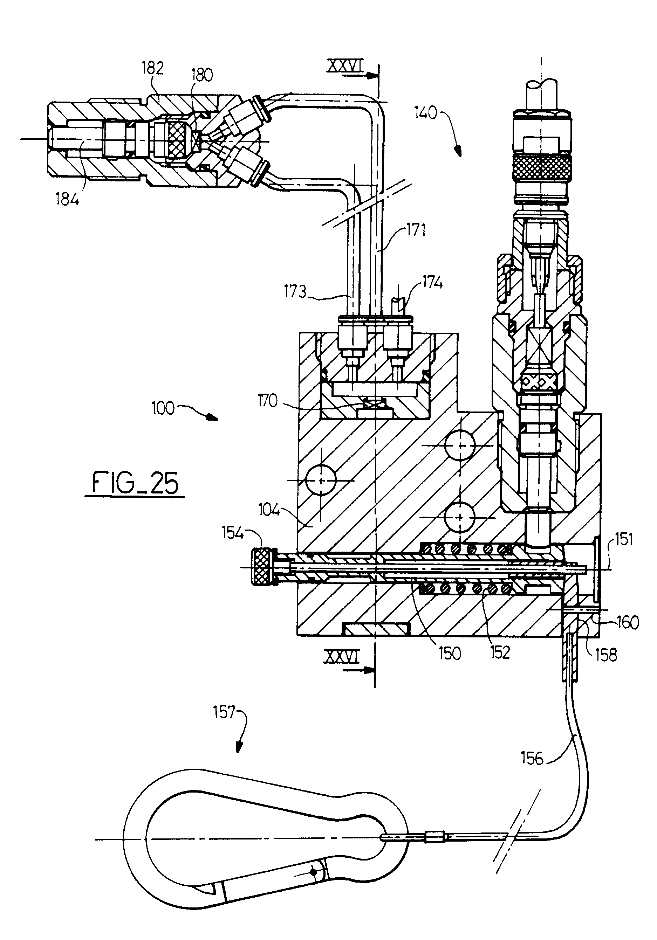

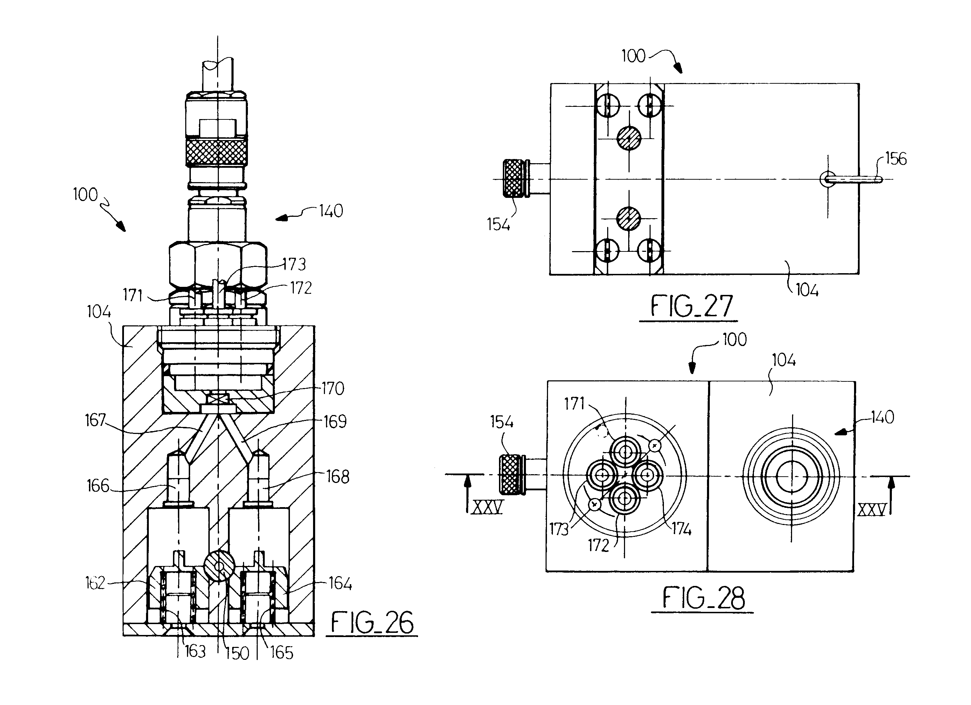

Le déclencheur à câble 100 représenté sur les figures 25 à 29 annexées comprend un boîtier 104 qui loge un piston 150 sollicité par un ressort 152, une épingle de sécurité 154, un câble 156 pourvu d'un embout 158, une goupille cisaillable 160, deux percuteurs 162, 164 associés à des ressorts de sollicitation 163, 165, des amorces 166, 168, un relais de détonation 170, quatre tubes 171, 172, 173, 174 transmettant l'information pyrotechnique, et un vérin pyrotechnique 140.

Le piston 150 est guidé à coulissement dans une chambre du boîtier 104, selon son axe 151.

Le piston 150 est sollicité, par le ressort 152 vers une position de travail. Toutefois, au stockage le piston 150 est maintenu, dans une position de repos, telle qu'illustrée sur la figure 25, par l'embout 158 solidaire d'une extrémité du cable 156. Pour celà l'embout 158 fait saillie dans la chambre du boîtier recevant le piston 150, en avant de celui-ci.

L'embout 158 et le câble 156 sont initialement maintenus dans cette position par la goupille cisaillable 160.

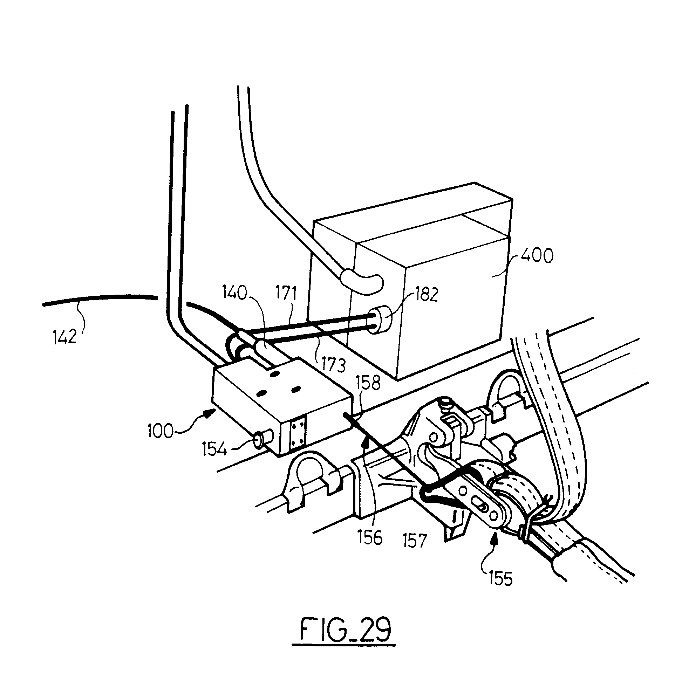

La seconde extrémité du câble 156 est pourvue d'un mousqueton 157. Ce dernier est destiné à être fixé, comme représenté sur la figure 29, sur la ferrure de traction 155 associé au parachute extracteur.

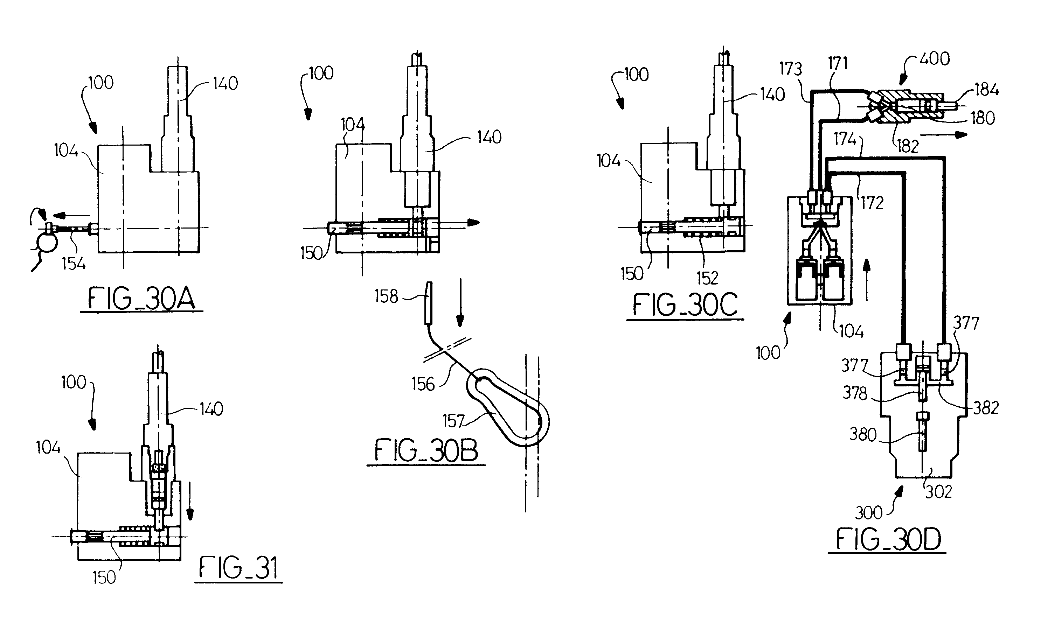

Ainsi lors de l'extraction de la charge hors de l'aéronef, la rotation de la pédale entraîne la libération de la ferrure de traction 155, et par suite : une traction est opérée sur le câble 156, la goupille 160 est cisaillée, le câble 156 est retiré (comme représenté sur la figure 30B) et le piston 150 peut passer en position de travail sous la sollicitation du ressort 152, (comme représenté sur la figure 30C).

Toutefois l'épingle de sécurité 154 interdit initialement le retrait du câble. Pour cela l'épingle de sécurité 154 traverse le piston 150 et vient en prise avec l'embout 158. L'épingle de sécurité est accessible à l'extérieur du boîtier. Elle doit donc être retirée lorsque le mousqueton 157 est accroché sur la ferrure de traction 155, comme représenté sur la figure 30A.

Les percuteurs 162, 164 sont guidés à coulissement dans le boîtier 104, perpendiculairement au piston 150. Ils sont sollicités par les ressorts 163, 165 respectivement vers les amorces 166, 168.

Le piston 150 est étagé sur sa périphérie extérieure comme montré sur la figure 25.

En position de repos initiale, le piston 150 interdit le déplacement des percuteurs 162, 164 vers les amorces 166, 168.

En position de travail par contre, le piston 150 autorise ce déplacement.

Les amorces 166, 168 communiquent par l'intermédiaire de canaux 167, 169 avec le relais de détonation 170 qui lui-même communique avec les tubes 171 à 174.

Ainsi une onde de détonation est transmise par les tubes 171 à 174 lors de l'extraction de la charge hors de l'aéronef (comme représenté sur la figure 30D).

Comme indiqué dans la demande de brevet principal, le vérin pyrotechnique 140 est conçu pour interdire le déplacement du piston 150 en position de travail, lorsqu'une procédure de largage d'urgence est requise. Le verrouillage du piston 150 par le dispositif de sécurité 140 interdit donc l'initiation du système de freinage. Le vérin pyrotechnique 140 comprend pour l'essentiel un piston susceptible d'être déplacé par des moyens pyrotechniques. Ceux-ci sont initiés électriquement par une liaison filaire 142. Au repos, le piston intégré au vérin pyrotechnique 140 est rétracté dans le boîtier de celui-ci et ne fait pas saillie dans la chambre du piston 150. Il autorise par conséquent le déplacement du piston 150 en position de travail.

Par contre, après mise à feu des moyens pyrotechniques intégrés au vérin pyrotechnique 140, le pistion intégré à celui-ci vient en saillie dans la chambre du piston 150 et sert d'appui à celui-ci pour interdire son déplacement en position de travail, comme représenté sur la figure 31.

Les tubes 171, 173 communiquent avec un relais de détonation 180 logé dans un boîtier 182. Celui-ci loge par ailleurs un piston 184 conçu pour être déplacé en saillie à l'extérieur du boîtier 182 après initiation du relais de détonation 180 (voir figure 30D). Le piston 184 est agencé pour déplacer alors un interrupteur électrique en position fermée afin de commander l'alimentation électrique du circuit de commande 400. Il peut s'agir par exemple de l'interrupteur réérencé 414 sur les figures 19 et 20. Il peut s'agir plus simplement d'un interrupteur électrique de contrôle assurant la mise en service des moyens d'alimentation électrique du circuit de commande.

La pile thermique précitée peut en effet être remplacée par une batterie de piles au lithium.

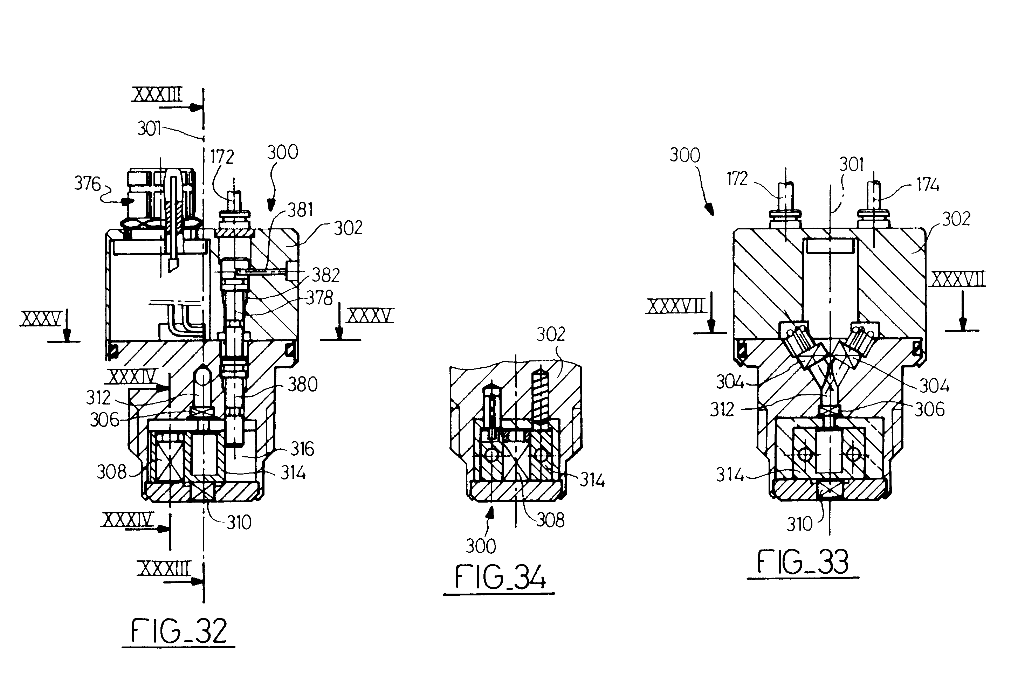

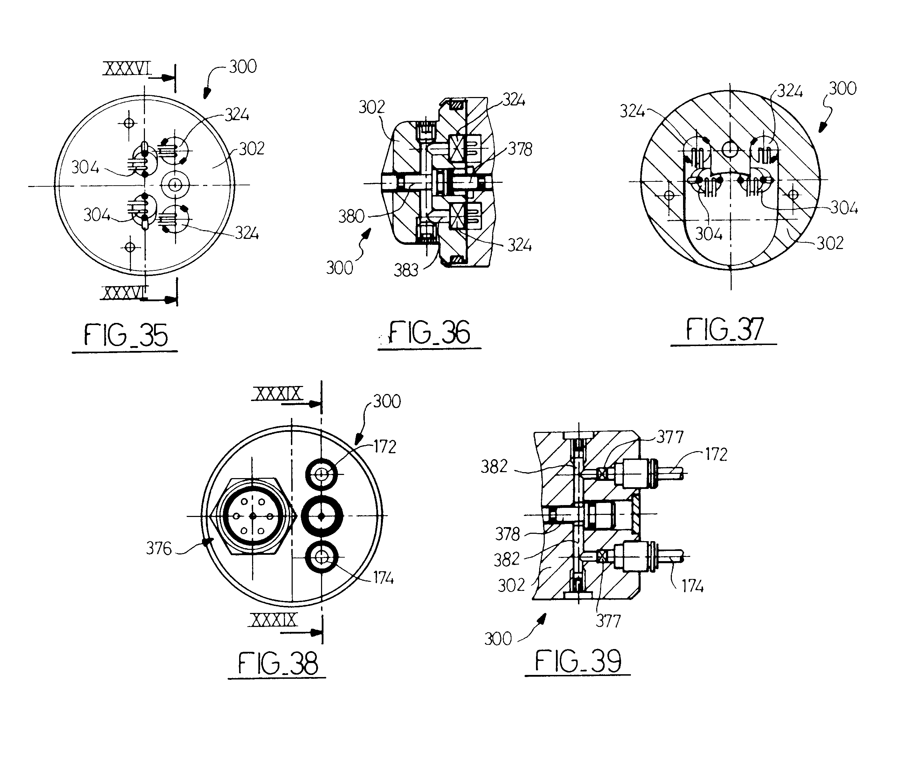

Les tubes 172, 174 communiquent respectivement avec un relais de détonation 377 intégré au dispositif de sécurité et d'amorçage 300 représenté sur les figures 32 à 39. On va maintenant décrire la structure de celui-ci.

## DISPOSITIF DE SECURITE ET D'AMORCAGE 300

Le dispositif de sécurité et d'amorçage 300 représenté sur les figures 32 à 39 annexées comprend un boîtier 302, un tiroir 314, une chaîne pyrotechnique comprenant deux inflammateurs d'amorçage 304, un relais pyrotechnique 306, un détonateur 308 et un relais de détonation 310, deux relais détonants 377 et un piston primaire 378, deux inflammateurs de libération 324 et un piston secondaire 380, une goupille cisaillable 381.

L'axe longitudinal du boîtier 302 est référencé 301.

Le relais 306 et le relais de détonation 310 sont supportés fixes par le boîtier coaxialement à l'axe 301, de part et d'autre du tiroir 314. Les inflammateurs 304 sont supportés fixes par le boîtier 302 symétriquement par rapport à l'axe 301. Ils communiquent avec le relais 306 par des canaux 312. Le détonateur 308 est porté par le tiroir 314.

Celui-ci est guidé à coulissement dans une chambre 316 du boîtier 302 dans une direction perpendiculaire à l'axe 301.

Le tiroir 314 est immobilisé initialement dans une postion de repos par les pistons 378, 380. Dans cette position de repos le détonateur 308 n'est pas aligné sur le relais 306 et le relais de détonation 310. On définit ainsi, au repos, une rupture de chaîne pyrotechnique renforçant la sécurité de l'ensemble.

Plus précisément les pistons primaire 378 et secondaire 380 sont engagés coaxialement dans une chambre du boîtier 302 parallèle à l'axe 301. En position de repos, le piston secondaire 380 fait saillie par une première de ses extrémités dans la chambre 316 en avant du tiroir 314 et sert donc de butée à celui-ci pour interdire son passage en position de travail. Le piston primaire 378 repose par ailleurs par une première extrémité contre la seconde extrémité, de tête, évasée du piston secondaire 380. Le piston primaire 378 est lui-même immobilisé dans cette position par la goupille cisaillable 381 engagée, radialement par rapport à l'axe 301, dans l'extrémité de tête évasée du piston primaire 378.

Les extrémités de tête évasée des pistons 378 et 380 sont munies chacune de joints toriques assurant l'étanchéité avec la paroi de la chambre qui reçoit les pistons.

La goupille 381 peut être rompue et le piston primaire 378 déplacé en éloignement du piston secondaire 380 et de la chambre 316, dans une position de libération, par les gaz générés par les relais détonants 377. On rapelle que ceux-ci communiquent avec les tubes 172, 174. Pour cela les relais détonants 377 communiquent avec la chambre logeant le piston primaire 378, par des canaux 382, en aval de la tête évasée du piston primaire 378, c'est-à-dire côté première extrémité de celui-ci.

De même, le piston secondaire 380 pêut être déplacé en éloignement de la chambre 116, dans une position de libération du tiroir 314, par les gaz générés par les inflammateurs 324. Pour cela les inflammateurs 324 communiquent avec la chambre logeant le piston secondaire 380, par des canaux 383 en aval de la tête évasée du piston 380, c'est-à-dire côté chambre 116. Les inflammateurs 324 sont initiés par le circuit de commande 400 après achèvement d'une temporisation, par exemple de l'ordre de 4 secondes, après détection de l'extraction hors de l'aéronef.

La temporisation précitée peut remplacer avantageusement l'accéléromètre décruit précédemment.

Après effacement du piston secondaire le tiroir 314 peut être déplacé dans une position d'alignement du détonateur 308 sur le relais pyrotechnique 306 et le relais de détonation 310.

Le déplacement du tiroir 314 en position d'alignement peut être opéré par des moyens ressorts comme indiqué précédemment. Il peut aussi être opéré par les gaz dégagés par les inflammateurs de libération 324.

De préférence des moyens anti-retour connus en soi sont prévus pour interdire le retour du tiroir 314 de la position d'alignement à la position de repos initiale.

Les inflammateurs 304 sont initiés par les moyens de commande 400 lorsque l'altitude de consigne est atteinte.

Les liaisons électriques assurant l'initiation des allumeurs 304 et 324 sont raccordées au connecteur 376.

Le relais de détonation 310 communique avec le répartiteur pyrotechnique 280 comme indiqué précédemment.

Bien entendu les canaux débouchant sur les inflammateurs 304, 324, et sur les relais détonants 377 doivent être isolés les uns des autres pour éviter tout interaction entre ceux-ci. A cet effet en particulier, les queues des pistons 378, 380 sont de préférence équipées de joints toriques d'étanchéité.

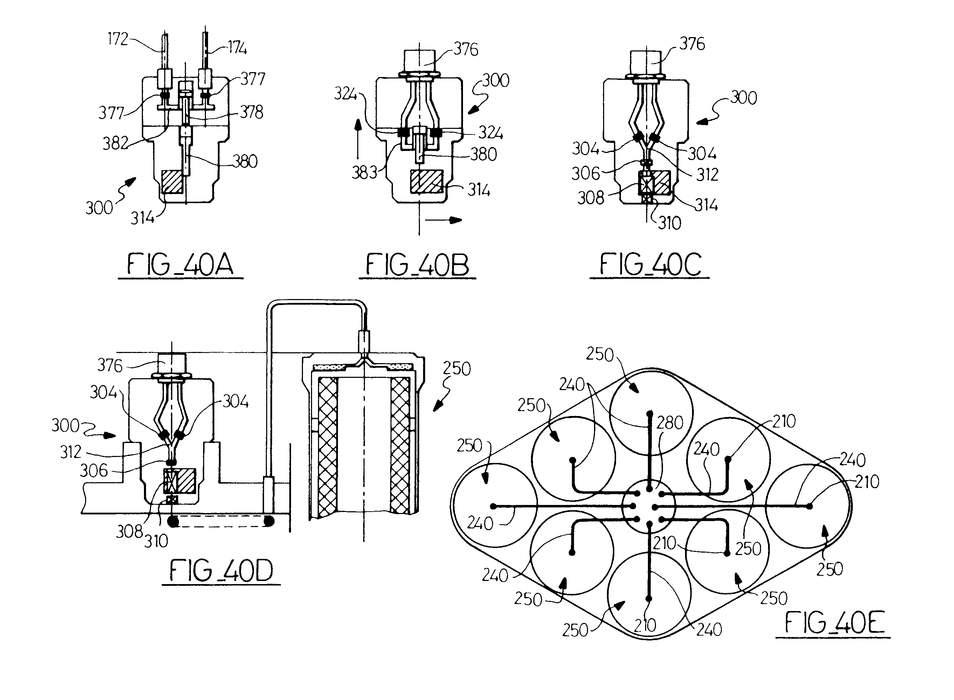

Le fonctionnement du dispositif de sécurité et d'amorçage est représenté schématiquement sur les figures 40A à 40E.

Comme représenté sur la figure 40A, lorsque les relais détonants 377 sont initiés après détection par le déclencheur 100 de l'extraction de la charge hors de l'aéronef, la goupille 381 est rompue, et le piston 378 est déplacé en éloignement de la chambre 116;

Comme représenté sur la figure 40B après achèvement de la temporisation, les inflammateurs 324 sont initiés. Le piston secondaire 380 s'escamote, le tiroir 314 passe alors en position d'alignement.

Lorsque la charge atteint l'altitude de consigne, les inflammateurs 304 sont initiés par le circuit de commande 400 (figure 40C). L'ensemble propulseur 200 est ainsi mis à feu par l'intermédiaire du relais 306, du détonateur 308, du relais de détonation 310, du répartiteur pyrotechnique 280, des cordeaux détonants 240 et des initiateurs 210 (voir figures 40D et 40E).

## CIRCUIT DE COMMANDE 400

Selon le mode de réalisation décrit précédemment, le circuit de commande 400 est placé dans un boîtier 402 porté par l'ensemble propulseur 200.

Dans le cadre de la variante maintenant décrite, le circuit de commande 400 définissant l'instant de mise à feu de l'ensemble propulseur 200 est pour l'essentiel placé sur la plateforme 12, à proximité du radioaltimètre 432 pour insensibiliser le plus possible le signal d'altitude.

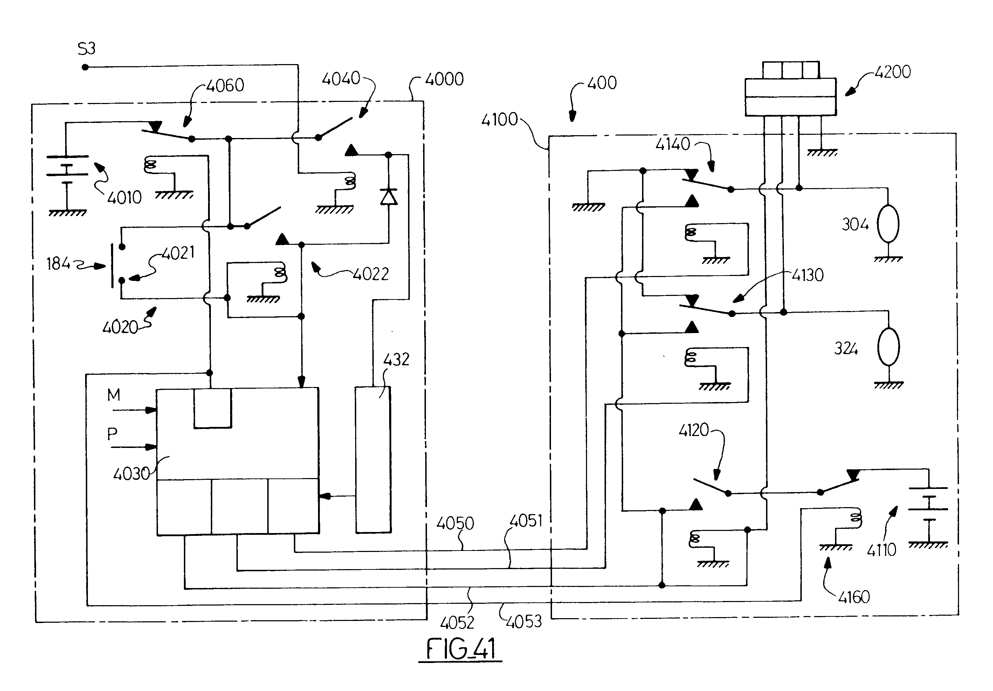

Cela conduit en fait, comme représenté sur la figure 41, à scinder le circuit 400 en deux parties : une partie principale 4000 servant à la gestion du système portée par la plateforme 12, comme indiqué précédemment et une partie secondaire 4100 servant de circuit de puissance, portée par le dispositif de sécurité et d'amorçage 300.

Chaque partie principale 4000 et secondaire 4100, comprend ses moyens propres d'alimentation électrique 4010 et 4110 formés de préférence de batteries de piles au lithium. On évite ainsi le transport de forts courants entre les deux parties 4000 et 4100.

La partie principale 4000 portée par la plateforme 12 comprend donc essentiellement une source d'énergie électrique 4010, des moyens 4020 formant interrupteur de mise sous tension et une unité centrale de traitement 4030.

La partie principale 4000 est associée au radioaltimètre 432.

Les moyens 4020 ont pour fonction de contrôler l'alimentation électrique de l'unité centrale 4030 et de l'altimètre par la source 4010.

Ils sont sollicités par le piston 184 précité. A cet effet, selon la représentation de la figure 41, les moyens 4020 comprennent un bouton poussoir 4021 et un relais 4022. Le bouton poussoir est placé en position de fermeture lors de l'activation du piston 184. Le relais 4022 initialement ouvert passe alors en position auto-alimenté et assure l'alimentation électrique de l'unité centrale 4030 et de l'altimètre 432. Ainsi l'alimentation de l'unité centrale 4030 est initiée par la détection de début de largage.

Si nécessaire le radioaltimètre 432 peut être préchauffé avant largage. Pour cela on peut prévoir d'alimenter provisoirement le radioaltimètre 432 par la source 4010 par l'intermédiaire d'un relais 4040 dont la bobine est alimentée par une source d'énergie interne à l'avion (entrée référencée S3 sur la figure 18 provenant du boîtier 500).

On notera que cette alimentation par le relais 4040 cesse après largage. On évite ainsi une alimentation de radioaltimètre en cas de largage d'urgence.

L'unité centrale 4030 peut être formée par un microcontrôleur.

Elle a pour fonction principale de définir une altitude de consigne sur la base de différents paramètres (vitesse stabilisée, température, masse de la charge larguée, nombre de propulseurs utilisés) qui seront explicités par la suite, et de comparer l'altitude de consigne à l'altitude réelle de la charge mesurée par l'altimètre 432 pour envoyer à la partie 4100 un ordre de mise à feu des inflammateurs 304 au moment opportun. Cet ordre est transmis par la liaison électrique 4050 selon la figure 41.

L'unité centrale 4030 a pour fonction auxiliaire de définir deux temporisations, par exemple respectivement de 3 et 4 secondes à compter du début de son alimentation, pour autoriser tout d'abord l'alimentation électrique de la partie 4100, puis la mise à feu des inflammateurs 324. Les ordres correspondants sont transmis à la partie 4100 par les liaisons électriques 4051 et 4052 selon la figure 41.

La partie secondaire 4100 portée par le dispositif de sécurité et d'amorçage 300 constitue un circuit de puissance qui a pour fonction d'assurer l'alimentation électrique des inflammateurs 304, 324.

Pour cela la partie secondaire 4100 comprend la source d'énergie électrique 4110, des moyens interrupteurs 4120 de mise sous tension, et des moyens 4130, 4140 contrôlant respectivement l'alimentation des inflammateurs 324, 304.

Les moyens 4120, 4130, 4140, sont de préférence formés de relais dont les bobines sont commandées par les liaisons 4050, 4051 et 4052 précitées.

A l'origine le relais 4120 étant ouvert, on évite toute mise à feu accidentelle des inflammateurs 304, 324. Le relais 4120 se ferme après la temporisation de 3 secondes contrôlé par l'unité 4030.

Le relais 4130 est fermé pour mettre à feu les inflammateurs 324 à la fin de la temporisation de 4 secondes.

Enfin le relais 4140 est fermé pour mettre à feu les inflammateurs 304 lorsque l'altitude de consigne est atteinte.

De manière à garantir l'impossibilité de fonctionnement prématuré du circuit 4100, donc de mise à feu des inflammateurs 304 et 324 du dispositif de sécurité et d'amorçage 300, il est de préférence prévu un connecteur largable 4200 dont l'ouverture est contrôlé par la mise en tension des élingues 13, lors de l'ouverture des parachutes, ce connecteur 4200 appliquant avant son ouverture, un court-circuit électrique permanent sur les inflammateurs 304, 324, et la bobine de commande du relais 4120 de mise en service de la source d'énergie comme représenté sur la figure 41. Ce connecteur largable 4200 interdit ainsi toute appication prématurée d'un signal de commande sur ces éléments.

Par ailleurs, le circuit 400 est conçu pour générer une redondance dans la mise à feu des inflammateurs 304, 324. Cette redondance peut être obtenue en générant deux impulsions successives d'excitation, par exemple de durée 10 ms chacune, décalées de 5 ms, respectivement sur l'un des deux inflammateurs 304, 324. Pour cela il est prévu deux liaisons 4051, deux relais 4130 et deux relais 4140. De même on peut par sécurité doubler le relais de mise en service 4120 et se liaison 4052. Ces dispositions n'ont pas été représentées pour simplifier l'illustration.

Comme représenté sur la figure 18, on peut prévoir également des moyens interrupteurs 4060 et 4160, formés de préférence de relais, pilotés par l'unité centrale 4030, pour interrompre toute alimentation électrique des circuits 4000 et 4100 à la fin d'une temporisation, par exemple de 30 secondes, initialisée au largage. Les moyens 4060 et 4160, fermés au repos, sont prévus directement en sortie des sources 4010 et 4110. L'ordre correspondant est transmis de l'unité centrale 4030 au relais 4160 par le câble 4053 selon la figure 41.

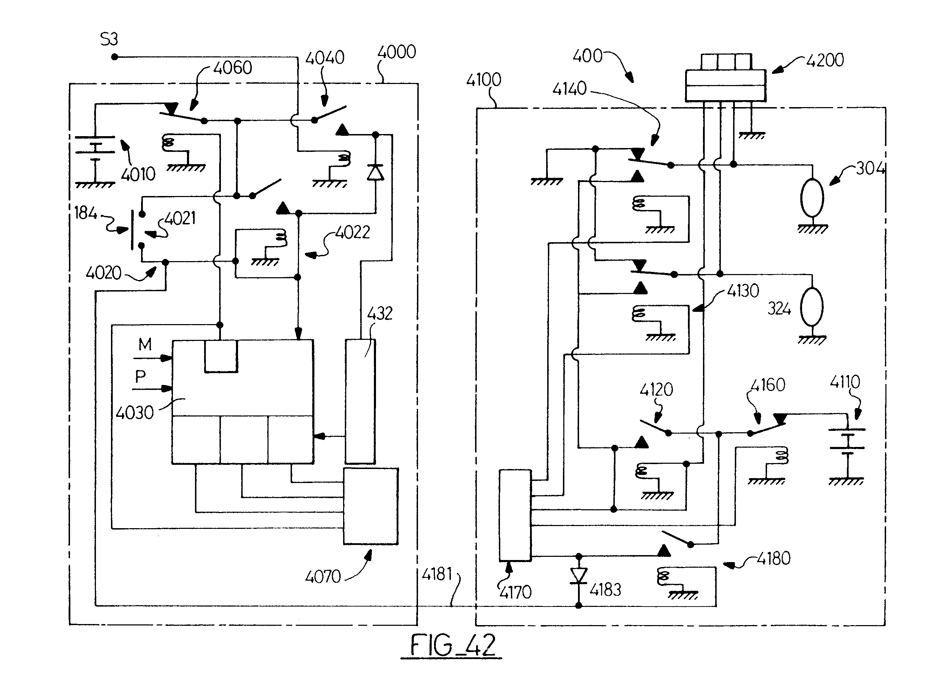

Selon la variante de réalisation représentée sur la figure 42, les câbles électriques 4050 à 4053 conçus pour transmettre des ordres entre le circuit 4000 et le circuit 4100, sont remplacés par une liaison radio par ondes électromagnétiques.

Il est alors nécessaire de prévoir au moins un module émetteur 4070 dans le circuit principal 4000 et un module 4170 récepteur dans le circuit secondaire 4100.

La liaison radio permet de s'affranchir des très fortes contraintes mécaniques qui apparaissent sur les câbles 4050 à 4053 lors de l'extension des élingues. En revanche, la liaison radio doit bien entendu présenter une forte immunité à l'environnement électromagnétique. Elle comprendra de préférence la transmission de codes de synchronisation et de détection d'erreur.

Le module émetteur 4070 comprend pour l'essentiel un module de codage 4071, un émetteur 4072 et une antenne 4073. Symétriquement le module récepteur 4170 comprend pour l'essentiel une antenne de réception 4171, un récepteur 4172 et un module décodeur 4173.

Cette disposition nécessite la mise sous tension du module récepteur 4170 préalablement à la réception d'un ordre.

Pour cela on peut assurer l'alimentation du module 4170 par la source 4110, en utilisant pour l'initialisation de cette alimentation un évènement lié au largage normal de la charge.

Deux solutions sont envisageables.

La première solution consiste à déclencher la mise sous tension du module récepteur 4170 par un relais auto-alimenté piloté par l'entrée S3 précitée utilisée pour le préchauffage de radioaltimètre.

Cette commande réalisée au niveau de la plateforme 12 par un fil électrique de faible section disparaitrait lors de la déconnexion de la plateforme à la sortie de soute, le fil de liaison entre la plateforme 12 et le dispositif de sécurité et d'amorçage 300 étant rompu lors du déploiement de la charge.

La deuxième solution est représentée sur la figure 42. Selon celle-ci la commande de mise en service de la source d'énergie 4110 pour alimenter le module récepteur 4170, est réalisée par la mise sous tension d'un relais 4180 lors de la mise en service de l'alimentation électrique du circuit 4000 (ou rappelle que cette mise en service est déclenchée par action pyrotechnique sur le bouton poussoir 4021 lors du franchissement de la porte de soute par la charge). Le fil électrique 4181 de transmission de l'ordre de mise en service de la source d'énergie 4110 est rompu lors du déploiement de la charge, tandis que le réception 4170 reste alimenté par le relais 4180 autoexcité grâce à la diode 4183.

## DEFINITION DE L'ALTITUDE DE CONSIGNE

On a décrit précédemment des moyens définissant l'altitude de consigne Z pour la mise à feu de l'ensemble propulseur 200 en prenant en compte la vitesse réelle Vstab de la charge, selon la loi $Z = k1\ Vstab + k2$ par exemple 0,65 Vstab - 2,1 ; on a également décrit précédemment la possibilité de corriger l'altitude de consigne ainsi définie en fonction de la température T mesurée de l'ensemble propulseur.

Cela peut conduire à une loi de la forme

$$Z = k3\ Vstab + k4 + k5\ \Delta\ T$$

k3, k4, k5 étant des constantes par exemple

$Z = 0,61\ Vstab - 1,94 + 0,005\ \Delta\ T$ avec $\Delta\ T = T$ mesurée-20 ° C en ° C

La Demanderesse propose également de corriger en plus l'altitude de consigne en fonction de la masse de la plateforme.

L'expérience montre en effet que les plateformes sont généralement chargées par des masses variables qui ne correspondent pas aux masses nominales associées aux moteurs mis en oeuvre.

Par ailleurs si on ne prend pas en compte la masse réelle de la plateforme dans la loi de définition, une plateforme en surcharge conduit à une extinction des moteurs après atterrissage, tandis qu'une plateforme en sous charge sera freinée plus rapidement et dispose d'une altitude supérieure pour se réaccélérer ; la vitesse d'atterrissage est alors accrue.

Pour corriger l'altitude de consigne on peut ainsi définir une loi de la forme

$$Z = k6\ Vstab + k7 + k8\ \Delta\ T + k9\ M$$

dans laquelle M représente la Masse réelle de la plateforme chargée et k6, k7, k8 et k9 sont des constantes.

Enfin la demanderesse a également découvert que dans le cas d'un système propulseur modulaire la loi de définition de l'altitude de consigne peut encore être corrigée en fonction du nombre n de moteurs utilisés. Cela conduit à une loi de la forme

$$Z = k10\ Vstab + k11 + k12\ \Delta\ T + k13\ (M\text{-}nk14)$$

dans laquelle
k10, k11, k12, k13 sont des constantes
k14 représente le pas modulaire nominal de charge de la plateforme
Vstab représente la vitesse stabilisée mesurée de descente de la plateforme en m/s
$\Delta\ T$ représente l'écart de température : T mesurée -20 ° C (en ° C)
M représente la masse réelle de la plateforme en Kg, et
n représente le nombre de moteurs.
Avec l'ensemble propulseur décrit décrit précédemment, la Demanderesse a obtenu la loi :

$$Z = 0,61\ Vstab - 1,94 + 0,005\ \Delta\ T + 8,5\ 10^{-4} - (M\text{-}n.1875)$$

Les constantes k1 à k14 sont déterminées en dépouillant différents tirs obtenus en faisant varier les paramètres Vstab, $\Delta T$, M et n que l'on souhaite prendre en compte.

Les paramètres M et n peuvent être introduits dans l'unité centrale 4030 par tous moyens appropriés, par exemple un clavier. On rappelle que Vstab est obtenu par dérivation de la sortie du radioaltimètre et T est obtenu par mesure sur l'ensemble propulseur.

## FONCTIONNEMENT DE LA VARIANTE PRECEDEMMENT DECRITE

Avant largage il y a lieu de procéder aux démarches suivantes :
- introduction des paramètres M et n représentant la masse de la plateforme et le nombre de propulseurs dans le boîtier 400,
- retrait de l'épingle de sécurité 154, et
- accrochage du mousqueton 157 sur la ferrure de traction 155.

Dans le cas d'un largage d'urgence, le vérin pyrotechnique 140 est alimenté. Le piston 150 est ainsi verrouillé. Le dispositif de sécurité et d'amorçage 300 est donc verrouillé et le circuit de commande 400 ne peut être alimenté grâce aux nombreuses sécurités précitées.

Dans le cas d'un largage normal, la séquence suit les étapes suivantes :
- 10 secondes avant le largage une tension est appliquée sur l'entrée S3 pour préchauffer le radioaltimètre 432,
- lors du largage, ouverture du connecteur reliant initialement le système de largage à l'aéronef, extraction du câble 156 par rupture de la goupille 160, déplacement du piston 150 et des percuteurs 162, 164, alimentation du circuit 4000 et du radioaltimètre par fermeture du bouton poussoir 4021, déverrouillage de la sécurité du dispositif 300 par déplacement du piston 378, et déclenchement des temporisations de 3 et 4 secondes.

- quelques instants après le largage, la chaîne de largage étant déployée : tension des élingues, ouverture du connecteur shunt 4200 et autorisation de mise à feu des inflammateurs 304 et 324 du dispositif 300.

- A la fin de la temporisation de 3 secondes, le relais 4120 est fermé et la source d'énergie 4110 est mise en service,

- A la fin de la temporisation de 4 secondes, les inflammateurs 324 sont mis à feu, le piston 380 est rétracté, le tiroir 314 est libéré et le dispositif 300 passe en position d'alignement de chaîne pyrotechnique,

- l'altimètre mesure l'altitude de la charge, l'unité 4030 calcule la vitesse de descente de la plateforme et calcule l'altitude de consigne.

- quand la charge atteint l'altitude de consigne, les inflammateurs 304 et de là, l'ensemble propulseur 200, sont mis à feu.

**Revendications**

1. Système pour le largage de charges lourdes à partir d'aéronefs, du type comprenant :
   - une plateforme (12) support de charge,
   - au moins un parachute (20),
   - un ensemble propulseur pyrotechnique (200), placé entre la plateforme support de charge (10) et un ou des parachute(s), et mis en oeuvre sur la trajectoire de la charge (10), afin de freiner la charge avant sa mise à terre,
   - des moyens détecteurs d'altitude,
   - des moyens (400) aptes à calculer la vitesse de descente (Vstab) de la charge (10) à partir du signal fourni par les moyens détecteurs d'altitude
   caractérisé par le fait que :
   - les moyens détecteurs d'altitude sont formés d'un altimètre (432, 490),
   - des moyens de commande (400) sont adaptés pour calculer la vitesse de descente stabilisée de la charge par dérivation du signal issu de l'altimètre (432, 490), et déterminer une altitude de consigne de base de mise à feu de l'ensemble propulseur (200) sur la base de la vitesse de descente stabilisée, sous forme d'une fonction linéaire de la vitesse stabilisée, égale à la hauteur de dénivelée parcourue par la charge entre l'instant de mise à feu et l'instant d'extinction de la propulsion à la vitesse de descente stabilisée,

   - des moyens pour prendre en compte le paramètre masse de la charge,
   - les moyens de commande (400) étant adaptés en outre pour corriger l'altitude de consigne de base en fonction de la masse de la charge, de sorte que l'extinction de l'ensemble propulseur (200) intervienne juste avant l'atterissage de la plateforme, et
   - des moyens (436) qui comparent l'altitude réelle et l'altitude de consigne ainsi définie pour initier l'ensemble propulseur (200) lorsque l'altitude réelle atteint cette dernière.

2. Système selon la revendication 1, caractérisé par le fait que l'altimètre est formé d'un radioaltimètre (432).

3. Système selon l'une des revendications 1 ou 2, caractérisé par le fait que les moyens de commande (400) comprennent un capteur (480) apte à détecter la température des unités de propulsion (250) et des moyens (436) aptes à retarder l'instant de mise à feu de l'ensemble propulseur (200) sur la base du signal du capteur de température (480) pour tenir compte de la variation de la loi de poussée des unités de propulsion (250) en fonction de leur température.

4. Système selon l'une des revendications 1 à 3, caractérisé par le fait que les moyens de commande (400) comprennent des moyens (490) sensibles à la mise sous tension d'élingues (22) sous parachutes pour interdire l'initiation de l'ensemble propulseur au moins tant que la chaîne de largage de la charge n'est pas déployée.

5. Système selon la revendication 4, caractérisé par le fait que les moyens sensibles à la mise sous tension d'élingues (22) sous parachutes comprennent au moins un interrupteur (490) placé sur les élingues (22), connecté en parallèle d'un allumeur électrique (304) apte à initier l'ensemble propulseur, l'interrupteur (490) étant adapté pour être fermé au stockage et être ouvert lors de la mise en extension des élingues (22).

6. Système selon l'une des revendications 1 à 5, caractérisé par le fait que les moyens de commande (400) comprennent un accéléromètre (450) sensible à l'ouverture du ou des parachutes (20) pour interdire l'initiation de l'ensemble propulseur au moins tant que la chaîne de largage de la charge n'est pas déployée.

**7.** Système selon la revendication 6, caractérisé par le fait qu'il comprend une temporisation (457) initiée lors de la détection d'ouverture de parachute (20) par l'accéléromètre (450).

**8.** Système selon la revendication 7, caractérisé par le fait qu'il comprend un allumeur électrique (324) initié à la fin de la temporisation pour autoriser un alignement de chaîne pyrotechnique d'initiation.

**9.** Système selon l'une des revendications 1 à 8, caractérisé par le fait que les moyens de commande (400) comportent une pile thermique (411) associé à un allumeur électrique (412) qui est alimenté lors de la détection de sortie d'aéronef par un capteur (100).

**10.** Système selon l'une des revendications 1 à 9, caractérisé par le fait qu'il comprend un allumeur électrique (304) alimenté lorsque l'altitude de consigne est atteinte pour initier la chaîne pyrotechnique de mise a feu de l'ensemble propulseur (200).

**11.** Système selon l'une des revendications 1 à 10, caractérisé par le fait qu'il comprend un capteur (100) sensible à l'extraction de la charge (10) hors de l'aéronef pour valider les moyens (300, 400) aptes à initier l'ensemble propulseur (200) lors de la sortie de l'aéronef.

**12.** Système selon la revendication 11, caractérisé par le fait que le capteur (100) comprend :
- un câble de commande (102),
- des moyens d'entraînement (106, 112) sollicités à déplacement d'une position de repos dans laquelle ils n'exercent pas de traction sur le câble de commande (102), vers une position de travail, dans laquelle ils exercent une traction sur le câble de commande (102), et
- des moyens d'arrêt (114) qui interdisent le passage des moyens d'entraînement (106, 112) en position de travail tant que la charge (10) est dans l'aéronef.

**13.** Système selon la revendication 12, caractérisé par le fait que les moyens d'entraînement comprennent un piston (106) fixé au câble de commande (102), guidé à translation et sollicité par un ressort (112) de la position de repos vers la position de travail, les moyens d'arrêt comprennent une gâchette (114) déplaçable entre une position de verrouillage dans laquelle la gâchette (114) sert de butée aux moyens d'entraînement (106, 112) pour interdire leur déplacement en position de travail, et une seconde position dans laquelle la gâchette (114) s'efface devant les moyens d'entraînement (106, 112) pour autoriser leur déplacement en position de travail, la gâchette (114) est guidée à pivotement et est sollicitée élastiquement (130) vers sa position de verrouillage ; les moyens d'arrêt comprennent une goupille (124) apte à immobiliser la gâchette (114) en position de verrouillage et les moyens d'arrêt (114) sont inhibés pour autoriser le déplacement des moyens d'entraînement (106, 112) en position de travail, par une pédale de détection solidaire du support de charge (112) et reposant sur le plancher de l'aéronef.

**14.** Système selon l'une des revendications 1 à 13, caractérisé par le fait que les moyens d'initiation de l'ensemble propulseur (200) comprennent un dispositif de sécurité et d'amorçage (300) comportant une chaîne pyrotechnique (304, 306, 308, 310) et des moyens de désalignement (320, 330, 336) aptes à maintenir la chaîne pyrotechnique en position désalignée avant la détection de sortie d'aéronef.

**15.** Système selon la revendication 14, caractérisé par le fait que la chaîne pyrotechnique comprend un allumeur électrique principal (304), un relais (306), un détonateur (308) et un relais de détonation (310).

**16.** Système selon la revendication 15, caractérisé par le fait que le détonateur (308) est porté par un tiroir (314) sollicité vers une position d'alignement de chaîne, mais maintenu initialement en position désalignée par les moyens de désalignement (320, 330, 336).

**17.** Système selon l'une des revendications 14 à 16, caractérisé par le fait que les moyens de désalignement comprennent un piston (320) guidé à déplacement sur le boîtier (302) du dispositif de sécurité et d'amorçage (300) transversalement à la direction de déplacement du tiroir (314).

**18.** Système selon la revendication 16 prise en combinaison avvec la revendication 17, caractérisé par le fait que le piston (320) est déplaçable entre une position de repos dans laquelle il sert de butée au tiroir (314) pour maintenir celui-ci en position désalignée, et une position de libération dans laquelle le piston (320) s'efface devant le tiroir (314) pour autoriser le déplacement de celui-ci en position d'alignement.

**19.** Système selon la revendication 18, caractérisé par le fait que le piston (320) est déplacable en position de libération par un allumeur électrique secondaire (324).

**20.** Système selon l'une des revendications 15 à 19, caractérisé par le fait que l'alumeur principal (304) est initié lorsqu'un détecteur d'altitude (432 ; 490) détecte que la charge (10) a atteint une altitude de consigne.

**21.** Système selon l'une des revendications 1 a 20, caractérisé par le fait que l'ensemble propulseur (200) comprend un bâti (202, 204 ; 205, 206) conçu pour recevoir un nombre variable d'unités de propulsion (250) adapté à la masse de la charge (10) à larguer.

**22.** Système selon la revendication 21, caractérisé par le fait que le bâti comprend un flasque supérieur (202) et un flasque inférieur (204) reliés par des tirants (205, 206).

**23.** Système selon la revendication 22, caractérisé par le fait que le flasque supérieur (202) est relié par des élingues (236) à un ensemble de parachutes (20), tandis que le flasque inférieur (204) est relié par un câble (244) à une plateforme portant la charge (19).

**24.** Système selon l'une des revendications 21 à 23, caractérisé par le fait que le bâti peut recevoir alternativement deux flasques inférieurs (204) selon le nombre d'unités de propulsion équipant l'ensemble propulseur :
- un premier flasque (204A) conçu pour une configuration à 3, 4, 6 ou 8 unités de propulsion (250 qui comporte pour recevoir celles-ci 6 alésages (211, 212, 213, 214, 215, 216) équirépartis autour de l'axe (201) de l'ensemble propulseur et dont les centres respectifs sont placés sur un cercle commun (207) centré sur l'axe (201) de l'ensemble propulseur, plus deux alésages (217, 218) diamétralement opposés par rapport à l'axe (201) de l'ensemble propulseur (200) et placés à l'extérieur du groupe de 6 alésages (211-216) précités,
- un second flasque (204B) conçu pour une configuration à 5 ou 7 unités de propulsion (250) qui comporte pour recevoir celles-ci 5 alésages (221, 222, 223, 224, 225) équirépartis autour de l'axe (201) de l'ensemble propulseur (200) et dont les centres respectifs sont placés sur un cercle commun (207) centré sur l'axe (201) de l'ensemble propulseur, plus deux alésages (226, 227) diamétralement opposés par rapport à l'axe 201) de l'ensemble propulseur (200) et placés à l'extérieur du groupe de 5 alésages (221-225) précités.

**25.** Système selon l'une des revendications 22 à 24, caractérisé par le fait que l'un au moins des flasques (202, 204) est muni de moyens d'indexation (230) des unités de propulsion (250), dans leur position angulaire autour de leur axe (260).

**26.** Système selon les revendications 14 et 22 prises en combinaison, caractérisé par le fait que le dispositif de sécurité et d'amorçage (300) est porté par le flasque supérieur (202) du bâti.

**27.** Système selon l'une des revendications 1 à 26 en combinaison avec la revendication 18, caractérisé par le fait que la chaîne pyrotechnique du dispositif de sécurité et d'amorçage (300), communique avec une entrée d'un répartiteur pyrotechnique (280) comprenant un nombre de sorties égal au nombre d'unités de propulsion (250) équipant l'ensemble propulseur (200).

**28.** Système selon la revendication 27, caractérisé par le fait que des cordeaux détonants (240) sont raccordés aux sorties du répartiteur pyrotechnique (280).

**29.** Système selon l'une des revendications 1 à 28, caractérisé par le fait que la chaîne d'initiation de chaque unité de propulsion (250) équipant l'ensemble propulseur comprend un initiateur (210) de transmission d'allumage à travers une paroi étanche, comportant un générateur d'ondes de choc placé sur un côté d'une paroi métallique étanche et un récepteur d'ondes de choc placé de l'autre côté de la paroi.

**30.** Système selon l'une des revendications 1 à 29, caractérisé par le fait que chaque unité de propulsion (250) équipant l'ensemble propulseur (200) comprend une virole (252) qui porte au moins une tuyère (264) et qui loge au moins un bloc de poudre propulsive (251) de préférence du propergol.

**31.** Système selon la revendication 30, caractérisé par le fait que l'axe (266) des tuyères (264) est incliné d'environ 25° par rapport à l'axe (260) des unités de propulsion (250).

**32.** Système selon l'une des revendications 30 ou 31, caractérisé par le fait qu'au stockage un opercule (268) obstrue de façon étanche chaque tuyère (264), l'opercule (268) étant taré pour être éliminé lors de la mise sous pression de l'ensemble propulseur.

**33.** Système selon l'une des revendications 1 a 32, du type comprenant un ensemble propulseur pyrotechnique (200) associé à des moyens de commande (300, 400), placé entre une charge et un ou des parachute(s), et mis en oeuvre sur la trajectoire de descente de la charge, afin de freiner la charge pour assurer une mise à terre de celle-ci dans des conditions optimales, des moyens (400) aptes à mesurer la vitesse de descente stabilisée de la charge et à déterminer l'altitude de consigne de mise a leu de l'ensemble propulseur sur la base de la vitesse de descente mesurée, et des moyens capteurs (100) sensibles à l'extraction de la charge lors de l'aéronef pour valider les moyens de commande (300, 400) lors de la sortie de l'aéronef, caractérisé par le fait que des moyens pyromécaniques (170 à 174, 180, 377) sont intercalés entre les moyens capteurs (100) et les moyens de commande (300, 400) pour assurer la validation de ceux-ci.

**34.** Système selon la revendication 33, caractérisé par le fait que les moyens pyromécaniques sont formés de tubes (171 à 174) associés à des relais de détonation (170, 180, 377) pour transmettre des ondes de détonation entre les moyens capteurs (100) et les moyens de commande (300, 400).

**35.** Système selon l'une des revendications 33 ou 34, caractérisé par le fait que les moyens pyromécaniques (170 à 174, 180, 377) sont redondants.

**36.** Système selon l'une des revendications 33 à 35, caractérisé par le fait que les moyens pyromécaniques sont conçus pour assurer d'une part, le verrouillage d'un dispositif de sécurité et d'amorçage (300) et d'autre part, la mise sous tension d'un circuit électronique de commande (400).

**37.** Système selon l'une des revendications 11 et 33 à 36, caractérisé par le fait que les moyens capteurs (100) comprennent :
- un boîtier (104) qui loge,
- un piston (150) sollicité d'une position de repos vers une position de travail,
- un câble (156) pourvu d'un embout (158), conçu pour être accroché sur la ferrure de traction (155) afin d'être retiré hors du boîtier lors du largage, le câble interdisant le déplacement du piston (150) vers la position de travail, avant son retrait,
- au moins une amorce (166, 168),
- au moins un percuteur (162, 164) sollicité vers l'amorce, mais empêcher d'atteindre celle-ci tant que le piston est en position de repos,
- au moins un relais de détonation (170), communiquant avec l'amorce et,
- au moins un tube (171 à 174) communiquant avec le relais de détonation pour transmettre l'information pyrotechnique correspondante.

**38.** Système selon la revendication 37, caractérisé par le fait que les moyens capteurs (100) comprennent une épingle de sécurité (154) traversant le piston (150) et venant en prise initialement avec l'embout (158) du câble pour interdire le retrait de celui-ci.

**39.** Système selon l'une des revendications 36 ou 37, caractérisé par le fait qu'une goupille cisaillable (160) interdit le retrait accidentel du câble (156).

**40.** Système selon l'une des revendications 11 à 13 et 37 à 39, caractérisé par le fait que le capteur (100) comprend des moyens de verrouillage (140) aptes à inhiber la détection d'extraction de la charge (10) hors de l'aéronef pour interdire toute mise à feu ultérieure de l'ensemble propulseur (200) lorsqu'un largage d'urgence est requis.

**41.** Système selon la revendication 40, caractérisé par le fait que les moyens de verrouillage comprennent un vérin à commande pyrotechnique (140).

**42.** Système selon la revendication 41 en combinaison avvec l'une des revendications 37 à 39, caractérisé par le fait que le vérin à commande pyrotechnique est conçu lorsqu'il est activé pour former une butée interdisant le passage du piston en position de travail.

**43.** Système selon l'une des revendications 33 à 36, caractérisé par le fait qu'il comprend au moins un tube (171, 173) qui communique avec un vérin pyrotechnique conçu pour fermer un interrupteur électrique assurant la commande d'alimentation électrique du circuit de commande (400).

44. Système selon l'une des revendications 33 à 36 et 43, caractérisé par le fait qu'il comprend au moins un tube (172, 174) communiquant avec un relais de détonation (377) intégré au dispositif de sécurité et d'amorçage.

45. Système selon l'une des revendications 1 à 44 combinée avec l'une des revendications 33 à 36, caractérisé par le fait qu'il comprend un dispositif de sécurité et d'amorçage comportant une chaîne pyrotechnique et des moyens de désalignement (378, 380) aptes à maintenir le câble pyrotechnique en position désalignée avant le largage, les moyens de désalignement étant conçus pour être escamotés au moins partiellement par les moyens pyromécaniques.

46. Système selon la revendication 45, caractérisé par le fait que les moyens de désalignement comprennent deux pistons (178, 180) coaxiaux servant de butée au tiroir (314).

47. Système selon la revendication 46, caractérisé par le fait que l'un des pistons (378) peut être déplacé par un relais de détonation (377) associé aux moyens pyromécaniques.

48. Système selon l'une des revendications 46 ou 47, caractérisé par le fait que l'un des pistons (380) peut être déplacé par les gaz générés par un inflammateur de libération (324), lui-même initié par les moyens de commande après une temporisation consécutive au largage.

49. Système selon l'une des revendications 1 à 48, caractérisé par le fait que le circuit de commande est scindé en deux parties : une partie principale (4000) servant à la gestion du système portée par la plateforme (12) recevant la charge, et une partie secondaire (4100) servant de circuit de puissance portée par le dispositif de sécurité et d'amorçage (300).

50. Système selon la revendication 49, caractérisé par le fait que chaque partie principale (4000) et secondaire (4100) comprend ses propres moyens d'alimentation électriques (4010, 4110).

51. Système selon la revendication 50, caractérisé par le fait que la partie principale (4000) comprend une source d'énergie électrique (4010), des moyens (4020) formant interrupteur de mise sous tension et une unite centrale de traitement (4030), les moyens (4020) formant interrupteur étant commandés par un vérin pyrotechnique (184) lui-même contrôlé par les moyens pyromécaniques.

52. Système selon la revendication 51, caractérisé par le fait que les moyens (4020) formant interrupteur comprennent un bouton poussoir (4021) et un relais (4022).

53. Système selon l'une des revendications 51 ou 52, caractérisé par le fait que l'unité centrale (4030) a pour fonction principale de définir l'altitude de consigne, et de comparer celle-ci à l'altitude réelle mesurée, et pour fonction auxiliaire de définir deux temporisations.

54. Système selon la revendication 53, caractérisé par le fait que les deux temporisations ont pour fonction successivement de commander la mise sous tension du dispositif de sécurité et d'amorçage (300) et de mettre à feu un inflammateur (324) pour déverrouiller ce dernier.

55. Système selon l'une des revendications 50 à 53, caractérisé par le fait que la partie secondaire (4100) comprend une source d'énergie électrique (4110), des moyens interrupteur (4120) de mise sous tension et des moyens (4130, 4140) contrôlant l'alimentation d'inflammateurs.

56. Système selon la revendication 55, caractérisé par le fait qu'il est prévu un connecteur largable (4200) dont l'ouverture est contrôlé par la mise en tension d'élingues lors de l'ouverture des parachutes, ce connecteur appliquant avant son ouverture, un court-circuit électrique permanent sur les inflammateurs et la commande de mise en service de la source d'énergie.

57. Système selon l'une des revendications 49 à 56, caractérisé par le fait que les ordres émanant de la partie principale (4000) sont transmis à la partie secondaire (4100) par liaison radio.

58. Système selon la revendication 57, caractérisé par le fait que la partie secondaire (4100) comprend un récepteur (4170) dont l'alimentation est initiée par un évènement lié au largage.

59. Système selon la revendication 58, caractérisé par le fait que l'alimentation du récepteur est initiée lors de la mise en service de la source d'énergie (4010) de la partie principale, grâce à un fil de liaison consommable entre la partie principale (4000) et la partie secondaire (4100).

**60.** Système selon l'une des revendications 1 à 59, caractérisé par le fait que l'altitude de consigne est de la forme :

$$Z = k3\ Vstab + k4 + k5\ \Delta\ T,$$

k3, k4, k5 étant des constantes
$\Delta\ T$ étant égal à T mesurée - 20°C.

**61.** Système selon l'une des revendications 1 à 60, caractérisé par le fait que l'altitude de consigne est de la forme :

$$Z = k6\ Vstab + k7 + k8\ \Delta\ T + k9\ M$$

k6, k7, k8 étant des constantes
$\Delta\ T$ étant égal à T mesurée - 20°C
M représente la masse réelle de la plateforme chargée.

**62.** Système selon l'une des revendications 1 à 61, caractérisé par le fait que l'altitude de consigne est de la forme :

$$Z = k10\ vstab + k11 + k12\ \Delta\ T + k13\ (M\text{-}n\ k14)$$

k10, k11, k12, k13 étant des constantes
k14 représente le pas modulaire de charge de la plate forme,
Vstab représente la vitesse stabilisée mesurée de descente de la plateforme en m/s.
$\Delta\ T$ étant égale à T mesurée - 20°C
M représente la masse réelle de la plateforme en Kg et,
n représente le nombre de moteurs.

**Claims**

**1.** A system for dropping heavy loads from aircraft, the system being of the type comprising:

  a load-supporting platform (12);

  at least one parachute (20),

  a pyrotechnic thruster assembly (200) placed between the load-supporting platform (12) and one or more parachutes, and implemented in the path of the load (10) so as to brake the load before it lands;

  altitude detector means; and

  means (400) capable of calculating the speed of descent (Vstab) of the load (10) on the basis of the signal supplied by the altitude detector means;

  said system being characterized by the fact that:

  the altitude detector means are formed by an altimeter (432, 490);

  control means (400) are adapted to calculating the stabilized speed of descent of the load by differentiating the signal output by the altimeter (432, 490), and to determining a base reference altitude for firing the thruster assembly (200) on the basis of the stabilized speed of descent, in the form of a linear function of the stabilized speed, equal to the vertical distance over which the load will fall between the instant at which the thruster is fired and the instant at which it burns out given the stabilized speed of descent;

  means are provided for taking account of the load mass parameter;

  the control means (400) further being adapted to correcting the base reference altitude as a function of the mass of the load, so that the thruster assembly (200) burns out just before the platform lands; and

  means (436) are provided which compare the reference altitude defined in this way with the real altitude so as to initiate the thruster assembly (200) when the real altitude reaches the reference altitude.

**2.** A system according to claim 1, characterized by the fact that the altimeter is formed of a radio-altimeter (432).

**3.** A system according to claim 1 or 2, characterized by the fact that the control means (400) include a sensor (480) capable of detecting the temperature of the thrust units (250), and means (436) capable of responding to the signal from the temperature sensor (480) by delaying the instant at which the thruster assembly (200) is fired, so as to take account of the variation in the relationship of the thrust from the thrust units (250) as a function of their temperature.

**4.** A system according to any one of claims 1 to 3, characterized by the fact that the control means (400) include means (490) that are responsive to under parachute straps (22) being put under tension, so as to prevent the thruster assembly from being initiated at least so long as the rigging for dropping the load is not deployed.

**5.** A system according to claim 4, characterized by the fact that the means that are responsive to under parachute straps (22) being put under tension include at least one switch (490) placed on the straps (22) and connected in parallel with an electrical igniter (304) capable of initiating the thruster assembly, the switch (490) being adapted to being closed in storage, and to being opened while the straps (22) are being extended.

6. A system according to any one of claims 1 to 5, characterized by the fact that the control means (400) include an accelerometer (450) responding to the parachute(s) (20) being opened by preventing the thruster assembly from being initiated at least so long as the rigging for dropping the load is not deployed.

7. A system according to claim 6, characterized by the fact that it includes means for applying a time delay (457) initiated when the accelerometer (450) detects that the parachute(s) (20) has/have been opened.

8. A system according to claim 7, characterized by the fact that it includes an electrical igniter (324) initiated at the end of the time delay so as to allow an initiation fuse train to be aligned.

9. A system according to any one of claims 1 to 8, characterized by the fact that the control means (400) include a thermal cell (411) associated with an electrical igniter (412) which is powered when a sensor (100) detects that the load has left the aircraft.

10. A system according to any one of claims 1 to 9, characterized by the fact that it includes an electrical igniter (304) powered when the reference altitude is reached, so as to initiate the firing fuse train for firing the thruster assembly (200).

11. A system according to any one of claims 1 to 10, characterized by the fact that it includes a sensor (100) responding to the load (10) being extracted from the aircraft by enabling the means (300, 400) for initiating the thruster assembly (200) when the load leaves the aircraft.

12. A system according to claim 11, characterized by the fact that the sensor (100) comprises:
    a control cable (102);
    drive means (106, 112) urged from a rest position in which they do not exert any traction on the control cable (102) to a working position in which they do exert traction on the control cable (102); and
    stop means (114) which prevent the drive means (106, 112) from being displaced to the working position so long as the load (10) is inside the aircraft.

13. A system according to claim 12, characterized by the fact that the drive means comprise a piston (106) fixed to the control cable (102), the piston being guided in translation and urged by a spring (112) from the rest position towards the working position, the stop means comprising a catch (114) that can be displaced between a locking first position in which the catch (114) serves as an abutment for the drive means (106, 112) so as to prevent them from being displaced to their working position, and a second position in which the catch (114) releases the drive means (106, 112) so that they can be displaced to their working position, the catch (114) is pivotally guided and resiliently urged (130) towards its locking position; the stop means further comprise a pin (124) capable of holding the catch (114) stationary in the locking position, and the stop means (114) are disabled by a detection pedal secured to the load support (12) and resting on the floor of the aircraft, to allow the drive means (106, 112) to be displaced to the working position.

14. A system according to any one of claims 1 to 13, characterized by the fact that the means for initiating the thruster assembly (200) comprise a safety and priming device (300) including a fuse train (304, 306, 308, 310), and alignment-breaking means (320, 330, 336) capable of holding the fuse train in a non-aligned position prior to detection of the fact that the load has left the aircraft.

15. A system according to claim 14, characterized by the fact that the fuse train comprises a main electrical igniter (304), a relay (306), a detonator (308), and a detonation relay (310).

16. A system according to claim 15, characterized by the fact that the detonator (308) is carried by a drawer (314) that is urged towards a train-alignment position in which the train is aligned, but that is initially held in the non-aligned position by the alignment-breaking means (320, 330, 336).

17. A system according to any one of claims 14 to 16, characterized by the fact that the alignment-breaking means comprise a piston (320) movably guided over the box (302) housing the safety and priming device (300) transversely to the displacement direction of the drawer (314).

18. A system according to claim 16 taken in association with claim 17, characterized by the fact that the piston (320) can be displaced between a rest position in which it serves as an abutment for the drawer (314) so as to hold the drawer in the non-aligned position, and a release position in which the piston (320) releases the drawer (314) so as to enable it to be displaced to the alignment position.

19. A system according to claim 18, characterized by the fact that the piston (320) can be displaced to the release position by a secondary electrical igniter (324).

20. A system according to any one of claims 15 to 19, characterized by the fact that the main igniter (304) is initiated when an altitude detector (432; 490) detects that the load (10) has reached a reference altitude.

21. A system according to any one of claims 1 to 20, characterized by the fact that the thruster assembly (200) includes a frame (202, 204; 205, 206) designed to receive a variable number of thrust units (250), the number of thrust units being adapted to the mass of the load (10) to be dropped.

22. A system according to claim 21, characterized by the fact that the frame includes a top end plate (202) and a bottom end plate (204) connected together by means of tie rods (205, 206).

23. A system according to claim 22, characterized by the fact that the top end plate (202) is connected via straps (236) to a set of parachutes (20), while the bottom end plate (204) is connected via a cable (244) to a platform carrying the load (10).

24. A system according to any one of claims 21 to 23, characterized by the fact that the frame can receive either one of two bottom end plates (204) depending on the number of thrust units with which the thruster assembly is provided, namely:

a first end plate (204A) designed for a configuration comprising 3, 4, 6, or 8 thrust units (250) and provided with 6 bores (211, 212, 213, 214, 215, 216) for receiving said thrust units, the bores being distributed uniformly about the axis (201) of the thruster assembly and having their respective centers placed on a common circle (207) centered on the axis (201) of the thruster assembly, the first end plate further being provided with two bores (217, 218) that are diametrically opposite relative to the axis (201) of the thruster assembly (200), and that are placed outside the group of 6 bores (211-216) mentioned above; and

a second end plate (204B) designed for a configuration comprising 5 or 7 thrust units (250) and provided with 5 bores (221, 222, 223, 224, 225) for receiving said thrust units, the bores being distributed uniformly about the axis (201) of the thruster assembly and having their respective centers placed on a common circle (207) centered on the axis (201) of the thruster assembly, the second end plate further being provided with two bores (226, 227) that are diametrically opposite relative to the axis (201) of the thruster assembly (200), and that are placed outside the group of 5 bores (221-225) mentioned above.

25. A system according to any one of claims 22 to 24, characterized by the fact that at least one of the end plates (202, 204) is provided with indexing means (230) for indexing the thrust units (250) in their angular positions about their axes (260).

26. A system according to claim 14 and 22 taken in association, characterized by the fact that the safety and priming device (300) is carried by the top end plate (202) of the frame.

27. A system according to any one of claims 1 to 26 in association with claim 18, characterized by the fact that the fuse train of the safety and priming device (300) communicates with an inlet of a pyrotechnic distributor (280) provided with a number of outlets equal to the number of thrust units (250) with which the thruster assembly (200) is provided.

28. A system according to claim 27, characterized by the fact that detonating fuses (240) are connected to the outlets of the pyrotechnic distributor (280).

29. A system according to any one of claims 1 to 28, characterized by the fact that the initiation train for initiating each thrust unit (250) with which the thruster assembly is provided comprises an ignition-transmission initiator (210) for transmitting ignition through a fluid-tight wall, which initiator includes a shock-wave generator placed on one side of a fluid-tight metal wall, and a shock-wave receiver placed on the other side of the wall.

30. A system according to any one of claims 1 to 29, characterized by the fact that each thrust unit (250) with which the thruster assembly (200) is provided includes a shell (252) which carries at least one nozzle (264) and which contains at least one block of propellant (251) in powder form.

31. A system according to claim 30, characterized by the fact that the axis (266) of each of the nozzles (264) slopes at about 25° relative to the axis (260) of the corresponding thrust unit (250).

32. A system according to claim 30 or 31, characterized by the fact that, in storage, a sealing film (268) closes off each nozzle (264) in fluid-tight manner, the sealing film (268) being rated so as to be removed when the thruster assembly is put under pressure.

33. A system according to any one of claims 1 to 32, of the type comprising a pyrotechnic thruster assembly (200) associated with control means (300, 400), the assembly being placed between a load and one or more parachutes, and being implemented in the descent path of the load, so as to brake the load, thereby enabling it to land under optimum conditions; means (400) capable of measuring the stabilized speed of descent of the load, and of determining the reference altitude at which to fire the thruster assembly on the basis of the measured speed of descent; and sensor means (100) responding to the load being extracted from the aircraft by enabling the control means (300, 400) when the load leaves the aircraft, said system being characterized by the fact that pyromechanical means (170 to 174, 180, 377) are interposed between the sensor means (100) and the control means (300, 400) to enable the control means.

34. A system according to claim 33, characterized by the fact that the pyromechanical means are formed by tubes (171 to 174) associated with detonation relays (170, 180, 377) for transmitting detonation waves between the sensor means (100) and the control means (300, 400).

35. A system according to claim 33 or 34, characterized by the fact that the pyromechanical means (170 to 174, 180, 377) are redundant.

36. A system according to any one of claims 33 to 35, characterized by the fact that the pyromechanical means are designed both to lock a safety and priming device (300), and also to switch on an electronic control circuit (400).

37. A system according to any one of claims 11 and 33 to 36, characterized by the fact that the sensor means (100) comprise:

a box (104) housing:

a piston (150) urged from a rest position towards a working position;

a cable (156) provided with an end piece (158) that can be fastened to a traction coupling (155) so as to be pulled out of the box when the load is dropped, the cable preventing the piston (150) from being displaced towards its working position, so long as the cable has not been pulled out;

at least one primer (166, 168);

at least one striking pin (162, 164) urged towards the primer but prevented from reaching it so long as the piston is in the rest position;

at least one detonation relay (170) communicating with the primer; and

at least one tube (171 to 174) communicating with the detonation relay to transmit the corresponding pyrotechnic information.

38. A system according to claim 37, characterized by the fact that the sensor means (100) include a locking pin (154) passing through the piston (150) and being initially engaged with the end piece (158) of the cable so as to prevent said cable from being pulled out.

39. A system according to any one of claims 36 to 37, characterized by the fact that a shearable pin (160) prevents the cable (156) from being pulled out accidentally.

40. A system according to any one of claims 11 to 13 and 37 to 39, characterized by the fact that the sensor (100) includes locking means (140) capable of disabling detection of the fact that the load (10) has been extracted from the aircraft, so as to prevent any subsequent firing of the thruster assembly (200) when an emergency drop is required.

41. A system according to claim 40, characterized by the fact that the locking means comprise a pyrotechnically-controlled actuator (140).

42. A system according to claim 41 in association with any one of claims 37 to 39, characterized by the fact that the pyrotechnically-controlled actuator is designed so that, when it is activated, it forms an abutment preventing the piston from being displaced to its working position.

43. A system according to any one of claims 33 to 36, characterized by the fact that it includes at least one tube (171, 173) communicating with a pyrotechnic actuator designed so as to close an electrical switch controlling the electrical power supply to the control circuit (400).

44. A system according to any one of claims 33 to 36, and 43, characterized by the fact that it includes at least one tube (172, 174) communicating with a detonation relay (377) integrated in the safety and priming device.

45. A system according to any one of claims 1 to 44 associated with any one of claims 33 to 36, characterized by the fact that it includes a safety and priming device including a fuse train and alignment-breaking means (378, 380) capable of holding the pyrotechnic cable in a non-aligned position prior to the drop, the alignment-breaking means being designed to be retracted, at least in part, by the pyromechanical means.

46. A system according to claim 45, characterized by the fact that the alignment-breaking means comprise two pistons (378, 380) in alignment serving as an abutment for the drawer (314).

47. A system according to claim 46, characterized by the fact that one of the pistons (380) can be displaced by a detonation relay (377) associated with the pyromechanical means.

48. A system according to claim 46 or 47, characterized by the fact that one of the pistons (380) may be displaced by the gases generated by a releasing igniter (324) itself initiated by the control means after a time delay after the load has been dropped from the aircraft.

49. A system according to any one of claims 1 to 48, characterized by the fact that the control circuit is divided into two portions: a main portion (4000) serving to manage the system and carried by the platform (12) receiving the load, and a secondary portion (4100) serving as a power circuit and carried by the safety and priming device (300).

50. A system according to claim 49, characterized by the fact that each portion, main (4000) and secondary (4100), includes its own electrical power supply means (4010, 4110).

51. A system according to claim 50, characterized by the fact that the main portion (4000) includes an electrical energy source (4010), switch-forming means (4020) for switching on the power supply, and a central processing unit (4030), the switch-forming means (4020) being controlled by a pyrotechnic actuator (184) itself controlled by the pyromechanical means.

52. A system according to claim 51, characterized by the fact that the switch-forming means (4020) comprise a push button (4021) and a relay (4022).

53. A system according to claim 51 or 52, characterized by the fact that the main function of the central processing unit (4030) is to define the reference altitude, and to compare it with the measured real altitude, and an auxiliary function of the central processing unit is to define two time delays.

54. A system according to claim 53, characterized by the fact that the functions of the two time delays are successively to switch on the safety and priming device (300) and to fire an igniter (324) so as to unlock said safety and priming device.

55. A system according to any one of claims 50 to 53, characterized by the fact that the secondary portion (4100) includes an electrical energy source (4110), switch means (4120) for switching on the power supply, and means (4130, 4140) controlling the power supply to the igniters.

56. A system according to claim 55, characterized by the fact that a releasable connector (4200) which is opened by straps being put under tension while the parachutes are opening, the connector applying, prior to being opened, a permanent electrical short-circuit to the igniters and to the control for switching on the energy source.

57. A system according to any one of claims 49 to 56, characterized by the fact that the commands emanating from the main portion (4000) are transmitted to the secondary portion (4100) by a radio link.

58. A system according to claim 57, characterized by the fact that the secondary portion (4100) includes a receiver (4170) to which the power supply is initiated as a result of an event related to the drop.

59. A system according to claim 58, characterized by the fact that the power supply to the receiver is initiated while the energy source (4010) of the main portion is being switched on, the initiation taking place via a consumable link between the main portion (4000) and the secondary portion (4100).

**60.** A system according to any one of claims 1 to 59, characterized by the fact that the reference altitude is in the following form:

Z = k3 Vstab + k4 + k5 $\delta$T

where k3, k4, and k5 are constants; and $\delta$T is equal to measured T - 20 °C.

**61.** A system according to any one of claims 1 to 60, characterized by the fact that the reference altitude is in the following form:

Z = k6 Vstab + k7 + k8 $\delta$T + k9 M

where k6, k7, and k8 are constants; $\delta$T is equal to measured T - 20 °C; and M represents the real mass of the loaded platform.

**62.** A system according to any one of claims 1 to 61, characterized by the fact that the reference altitude is in the following form:

Z = k10 Vstab + k11 + k12 $\delta$T + k13 (M-n k14)

where k10, k11, k12, and k13 are constants; k14 represents the modular load increment of the platform; Vstab represents the measured stabilized speed of descent of the platform in meters per second [m/s]; $\delta$T is equal to measured T - 20 °C; M represents the real mass of the platform in kg; and $\underline{n}$ represents the number of engines.

**Patentansprüche**

**1.** System zum Abwerfen schwerer Nutzlasten aus Flugzeugen, des Typs mit:
- einer Trägerplattform (12) für die Nutzlast,
- wenigstens einem Fallschirm (20),
- einer pyrotechnischen Treibanordnung (200), die zwischen die Plattform, die die Nutzlast (10) trägt, und einen oder die Fallschirm(e) gelegt ist und auf dem Weg der Nutzlast (10) betätigt wird, um die Nutzlast zu bremsen, bevor sie auf die Erde gebracht wird,
- Höhendetektoreinrichtungen,
- Einrichtungen (400), die dazu ausgelegt sind, die Abstiegsgeschwindigkeit (Vstab) der Nutzlast (10) zu berechnen, ausgehend von einem Signal, das von den Höhendetektoreinrichtungen geliefert wird,

dadurch gekennzeichnet daß:
- die Höhendetektoreinrichtungen aus einem Höhenmesser (432, 490) gebildet sind;
- Steuereinrichtungen (400) ausgelegt sind, um die stabilisierte Abstiegsgeschwindigkeit der Nutzlast durch Ableitung aus dem Signal zu berechnen, das von dem Höhenmesser (432, 490) ausgegeben ist, und eine Einstellwert-Höhe als Grundlage für das Zünden der Treibanordnung (200) auf der Basis der stabilisierten Abstiegsgeschwindigkeit zu bestimmen, in Form einer linearen Funktion der stabilisierten Geschwindigkeit, gleich dem von der Nutzlast durchlaufenen Höhenunterschied zwischen dem Moment des Zündens und dem Moment des Auslöschens der Treibsätze mit der stabilisierten Abstiegsgeschwindigkeit,
- Einrichtungen zum Berücksichtigen des Parameters der Masse der Nutzlast,
- wobei die Steuereinrichtungen (400) im übrigen so ausgelegt sind, daß sie die Einstellhöhe von der Basis als Funktion der Masse der Nutzlast korrigieren können, derart, daß die Auslöschung der Treibanordnung (200) gerade vor der Landung der Plattform geschieht, und
- Einrichtungen (436), die die tatsächliche Höhe und die Einstellhöhe, die so definiert ist, vergleichen, um die Treibanordnung (200) zu initiieren, wenn die tatsächliche Höhe diese letztere erreicht, vorgesehen sind.

**2.** System nach Anspruch 1, dadurch gekennzeichnet, daß der Höhenmesser aus einem drahtlosen Höhenmesser (432) gebildet ist.

**3.** System nach einem der Ansprüche 1 oder 2, dadurch gekennzeichnet, daß die Steuereinrichtungen (400) einen Aufnehmer (480) aufweisen, dazu ausgelegt, die Temperatur der Treibeinheiten 250 zu erfassen, und Einrichtungen (436), die dazu ausgelegt sind, den Moment des Zündens der Treibanordnung (200) auf der Basis des Signals des Temperaturaufnehmers (480) zu verzögern, um die Änderung der Schubgleichung der Treibeinheiten (250) als Funktion ihrer Temperatur zu berücksichtigen.

4. System nach einem der Ansprüche 1 bis 3, dadurch gekennzeichnet, daß die Steuereinrichtungen (400) Einrichtungen (490) aufweisen, die empfindlich auf das Spannen der Schlingen (22) unter Fallschirmen sind, um die Initiierung der Treibanordnung wenistens solange zu verbieten, wie die Abwurfkette der Nutzlast nicht ausgefaltet ist.

5. System nach Anspruch 4, dadurch gekennzeichnet, daß die Einrichtungen, die auf das Spannen der Schlingen (22) unter Fallschirmen empfindlich sind, wenigstens einen Unterbrecher (490) aufweisen, der auf den Schlingen (22) liegt, parallel geschaltet zu einem elektrischen Zünder (304), dazu ausgelegt, die Treibanordnung zu initiieren, wobei der Unterbrecher (490) so ausgelegt ist, daß er für die Lagerung geschlossen wird und beim Auslegen der Fangleinen (22) geöffnet wird.

6. System nach einem der Ansprüche 1 bis 5, dadurch gekennzeichnet, daß die Steuereinrichtungen (400) einen Beschleunigungsmesser (450) aufweisen, der auf das Öffnen des oder der Fallschirme (20) anspricht, um die Initiierung der Treibanordnung wenigstens solange zu verbieten, wie die Abwurfkette der Nutzlast nicht ausgefaltet ist.

7. System nach Anspruch 6, dadurch gekennzeichnet, daß es eine Verzögerungszeit (457) aufweist, die bei der Erfassung des Öffnens der Fallschirme (20) durch den Beschleunigungsmesser (450) eingeleitet wird.

8. System nach Anspruch 7, dadurch gekennzeichnet, daß es einen elektrischen Zünder 324 aufweist, der am Ende der Verzögerungszeit initiiert wird, um eine Ausrichtung der pyrotechnischen Initiierungskette zu ermöglichen.

9. System nach einem der Ansprüche 1 bis 8, dadurch gekennzeichnet, daß die Steuereinrichtungen (400) eine thermische Zelle umfassen, die einem elektrischen Zünder (412) zugeordnet ist, der beim Erfassen des Austritts aus dem Flugzeug durch einen Aufnehmer (100) mit Energie versorgt wird.

10. System nach einem der Ansprüche 1 bis 9, dadurch gekennzeichnet, daß es einen elektrischen Zünder (304) aufweist, der mit Energie versorgt wird, wenn die Einstellhöhe erreicht ist, um die pyrotechnische Kette zu initiieren, die Treibanordnung (200) zu zünden.

11. System nach einem der Ansprüche 1 bis 10, dadurch gekennzeichnet, daß es einen Aufnehmer (100) aufweist, der auf das Auslassen der Nutzlast (10) aus dem Flugzeug anspricht, um die Einrichtungen (300, 400) freizugeben, die beim Austritt aus dem Flugzeug die Treibanordnung (200) initiieren.

12. System nach Anspruch 11, dadurch gekennzeichnet, daß der Aufnehmer (100) aufweist:
   - ein Steuerkabel (102),
   - Antriebseinrichtungen (106, 112), die zur Verlagerung aus einer Ruheposition, in der sie keinen Zug auf das Steuerkabel (102) ausüben, in eine Arbeitsposition, in der sie einen Zug auf das Steuerkabel (102) ausüben, belastet sind, und
   - Halteeinrichtungen (114), die den Übergang der Antriebseinrichtungen (106, 112) in die Arbeitsposition verbieten, solange die Nutzlast (10) in dem Flugzeug ist.

13. System nach Anspruch 12, dadurch gekennzeichnet, daß die Antriebseinrichtungen einen Kolben (106), der am Steuerkabel (102) befestigt ist, zur Verschiebung geführt und durch eine Feder (112) aus der Ruheposition in die Arbeitsposition vorbelastet, aufweisen, wobei die Halteeinrichtungen eine Zustellung (114) aufweisen, die zwischen einer Verriegelungsposition, in der die Zustellung (114) als Anschlag für die Antriebseinrichtungen (106, 112), um ihre Verlagerung in die Arbeitsposition zu verbieten, und einer zweiten Position, in der die Zustellung (114) sich vor den Antriebseinrichtungen (106, 112) zurückzieht, um ihre Verlagerung in die Arbeitsposition zu erlauben, verlagerbar ist, wobei die Zuhaltung (114) schwenkbar geführt ist und elastisch (130) in ihre Verriegelungsposition belastet ist; wobei die Halteeinrichtungen einen Stift (124) aufweisen, der dazu ausgelegt ist, die Zuhaltung (114) in der Verriegelungsposition zu halten, und wobei die Halteeinrichtungen (114) gehemmt sind, um die Verlagerung der Antriebseinrichtungen (106, 112) in die Arbeitsposition zu erlauben, durch ein Erfassungspedal, das einstückig mit dem Träger der Nutzlasten (112) ausgebildet ist und auf der Rampe des Flugzeuges ruht.

14. System nach einem der Ansprüche 1 bis 13, dadurch gekennzeichnet, daß die Initiierungseinrichtungen für die Treibanordnung (200) eine Sicherheits- und Zündvorrichtung (300) umfassen, welche eine pyrotechnische Kette (304, 306, 308, 310) und Einrichtungen zum Fehlausrichten (320, 330, 336), die dazu ausgelegt sind, die pyrotechnische Kette vor dem Erfassen des Austritts aus dem Flugzeug in nicht ausgerichteter Stellung zu halten, aufweist.

15. System nach Anspruch 14, dadurch gekennzeichnet, daß die pyrotechnische Kette einen elektrischen Hauptzünder (304), ein Relais (306), einen Detonator (308) und ein Detonationsrelais (310) aufweist.

16. System nach Anspruch 15, dadurch gekennzeichnet, daß der Detonator (308) von einem Schieber (314) getragen ist, der in Richtung auf eine Ausrichteposition der Kette belastet ist, aber anfänglich in einer nicht ausgerichteten Position durch die Einrichtungen für die Fehlausrichtung (320, 330, 336) gehalten wird.

17. System nach einem der Ansprüche 14 bis 16, dadurch gekennzeichnet, daß die Einrichtungen für die Fehlausrichtung einen Kolben (320) aufweisen, der verlagerbar auf dem Gehäuse (302) der Sicherheits- und Zündvorrichtung (300) quer zur Verlagerungsrichtung des Schiebers (314) geführt ist.

18. System nach Anspruch 16, in Kombination mit dem Anspruch 17, dadurch gekennzeichnet, daß der Kolben (320) zwischen einer Ruheposition, in der er als Anschlag für den Schieber (314) dient, um diesen in der nicht ausgerichteten Position zu halten, und einer Freigabeposition, in der der Kolben (320) sich vor dem Schieber (314) zurückzieht, um dessen Verlagerung in die Ausrichteposition zu ermöglichen, verlagerbar ist.

19. System nach Anspruch 18, dadurch gekennzeichnet, daß der Kolben (320) in die Freigabeposition durch einen sekundären elektrischen Zünder (324) verlagerbar ist.

20. System nach einem der Ansprüche 15 bis 19, dadurch gekennzeichnet, daß der Hauptzünder (304) initiiert wird, wenn ein Höhendetektor (432; 490) erfaßt, daß die Nutzlast (10) eine Einstellhöhe erreicht hat.

21. System nach einem der Ansprüche 1 bis 20, dadurch gekennzeichnet, daß die Treibanordnung (200) ein Gehäuse (202, 204; 205, 206) zum Aufnehmen einer variablen Anzahl von Treibeinheiten (250), angepaßt an die Masse der abzuwerfenden Nutzlast (10) aufzunehmen, aufweist.

22. System nach Anspruch 21, dadurch gekennzeichnet, daß das Gehäuse einen oberen Flansch (202) und einen unteren Flansch (204) aufweist, die durch Spannstangen (205, 206) verbunden sind.

23. System nach Anspruch 22, dadurch gekennzeichnet, daß der obere Flansch (202) durch Schlingen (236) mit einer Anordnung von Fallschirmen (20) verbunden ist, während der untere Flansch (204) über ein Kabel (244) mit einer Plattform verbunden ist, die die Nutzlast (10) trägt.

24. System nach einem der Ansprüche 21 bis 23, dadurch gekennzeichnet, daß das Gehäuse alternativ zwei untere Flansche (204) entsprechend der Anzahl der Treibeinheiten, mit denen die Treibanordnung ausgerüstet wird, aufnehmen kann:
    - einen ersten Flansch (204A), für eine Konfiguration von 3, 4, 6 oder 8 Treibeinheiten (250) ausgelegt, der für deren Aufnahme sechs Bohrungen (211, 212, 213, 214, 215, 216) aufweist, die um die Achse (201) der Treibanordnung gleich verteilt sind und deren jeweilige Mitten auf einem gemeinsamen Kreis (207) liegen, der auf der Achse (201) der Treibanordnung zentriert ist, plus zweier Bohrungen (217, 218), die in bezug auf die Achse (201) der Treibanordnung (200) einander diametral gegenüberliegend angeordnet sind und außerhalb der Gruppe der 6 vorgenannten Bohrungen (211 - 216) angeordnet sind,
    - einen zweiten Flansch (204B), ausgelegt für eine Konfiguration von 5 oder 7 Treibeinheiten (250), der zum Aufnehmen derselben fünf Bohrungen (221, 222, 223, 224, 225) aufweist, die um die Achse (201) der Treibanordnung (200) gleich verteilt sind und deren jeweilige Mitten auf einem gemeinsamen Kreis (207) liegen, der um die Achse (201) der Treibanordnung zentriert ist, plus zweier Bohrungen (226, 227), die in bezug auf die Achse (201) der Treibanordnung (200) einander diametral gegenüberliegen und außerhalb der Gruppe der 5 vorgenannten Bohrungen (221 - 225) angeordnet sind.

25. System nach einem der Ansprüche 22 bis 24, dadurch gekennzeichnet, daß wenigstens einer der Flansche (202, 204) mit Indexierungseinrichtungen (230) für die Treibeinheiten (250) in ihrer Winkelposition um ihre Achse (260) versehen ist.

**26.** System nach den Ansprüchen 14 und 22, in Kombination, dadurch gekennzeichnet, daß die Sicherheits- und Zündvorrichtung (300) von dem oberen Flansch (202) des Gehäuses getragen ist.

**27.** System nach einem der Ansprüche 1 bis 26, in Kombination mit dem Anspruch 18, dadurch gekennzeichnet, daß die pyrotechnische Kette der Sicherheits- und Zündvorrichtung (300) mit einem Eingang eines pyrotechnischen Verteilers (280) kommuniziert, welcher eine Anzahl Ausgängen aufweist, die gleich der Anzahl der Treibeinheiten (250) ist, mit denen die Treibanordnung (200) ausgestattet ist.

**28.** System nach Anspruch 27, dadurch gekennzeichnet, daß Detonationszündschnüre (240) an den Ausgängen des pyrotechnischen Verteilers (280) angebracht sind.

**29.** System nach einem der Ansprüche 1 bis 28, dadurch gekennzeichnet, daß die Kette für die Initiierung jeder Treibeinheit (250), mit denen die Treibanordnung ausgestattet ist, einen Initialisierungsschalter (210) für die Übertragung der Zündung durch eine dichte Wand aufweist, mit einem Schockwellengenerator, der auf einer Seite der metallisch dichten Wand liegt, und einem Schockwellenempfänger, der auf der anderen Seite der Wand liegt.

**30.** System nach einem der Ansprüche 1 bis 29, dadurch gekennzeichnet, daß jede Treibeinheit (250), mit der die Treibanordnung (200) ausgestattet ist, einen Mantel (252) aufweist, der wenigstens eine Düse (264) trägt und in dem wenigstens ein Block Treibpulver (251), bevorzugt aus Propergol, untergebracht ist.

**31.** System nach Anspruch 30, dadurch gekennzeichnet, daß die Achse (266) der Düsen (264) um ungefähr 25° in bezug auf die Achse (260) der Treibeinheiten (250) geneigt ist.

**32.** System nach einem der Ansprüche 30 oder 31, dadurch gekennzeichnet, daß bei der Lagerung ein Innenhütchen (268) auf dichtende Weise jede Düse (264) verschließt, wobei das Innenhütchen (268) geeicht ist, damit es beim unter Druck Setzen der Treibanordnung ausgestoßen werden kann.

**33.** System nach einem der Ansprüche 1 bis 32, des Typs mit einer pyrotechnischen Treibanordnung (200), der Steuereinrichtungen (300, 400) zugeordnet sind, zwischen einer Nutzlast und einem oder mehreren Fallschirm(en) angeordnet und auf dem Abstiegsweg der Nutzlast betätigt, um die Nutzlast zu bremsen, um sicherzustellen, daß diese unter optimalen Bedingungen auf die Erde auftrifft, wobei die Einrichtungen (400) dazu ausgelegt sind, die stabilisierte Abstiegsgeschwindigkeit der Nutzlast zu messen und die Einstellhöhe des Zündens der Treibanordnung auf der Basis der gemessenen Abstiegsgeschwindigkeit zu bestimmen, und Aufnehmereinrichtungen (100) auf das Austreten der Nutzlast aus dem Flugzeug ansprechen, um die Steuereinrichtungen (300, 400) beim Austritt aus dem Flugzeug freizugeben, dadurch gekennzeichnet, daß pyromechanische Einrichtungen (170 bis 174, 180, 377) zwischen die Aufnehmereinrichtungen (100) und die Steuereinrichtungen (300, 400) geschaltet sind, um deren Freigabe sicherzustellen.

**34.** System nach Anspruch 33, dadurch gekennzeichnet, daß die pyromechanischen Einrichtungen aus Rohren (171 bis 174) gebildet sind, die Detonationsrelais (170, 180, 377) zugeordnet sind, um Detonationswellen zwischen den Aufnehmereinrichtungen (100) und den Steuereinrichtungen (300, 400) zu übertragen.

**35.** System nach einem der Ansprüche 33 oder 34, dadurch gekennzeichnet, daß die pyrotechnischen Einrichtungen (170 bis 174, 180, 377) redundant ausgelegt sind.

**36.** System nach einem der Ansprüche 33 bis 35, dadurch gekennzeichnet, daß die pyromechanischen Einrichtungen dazu gedacht sind, einerseits die Verriegelung einer Sicherheits- und Zündvorrichtung (300) und andererseits das unter Spannung Setzen einer elektronischen Steuerschaltung (400) sicherzustellen.

**37.** System nach einem der Ansprüche 11 und 33 bis 36, dadurch gekennzeichnet, daß die Aufnehmereinrichtungen (100) aufweisen:
- ein Gehäuse (104), in dem untergebracht ist:
- ein Kolben (150), der aus einer Ruheposition in eine Arbeitsposition belastet ist,
- ein Kabel (156), das mit einem Ansatzstück (158) versehen ist, dazu ausgelegt, mit einem Zugbeschlag (155) verbunden zu werden, wobei es aus dem Gehäuse beim Abwurf zurückgezogen wird, wobei das Kabel die Verlagerung des Kolbens (150) in die Arbeitsposition vor dem Rückziehen verbietet,

- wenigstens ein Zündhütchen (166, 168),
- wenigstens ein Schlagbolzen (162, 164), in Richtung auf das Zündhütchen belastet, wobei aber verhindert wird, daß er dieses erreicht, solange der Kolben in der Ruheposition ist,
- wenigstens ein Detonationsrelais (170), das mit dem Zündhütchen kommuniziert, und
- wenistens ein Rohr (171 bis 174), das mit dem Detonationsrelais kommuniziert, um die entsprechende pyrotechnische Information zu übertragen.

38. System nach Anspruch 37, dadurch gekennzeichnet, daß die Aufnehmeeinrichtungen (100) eine Sicherheitsschlinge (154) aufweisen, die den Kolben (150) durchquert und anfangs das Ansatzstück (158) des Kabels aufnimmt, um dessen Zurückziehen zu verhindern.

39. System nach einem der Ansprüche 36 oder 37, dadurch gekennzeichnet, daß ein abscherbarer Stift (160) das zufällige Zurückziehen des Kabels (156) verhindert.

40. System nach einem der Ansprüche 11 bis 13 und 37 bis 39, dadurch gekennzeichnet, daß der Aufnehmer (100) eine Verriegelungseinrichtung (140) aufweist, dazu ausgelegt, die Erfassung des Austretens der Nutzlast (10) aus dem Flugzeug zu hemmen, um jegliches unzeitige Zünden der Treibanordnung (200) zu verbieten, wenn ein Notabwurf erforderlich ist.

41. System nach Anspruch 40, dadurch gekennzeichnet, daß die Verriegelungseinrichtungen ein pyrotechnisches Steuerstellglied (140) aufweisen.

42. System nach Anspruch 41 in Kombination mit einem der Ansprüche 37 bis 39, dadurch gekennzeichnet, daß das pyrotechnische Steuerstellglied so aufgebaut ist, daß es, wenn es aktiviert ist, einen Anschlag bildet, der den Durchlaß des Kolbens in die Arbeitsposition verbietet.

43. System nach einem der Ansprüche 33 bis 36, dadurch gekennzeichnet, daß es wenigstens ein Rohr (171, 173) aufweist, das mit einem pyrotechnischen Stellglied kommuniziert, so ausgelegt, daß ein elektrischer Unterbrecher geschlossen wird, der die Steuerung der elektrischen Versorgung der Steuerschaltung (400) sicherstellt.

44. System nach einem der Ansprüche 33 bis 36 und 43, dadurch gekennzeichnet, daß es wenigstens ein Rohr (172, 174) aufweist, das mit einem Detonationsrelais (377) kommuniziert, welches in die Sicherheits- und Zündvorrichtung integriert ist.

45. System nach einem der Ansprüche 1 bis 44, kombiniert mit einem der Ansprüche 33 bis 36, dadurch gekennzeichnet, daß es eine Sicherheits- und Zündvorrichtung aufweist, welche eine pyrotechnische Kette und Fehlausrichtungseinrichtungen (378, 380) umfaßt, dazu ausgelegt, das pyrotechnische Kabel vor dem Abwurf in nicht ausgerichteter Position zu halten, wobei die Einrichtungen zur Fehlausrichtung so aufgebaut sind, daß sie wenigstens teilweise durch die pyromechanischen Einrichtungen versenkbar sind.

46. System nach Anspruch 45, dadurch gekennzeichnet, daß die Einrichtungen für die Fehlausrichtung zwei koaxiale Kolben (178, 180) umfassen, die als Anschlag für den Schieber (314) dienen.

47. System nach Anspruch 46, dadurch gekennzeichnet, daß der eine der Kolben (378) durch ein Detonationsrelais (377), das den pyromechanischen Einrichtungen zugeordnet ist, verlagert werden kann.

48. System nach einem der Ansprüche 46 oder 47, dadurch gekennzeichnet, daß der eine der Kolben (380) durch die Gase verlagert werden kann, die durch einen Freigabezünder (324) erzeugt werden, wobei derselbe durch die Steuereinrichtungen nach einer sich an den Abwurf anschließenden Verzögerungszeit initiiert wird.

49. System nach einem der Ansprüche 1 bis 48, dadurch gekennzeichnet, daß die Steuerschaltung in zwei Teile aufgeteilt ist: ein Hauptteil (4000), der zur Versorgung des Systems dient, welches von der Plattform (12), welche die Nutzlast aufnimmt, getragen wird, und ein sekundäres Teil (4100), das als Leistungsschaltung dient, getragen von der Sicherheits- und Zündvorrichtung (300).

50. System nach Anspruch 49, dadurch gekennzeichnet, daß sowohl das Haupt (4000)- als auch das Sekundär (4100)-Teil seine eigenen Einrichtungen für die elektrische Versorgung (4010, 4110) aufweist.

**51.** System nach Anspruch 50, dadurch gekennzeichnet, daß das Hauptteil (4000) eine elektrische Energiequelle (4010), Einrichtungen (4020), die einen Unterbrecher für die Aufgabe der Spannung bilden, und eine zentrale Verarbeitungseinheit (4030) aufweist, wobei die Einrichtungen (4020), die den Unterbrecher bilden, durch ein pyrotechnisches Stellglied (184) gesteuert werden, das selbst durch die pyromechanischen Einrichtungen gesteuert ist.

**52.** System nach Anspruch 51, dadurch gekennzeichnet, daß die Einrichtungen (4020), die den Unterbrecher bilden, einen Druckknopf (4021) und ein Relais (4022) aufweisen.

**53.** System nach einem der Ansprüche 51 oder 52, dadurch gekennzeichnet, daß die Zentraleinheit (4030) als Hauptfunktion hat, die Einstellhöhe zu definieren und diese mit der tatsächlichen gemessenen Höhe zu vergleichen, und als Nebenfunktion hat, zwei Verzögerungszeiten zu definieren.

**54.** System nach Anspruch 53, dadurch gekennzeichnet, daß die beiden Verzögerungen als Funktion haben, sukzessive das Anlegen von Spannung an die Sicherheits- und Zündvorrichtung (300) zu steuern und einen Zünder (324) zu zünden, um die letztere zu entriegeln.

**55.** System nach einem der Ansprüche 50 bis 53, dadurch gekennzeichnet, daß das sekundäre Teil (4100) eine elektrische Energiequelle (4110), Unterbrechereinrichtungen (4120) zum Anlegen von Spannung und Einrichtungen (4130, 4140), die die Energieversorgung der Zünder steuern, aufweist.

**56.** System nach Anspruch 55, dadurch gekennzeichnet, daß ein abwerfbarer Verbinder (4200) vorgesehen ist, dessen Öffnen durch das Spannen von Schlingen beim Öffnen der Fallschirme gesteuert wird, wobei dieser Verbinder vor seinem Öffnen eine dauernde elektrische Kurzschlußschaltung auf die Zünder und den Befehl zum Betreiben der Energiequelle aufgibt.

**57.** System nach einem der Ansprüche 49 bis 56, dadurch gekennzeichnet, daß die Befehle, die vom Hauptteil (4000) ausgehen, durch drahtlose Verbindung zum sekundären Teil (4100) übertragen werden.

**58.** System nach Anspruch 57, dadurch gekennzeichnet, daß das sekundäre Teil (4100) einen Empfänger (4170) aufweist, dessen Energieversorgung durch ein Ereignis eingeleitet wird, das mit dem Abwurf verbunden ist.

**59.** System nach Anspruch 58, dadurch gekennzeichnet, daß die Energieversorgung des Empfängers beim Betreiben der Energiequelle (4010) des Hauptteiles eingeleitet wird, über eine trennbare Drahtverbindung zwischen dem Hauptteil (4000) und dem sekundären Teil (4100).

**60.** System nach einem der Ansprüche 1 bis 59, dadurch gekennzeichnet, daß die Einstellhöhe die Form hat:

$$Z = k3\ Vstab + k4 + k5\ \Delta T,$$

wobei k3, k4, k5 Konstanten sind,
$\Delta T$ gleich T gemessenen - 20° C ist.

**61.** System nach einem der Ansprüche 1 bis 60, dadurch gekennzeichnet, daß die Einstellhöhe die Form hat:

$$Z = k6\ Vstab + k7 + k8\ \Delta T + k9\ M,$$

wobei k6, k7, k8 Konstanten sind,
$\Delta T$ gleich T gemessenen - 20° C ist,
M die tatsächliche Masse der beladenen Plattform darstellt.

**62.** System nach einem der Ansprüche 1 bis 61, dadurch gekennzeichnet, daß die Einstellhöhe die Form hat:

$$Z = k10\ Vstab + k11 + k12\ \Delta T + k13\ (M - n \bullet k14),$$

wobei k10, k11, k12, k13 Konstanten sind,
k14 den modularen Schritt der Nutzlast der Plattform darstellt,
Vstab die gemessene stabilisierte Geschwindigkeit des Absteigens der Plattform in m/s darstellt,
$\Delta T$ gleich T gemessenen - 20° C ist,
M die tatsächliche Masse der Plattform in kg darstellt und
n die Anzahl der Antriebe darstellt.

## FIG_1

FIG_2A

FIG_2

FIG_2B

FIG_2D

FIG_2C

FIG_2E

30

20

22

236

30

12

10

13

244

200

200

10

244

200

20

20

20

12

13

248

236

22

22

236

200

244

248

13

10

12

248

10

20

22

236

200

244

13

12

EP 0 353 162 B1

FIG_3

FIG_4

FIG_5

FIG.6

41

# FIG_7

FIG_8

370

376

IX    IX

370

301

300

368    370

FIG_9

370    301    376    X    336    300

368    374

344

304    338    330
350
332
340    334
322
372

312    352
302
360    353
306    320

314    326    316
308    328

366    364    X    310

## FIG_10

FIG_11

FIG_12

## FIG_13

FIG_14

FIG_15

FIG_16

FIG_18

FIG_17

FIG.19

FIG_20

Alimentation altimètre 432

EP 0 353 162 B1

## FIG_21

| Vitesse stabilisée m/s V stab. | Dénivelé (mise à feu extinction) (m) | Erreur de mesure (m) | Altitude Z Mise à feu (m) |
|---|---|---|---|
| 10 | 4,2 | 0,23 | 4,43 |
| 10,5 | 4,5 | 0,24 | 4,74 |
| 11 | 4,8 | 0,25 | 5,05 |
| 11,5 | 5,1 | 0,25 | 5,35 |
| 12 | 5,4 | 0,25 | 5,65 |
| 12,5 | 5,7 | 0,26 | 5,96 |
| 13 | 6 | 0,27 | 6,27 |

## FIG_22

600

**PREPARATION**

Mise en place ensemble propulseur 200, détecteur altitude 432, déclencheur à cable 100, connecteur shunt 490, liaisons électriques entre circuit de commande 400, dispositif de sécurité et d'armement 300, détecteur altitude 432 et shunt 490

602

**MISE EN PLACE PLATEFORME 12**

Fermeture connecteur 550 : Liaisons boitier 500 avec circuit 400 et déclencheur à cable 100

Retrait goupille 124

**SELECTION DU MODE LARGAGE** 604
sur boitier 500

626

606

**LARGAGE D URGENCE**

Initiation vérin pyrotechnique 140 et verrouillage du piston 106 ⟶ verrouillage du DSA 300 par cable 336 et pas d'initiation de la pile 111. Charge 10 freinée par parachute 20

**LARGAGE NORMAL**

Chargement du condensateur C 413

Parachute extracteur

608

610

**SORTIE AERONEF**

Détection par pédale

Déverouillage déclencheur à cable 100 ⟶ Translation du piston 106 ⟶ Traction sur cable 102

a – Fermeture interrupteur 414 et initiation pile 411 par condensateur C413

b – Retrait cable 336 dans DSA 300

612

**DEPLOIEMENT DE LA CHAINE DE LARGAGE**

Mise en tension des suspentes 22 ⟶ ouverture du shunt 490 ⟶ continuité électrique vers allumage propulseur

614

**FIN CHAUFFE DE LA PILE THERMIQUE**

Alimentation altimètre 432

616

## FIG_23A

614       616

CHOC OUVERTURE PARACHUTE
Détection par accéléromètre 450
Mise en route retard ( compteur 457 )

618

FIN DE DECOMPTE DU RETARD
a – Initiation inflammateur 324 ──▶ déplacement piston 320.
    déplacement tiroir 314 ──▶ alignement chaine pyrotechnique :
    304 – 306 – 308 et 310.
b – Validation porte 434 pour prise en compte signal altimètre
    432.

620

DETECTION ALTITUDE DE CONSIGNE
Mise à feu inflammateur 304, puis relais 306, détonateur 308, relais
de détonation 310, cordeaux détonants 240, initiateurs 210,
inflammateurs 273 et blocs 258

622

FIN DE LA POUSSEE PROPULSEURS

624

MISE A TERRE DE LA CHARGE
Ouverture du systeme 248
Separation ensemble propulseur 200 / charge 10

## FIG_23 B

490    497    491    492    495    493    494    496

## FIG_24

FIG_25

FIG_27

FIG_28

FIG_26

156

104

100

154

100

140

104

174

172

173

171

154

100

140

173

172

170

169

168

164

165

150

163

162

171

104

167

166

55

FIG_29

FIG_30D

FIG_30C

FIG_30B

FIG_30A

FIG_31

FIG_32

FIG_34

FIG_33

EP 0 353 162 B1

FIG_35

FIG_36

FIG_37

FIG_38

FIG_39

EP 0 353 162 B1

FIG_40A

FIG_40B

FIG_40C

FIG_40D

FIG_40E

FIG.41

FIG. 42

EP 0 353 162 B1

62